(19) **Europäisches Patentamt / European Patent Office / Office européen des brevets**

(11) **EP 4 459 920 A1**

(12) ## EUROPEAN PATENT APPLICATION
published in accordance with Art. 153(4) EPC

(43) Date of publication:
**06.11.2024 Bulletin 2024/45**

(21) Application number: **23746497.9**

(22) Date of filing: **30.01.2023**

(51) International Patent Classification (IPC):
**H04L 5/00** $^{(2006.01)}$

(52) Cooperative Patent Classification (CPC):
**H04L 5/00; H04L 25/03**

(86) International application number:
**PCT/CN2023/073894**

(87) International publication number:
**WO 2023/143620 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.01.2022 CN 202210114621**

(71) Applicant: **Huawei Technologies Co., Ltd.
Shenzhen, Guangdong 518129 (CN)**

(72) Inventors:
• **QU, Bingyu**
  **Shenzhen, Guangdong 518129 (CN)**
• **LI, Bo**
  **Shenzhen, Guangdong 518129 (CN)**
• **GONG, Mingxin**
  **Shenzhen, Guangdong 518129 (CN)**

(74) Representative: **Gill Jennings & Every LLP
The Broadgate Tower
20 Primrose Street
London EC2A 2ES (GB)**

(54) ## COMMUNICATION METHOD AND APPARATUS, AND COMPUTER-READABLE STORAGE MEDIUM

(57) This application provides a communication method, an apparatus, and a computer-readable storage medium. The communication method includes: generating at least one reference signal. The at least one reference signal belongs to a reference signal set, and all reference signals in the reference signal set occupy a same time-frequency resource. The reference signal set includes at least two groups of reference signals, and each group of reference signals satisfies: Each group includes a plurality of reference signals, and the plurality of reference signals are pairwise orthogonal. For reference signals with same frequency-domain sequences, corresponding time-domain sequences are orthogonal to each other. For reference signals with same time-domain sequences, corresponding first frequency-domain sequences are orthogonal to each other, and corresponding second frequency-domain sequences are also orthogonal to each other. Based on embodiments of this application, interference between reference signals can be reduced.

FIG. 13

**Description**

This application claims priority to Chinese Patent Application No. 202210114621.7, filed with the China National Intellectual Property Administration on January 30, 2022 and entitled "COMMUNICATION METHOD, APPARATUS, AND COMPUTER-READABLE STORAGE MEDIUM", which is incorporated herein by reference in its entirety.

**TECHNICAL FIELD**

This application relates to the field of wireless communication technologies, and in particular, to a communication method, an apparatus, and a computer-readable storage medium.

**BACKGROUND**

A demodulation reference signal (demodulation reference signal, DMRS) is a reference signal used for uplink or downlink channel estimation to demodulate data. In an existing communication system, to improve spectral efficiency, a plurality of layers of data may be communicated on a same time-frequency resource, DMRSs are sent together with the data, and each layer of data needs to correspond to one DMRS. DMRSs of different layers of data, including DMRSs of a plurality of layers of data of a same user equipment (user equipment, UE) in a single-user multiple-input multiple-output (single-user multiple-input multiple-output, SU-MIMO) system and DMRSs of a plurality of layers of data of a plurality of UEs in a multi-user multiple-input multiple-output (multi-user multiple-input multiple-output, MU-MIMO) system, are orthogonalized by using different DMRS cyclic shifts (cyclic shifts, CSs) and/or orthogonal cover codes (orthogonal cover codes, OCCs), to distinguish between different layers of spatial multiplexed data of a user or distinguish between different UEs.

In an existing 5G NR standard, based on frequency domain resource configuration of the DMRSs, configuration types of the DMRSs may be classified into a configuration type 1 (configuration type 1) and a configuration type 2 (configuration type 2). When a DMRS occupies two orthogonal frequency division multiplexing (Orthogonal Frequency Division Multiplexing, OFDM) symbols, in the configuration type 1 (configuration type 1), a system supports multiplexing of a maximum of eight orthogonal DMRSs; and in the configuration type 2 (configuration type 2), the system supports multiplexing of a maximum of 12 orthogonal DMRSs.

With development of mobile communication and emergence of a new service, a rate needs to be increasingly high. Increasing a quantity of transport layers for multi-user pairing helps increase a system throughput. Therefore, when a quantity of transport layers of a cell is large, more reference signals need to be supported. An increase in a quantity of reference signals may cause an increase in interference between the reference signals. How to reduce the interference between the reference signals is an urgent problem to be resolved.

**SUMMARY**

Embodiments of this application provide a communication method, an apparatus, and a computer-readable storage medium, to reduce interference between reference signals.

According to a first aspect, this application provides a communication method. The method may be applied to a terminal device, or may be applied to a module (for example, a chip) in the terminal device. The method may be applied to a network device, or may be applied to a module (for example, a chip) in the network device. An example in which the method is applied to the terminal device is used below for description. The method may include:

generating at least one reference signal, where the at least one reference signal belongs to a reference signal set, all reference signals in the reference signal set occupy a same time-frequency resource, and an element value $a$ in a sequence of the at least one reference signal satisfies:

$$a = \beta \cdot w_f(k') \cdot w_t(l') \cdot r(Kn + k'),$$

where
$\beta$ is a non-zero value, $w_f(k')$ is an element in a frequency-domain sequence, $k'$ is an integer, a value of $k'$ ranges from 0 to K-1, a length of the frequency-domain sequence $w_f(0), w_f(1), ..., w_f(K - 1)$ is K, K is an integer, $w_t(l')$ is an element in a time-domain sequence, $l'$ is an integer, a value of $l'$ ranges from 0 to L-1, a length of the time-domain sequence $w_t(0), w_t(1), ..., w_t(L - 1)$ is L, L is an integer greater than or equal to 2, $r(Kn + k')$ is a complex number, and $n$ is an integer greater than or equal to 0;

the frequency-domain sequence $w_f(0)$, $w_f(1)$, ... , $w_f(K-1)$ includes a first frequency-domain sequence $w_f(0)$, $w_f(1)$, ... , $w_f(K/2-1)$ and a second frequency-domain sequence $w_f(K/2)$, $w_f\left(\frac{K}{2}+1\right)$, ... , $w_f(K-1)$, both lengths of the first frequency-domain sequence and the second frequency-domain sequence are K/2, the value of $k'$ in the first frequency-domain sequence ranges from 0 to $K/2-1$, and the value of $k'$ in the second frequency-domain sequence ranges from $K/2$ to $K-1$;

the reference signal set includes at least two groups of reference signals, and each of the at least two groups of reference signals satisfies: each group includes a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding first frequency-domain sequences are orthogonal to each other, and corresponding second frequency-domain sequences are also orthogonal to each other; and

the at least two groups of reference signals include a first group of reference signals and a second group of reference signals, a frequency-domain sequence corresponding to any reference signal in the first group of reference signals and a frequency-domain sequence corresponding to any reference signal in the second group of reference signals are orthogonal to each other, and a time-domain sequence corresponding to any reference signal in the first group of reference signals is different from a time-domain sequence corresponding to any reference signal in the second group of reference signals; and

sending the at least one reference signal.

In the solution provided in this application, the terminal device may send one or more reference signals to the network device. These reference signals may belong to a same reference signal set. All reference signals in the reference signal set may be divided into at least two reference signal groups, and each reference signal group includes a plurality of reference signals. Time domain sequences of at least two of the plurality of reference signals are the same, and frequency-domain sequences of at least two of the plurality of reference signals are the same. For the reference signals with the same frequency-domain sequences, corresponding time-domain sequences are orthogonal to each other. For the reference signals with the same time-domain sequences, corresponding first frequency-domain sequences are orthogonal to each other, and corresponding second frequency-domain sequences are also orthogonal to each other. For any reference signals in different groups of reference signals, corresponding frequency-domain sequences are orthogonal to each other, and corresponding time-domain sequences are different. Based on the solution provided in this application, cross-correlation of inter-group reference signals can be improved, to reduce interference between the reference signals.

In a possible implementation, L=2, the time-domain sequence corresponding to any reference signal in the first group of reference signals is 1, 1 or 1, -1, and the time-domain sequence corresponding to any reference signal in the second group of reference signals is 1, j or 1, j, where j is an imaginary unit.

In a possible implementation, a first frequency-domain sequence corresponding to any reference signal in the first group of reference signals and a first frequency-domain sequence corresponding to any reference signal in the second group of reference signals are not orthogonal to each other, and a second frequency-domain sequence corresponding to any reference signal in the first group of reference signals and a second frequency-domain sequence corresponding to any reference signal in the second group of reference signals are not orthogonal to each other either.

In a possible implementation, K = 4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, j or 1, j, -1, j, where j is an imaginary unit.

In a possible implementation, K = 4, the frequency-domain sequence corresponding to any reference signal in the first group of reference signals is 1, j, -1, j or 1, -j, -1, j, and the frequency-domain sequence corresponding to any reference signal in the second group of reference signals is 1, 1, 1, 1 or 1, -1, 1, -1, where j is an imaginary unit.

In a possible implementation, the time-frequency resource includes a plurality of resource elements $(k, l)$, $k$ represents a subcarrier index, $l$ represents an orthogonal frequency division multiplexing OFDM symbol index, the element value $a$ mapped to the resource element $(k, l)$ is $a_{k,l}$, and $a_{k,l}$ satisfies:

$$a_{k,l} = \beta \cdot w_f(k') \cdot w_t(l') \cdot r(Kn + k'),$$

where

*k* and *k'* satisfy:

$$k = T(Kn + k') + \Delta,$$

where

T is an integer greater than or equal to 1, and $\Delta$ is an integer; and

*l* and *l'* satisfy:

$$l = \bar{l} + l',$$

where

$\bar{l}$ is an integer.

In a possible implementation, *T* = 2, and the following formula is satisfied:

$$k = 2(Kn + k') + \Delta,$$

where

$\Delta$ is 0 or 1.

In a possible implementation, the time-frequency resource includes a plurality of resource elements (*k*, *l*), *k* represents a subcarrier index, *l* represents an orthogonal frequency division multiplexing OFDM symbol index, the element value *a* mapped to the resource element (*k*, *l*) is $a_{k,l}$, and $a_{k,l}$ satisfies:

$$a_{k,l} = \beta \cdot w_f(k') \cdot w_t(l') \cdot r(Kn + k'),$$

where

*k* and *k'* satisfy:

$$k = 3Kn + 4 \cdot \left\lfloor \frac{k'}{2} \right\rfloor + k' + \Delta,$$

where

$\Delta$ is 0, 2, or 4, and $\lfloor \cdot \rfloor$ represents rounding down; and

*l* is associated with *l'*, satisfying:

$$l = \bar{l} + l',$$

where

$\bar{l}$ is an integer.

According to a second aspect, this application provides a communication method. The method may be applied to a terminal device, or may be applied to a module (for example, a chip) in the terminal device. The method may be applied to a network device, or may be applied to a module (for example, a chip) in the network device. An example in which the method is applied to the network device is used below for description. The method may include:

receiving at least one reference signal, where the at least one reference signal belongs to a reference signal set, all reference signals in the reference signal set occupy a same time-frequency resource, and an element value *a* in a sequence of the at least one reference signal satisfies:

$$a = \beta \cdot w_f(k') \cdot w_t(l') \cdot r(Kn + k'),$$

where

$\beta$ is a non-zero value, $w_f(k')$ is an element in a frequency-domain sequence, $k'$ is an integer, a value of $k'$ ranges from 0 to K-1, a length of the frequency-domain sequence $w_f(0), w_f(1), ... , w_f(K - 1)$ is K, K is an integer, $w_t(l')$ is an element in a time-domain sequence, $l'$ is an integer, a value of $l'$ ranges from 0 to L-1, a length of the time-domain sequence $w_t(0), w_t(1), ..., w_t(L - 1)$ is L, L is an integer greater than or equal to 2, $r(Kn + k')$ is a complex number, and n is an integer greater than or equal to 0;

the frequency-domain sequence $w_f(0), w_f(1), ... , w_f(K - 1)$ includes a first frequency-domain sequence $w_f(0), w_f(1), ... , w_f(K/2 - 1)$ and a second frequency-domain sequence $w_f(K/2)$, $w_f\left(\frac{K}{2} + 1\right)$, $... , w_f(K - 1)$, both lengths of the first frequency-domain sequence and the second frequency-domain sequence are K/2, the value of $k'$ in the first frequency-domain sequence ranges from 0 to $K/2 - 1$, and the value of $k'$ in the second frequency-domain sequence ranges from $K/2$ to $K - 1$;

the reference signal set includes at least two groups of reference signals, and each of the at least two groups of reference signals satisfies: each group includes a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding first frequency-domain sequences are orthogonal to each other, and corresponding second frequency-domain sequences are also orthogonal to each other; and

the at least two groups of reference signals include a first group of reference signals and a second group of reference signals, a frequency-domain sequence corresponding to any reference signal in the first group of reference signals and a frequency-domain sequence corresponding to any reference signal in the second group of reference signals are orthogonal to each other, and a time-domain sequence corresponding to any reference signal in the first group of reference signals is different from a time-domain sequence corresponding to any reference signal in the second group of reference signals; and

processing the at least one reference signal.

In the solution provided in this application, the terminal device may send one or more reference signals to the network device. These reference signals may belong to a same reference signal set. All reference signals in the reference signal set may be divided into at least two reference signal groups, and each reference signal group includes a plurality of reference signals. Time domain sequences of at least two of the plurality of reference signals are the same, and frequency-domain sequences of at least two of the plurality of reference signals are the same. For the reference signals with the same frequency-domain sequences, corresponding time-domain sequences are orthogonal to each other. For the reference signals with the same time-domain sequences, corresponding first frequency-domain sequences are orthogonal to each other, and corresponding second frequency-domain sequences are also orthogonal to each other. For any reference signals in different groups of reference signals, corresponding frequency-domain sequences are orthogonal to each other, and corresponding time-domain sequences are different. Based on the solution provided in this application, cross-correlation of inter-group reference signals can be improved, to reduce interference between the reference signals.

In a possible implementation, L=2, the time-domain sequence corresponding to any reference signal in the first group of reference signals is 1, 1 or 1, -1, and the time-domain sequence corresponding to any reference signal in the second group of reference signals is 1, j or 1, j, where j is an imaginary unit.

In a possible implementation, a first frequency-domain sequence corresponding to any reference signal in the first group of reference signals and a first frequency-domain sequence corresponding to any reference signal in the second group of reference signals are not orthogonal to each other, and a second frequency-domain sequence corresponding to any reference signal in the first group of reference signals and a second frequency-domain sequence corresponding to any reference signal in the second group of reference signals are not orthogonal to each other either.

In a possible implementation, K = 4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, j or 1, j, -1, j, where j is an imaginary unit.

In a possible implementation, K = 4, the frequency-domain sequence corresponding to any reference signal in the first group of reference signals is 1, j, -1, j or 1, -j, -1, j, and the frequency-domain sequence corresponding to any reference signal in the second group of reference signals is 1, 1, 1, 1 or 1, -1, 1, -1, where j is an imaginary unit.

In a possible implementation, the time-frequency resource includes a plurality of resource elements $(k, l)$, $k$ represents a subcarrier index, $l$ represents an orthogonal frequency division multiplexing OFDM symbol index, the element value $a$ mapped to the resource element $(k, l)$ is $a_{k,l}$, and $a_{k,l}$ satisfies:

$$a_{k,l} = \beta \cdot w_f(k') \cdot w_t(l') \cdot r(Kn + k'),$$

where

$k$ and $k'$ satisfy:

$$k = T(Kn + k') + \Delta,$$

where
$T$ is an integer greater than or equal to 1, and $\Delta$ is an integer; and
$l$ and $l'$ satisfy:

$$l = \bar{l} + l',$$

where
$\bar{l}$ is an integer.

In a possible implementation, $T = 2$, and the following formula is satisfied:

$$k = 2(Kn + k') + \Delta,$$

where
$\Delta$ is 0 or 1.

In a possible implementation, the time-frequency resource includes a plurality of resource elements $(k, l)$, $k$ represents a subcarrier index, $l$ represents an orthogonal frequency division multiplexing OFDM symbol index, the element value $a$ mapped to the resource element $(k, l)$ is $a_{k,l}$, and $a_{k,l}$ satisfies:

$$a_{k,l} = \beta \cdot w_f(k') \cdot w_t(l') \cdot r(Kn + k'),$$

where

$k$ and $k'$ satisfy:

$$k = 3Kn + 4 \cdot \left\lfloor \frac{k'}{2} \right\rfloor + k' + \Delta,$$

where

$\Delta$ is 0, 2, or 4, and $\lfloor \cdot \rfloor$ represents rounding down; and

$l$ is associated with $l'$, satisfying:

$$l = \bar{l} + l',$$

where

$\bar{l}$ is an integer.

According to a third aspect, this application provides a communication method. The method may be applied to a terminal device, or may be applied to a module (for example, a chip) in the terminal device. The method may be applied to a network device, or may be applied to a module (for example, a chip) in the network device. An example in which the method is applied to the terminal device is used below for description. The method may include:

generating at least one reference signal, where the at least one reference signal belongs to a reference signal set, all reference signals in the reference signal set occupy a same time-frequency resource, and an element value $a$ in a sequence of the at least one reference signal satisfies:

$$a = \beta \cdot w_f(k') \cdot w_t(l') \cdot r(Kn + k'),$$

where

$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K - 1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ..., $w_t(L - 1)$ is L, L is an integer greater than or equal to 2, $r(Kn + k')$ is a complex number, and n is an integer greater than or equal to 0;
the frequency-domain sequence $w_f(0)$, $w_f(1)$, ... , $w_f(K - 1)$ satisfies:

$[w_f(0), w_f(1), ..., w_f(K - 1)] = [s(0), s(1), ..., s(M - 1)] \otimes [t(0), t(1), ..., t(Q - 1)]$,

where

a length of an outer frequency-domain sequence $s(0)$, $s(1)$, ..., $s(M - 1)$ is M, a length of an inner frequency-domain sequence $t(0)$, $t(1)$, ..., $t(Q - 1)$ is Q, $K = M \cdot Q$, $\otimes$ represents a Kronecker product, M is an integer greater than or equal to 2, and Q is an integer greater than or equal to 2;
the reference signal set includes at least two groups of reference signals, and each of the at least two groups of reference signals satisfies: each group includes a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding inner frequency-domain sequences are orthogonal to each other, and corresponding outer frequency-domain sequences are the same; and the at least two groups of reference signals include a first group of reference signals and a second group of reference signals, an outer frequency-domain sequence corresponding to any reference signal in the first group of reference signals and an outer frequency-domain sequence corresponding to any reference signal in the second group of reference signals are orthogonal to each other, and an inner frequency-domain sequence corresponding to any reference signal in the first group of reference signals is different from an inner frequency-domain sequence corresponding to any reference signal in the second group of reference signals; and sending the at least one reference signal.

In the solution provided in this application, the terminal device may send one or more reference signals to the network device. These reference signals may belong to a same reference signal set. All reference signals in the reference signal set may be divided into at least two reference signal groups, and each reference signal group includes a plurality of reference signals. Time domain sequences of at least two of the plurality of reference signals are the same, and frequency-domain sequences of at least two of the plurality of reference signals are the same. For the reference signals with the same frequency-domain sequences, corresponding time-domain sequences are orthogonal to each other. For the reference signals with the same time-domain sequences, corresponding outer frequency-domain sequences are orthogonal to each other, and corresponding inner frequency-domain sequences are also orthogonal to each other. For any reference signals in different groups of reference signals, corresponding outer frequency-domain sequences are orthogonal, and corresponding inner frequency-domain sequences are different. Based on the solution provided in this application, cross-correlation of any two inter-subgroup reference signals can be reduced, to reduce interference between the reference signals.

In a possible implementation, K = 4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, j or 1, j, -1, j, where j is an imaginary unit.

In a possible implementation, the time-frequency resource includes a plurality of resource elements $(k, l)$, $k$ represents a subcarrier index, $l$ represents an orthogonal frequency division multiplexing OFDM symbol index, the element value $a$ mapped to the resource element (k, $l$) is $a_{k,l}$, and $a_{k,l}$ satisfies:

$$a_{k,l} = \beta \cdot w_f(k') \cdot w_t(l') \cdot r(Kn + k'),$$

where

k and k' satisfy:

$$k = 3Kn + 4 \cdot \left\lfloor \frac{k'}{2} \right\rfloor + k' + \Delta,$$

where

$\Delta$ is 0, 2, or 4, and $\lfloor \cdot \rfloor$ represents rounding down; and
$l$ and $l'$ satisfy:

$$l = \bar{l} + l',$$

where
$l$ is an integer.

According to a fourth aspect, this application provides a communication method. The method may be applied to a terminal device, or may be applied to a module (for example, a chip) in the terminal device. The method may be applied to a network device, or may be applied to a module (for example, a chip) in the network device. An example in which the method is applied to the terminal device is used below for description. The method may include:

receiving at least one reference signal, where the at least one reference signal belongs to a reference signal set, all reference signals in the reference signal set occupy a same time-frequency resource, and an element value $a$ in a sequence of the at least one reference signal satisfies:

$$a = \beta \cdot w_f(k') \cdot w_t(l') \cdot r(Kn + k'),$$

where
$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K - 1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ..., $w_t(L - 1)$ is L, L is an integer greater than or equal to 2, $r(Kn + k')$ is a complex number, and $n$ is an integer greater than or equal to 0;
the frequency-domain sequence $w_f(0)$, $w_f(1)$, ... , $w_f(K - 1)$ satisfies:

$[w_f(0), w_f(1), ..., w_f(K - 1)] = [s(0), s(1), ..., s(M - 1)] \otimes [t(0), t(1), ..., t(Q - 1)]$,

where
a length of an outer frequency-domain sequence $s(0)$, $s(1)$, ..., $s(M - 1)$ is M, a length of an inner frequency-domain sequence $t(0)$, $t(1)$, ..., $t(Q - 1)$ is Q, $K = M \cdot Q$, $\otimes$ represents a Kronecker product, M is an integer greater than or equal to 2, and Q is an integer greater than or equal to 2;
the reference signal set includes at least two groups of reference signals, and each of the at least two groups of reference signals satisfies: each group includes a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding inner frequency-domain sequences are orthogonal to each other, and corresponding outer frequency-domain sequences are the same; and the at least two groups of reference signals include a first group of reference signals and a second group of reference signals, an outer frequency-domain sequence corresponding to any reference signal in the first group of reference signals and an outer frequency-domain sequence corresponding to any reference signal in the second group of reference signals are orthogonal to each other, and an inner frequency-domain sequence corresponding to any reference signal in the first group of reference signals is different from an inner frequency-domain sequence corresponding to any reference signal in the second group of reference signals; and
processing the at least one reference signal.

In the solution provided in this application, the terminal device may send one or more reference signals to the network device. These reference signals may belong to a same reference signal set. All reference signals in the reference signal set may be divided into at least two reference signal groups, and each reference signal group includes a plurality of reference signals. Time domain sequences of at least two of the plurality of reference signals are the same, and frequency-domain sequences of at least two of the plurality of reference signals are the same. For the reference signals with the same frequency-domain sequences, corresponding time-domain sequences are orthogonal to each other. For the reference signals with the same time-domain sequences, corresponding outer frequency-domain sequences are orthogonal to each other, and corresponding inner frequency-domain sequences are also orthogonal to each other. For any reference signals in different groups of reference signals, corresponding outer frequency-domain sequences are orthogonal, and corresponding inner frequency-domain sequences are different. Based on the solution provided in this application, cross-correlation of any two inter-subgroup reference signals can be reduced, to reduce interference between the reference signals.

In a possible implementation, K = 4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, j or 1, j, -1, j, where j is an imaginary unit.

In a possible implementation, the time-frequency resource includes a plurality of resource elements ($k$, $l$), $k$ represents a subcarrier index, $l$ represents an orthogonal frequency division multiplexing OFDM symbol index, the element value $a$ mapped to the resource element ($k$, $l$) is $a_{k,l}$, and $a_{k,l}$ satisfies:

$$a_{k,l} = \beta \cdot w_f(k') \cdot w_t(l') \cdot r(Kn + k'),$$

where

$k$ and $k'$ satisfy:

$$k = 3Kn + 4 \cdot \left\lfloor \frac{k'}{2} \right\rfloor + k' + \Delta,$$

where

$\Delta$ is 0, 2, or 4, and $\lfloor \cdot \rfloor$ represents rounding down; and

$l$ and $l'$ satisfy:

$$l = \bar{l} + l',$$

where

$\bar{l}$ is an integer.

According to a fifth aspect, an embodiment of this application provides a communication apparatus.
For beneficial effects, refer to the descriptions of the first aspect. Details are not described herein again. The communication apparatus has a function of implementing the behavior in the method instance in the first aspect. The function may be implemented by hardware, or may be implemented by hardware executing corresponding software. The hardware or the software includes one or more modules corresponding to the foregoing function.
In a possible implementation, the communication apparatus further includes:

a generation unit, configured to generate at least one reference signal, where the at least one reference signal belongs to a reference signal set, all reference signals in the reference signal set occupy a same time-frequency resource, and an element value $a$ in a sequence of the at least one reference signal satisfies:

$$a = \beta \cdot w_f(k') \cdot w_t(l') \cdot r(Kn + k'),$$

where

$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K - 1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ..., $w_t(L - 1)$ is L, L is an integer greater than or equal to 2, $r(Kn + k')$ is a complex number, and n is an integer greater than or equal to 0;

the frequency-domain sequence $w_f(0)$, $w_f(1)$, ... , $w_f(K - 1)$ includes a first frequency-domain sequence $w_f(0)$, $w_f(1)$, ... , $w_f(K/2 - 1)$ and a second frequency-domain sequence $w_f(K/2)$, $w_f\left(\frac{K}{2} + 1\right)$ , ... , $w_f(K - 1)$, both lengths of the first frequency-domain sequence and the second frequency-domain sequence are K/2, the value of $k'$ in the first frequency-domain sequence ranges from 0 to $K/2 - 1$, and the value of $k'$ in the second frequency-domain sequence ranges from $K/2$ to $K - 1$;

the reference signal set includes at least two groups of reference signals, and each of the at least two groups of reference signals satisfies: each group includes a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding first frequency-domain sequences are orthogonal to each other, and corresponding second frequency-domain sequences are also orthogonal to each other; and

the at least two groups of reference signals include a first group of reference signals and a second group of reference signals, a frequency-domain sequence corresponding to any reference signal in the first group of reference signals and a frequency-domain sequence corresponding to any reference signal in the second group of reference signals are orthogonal to each other, and a time-domain sequence corresponding to any reference signal in the first group of reference signals is different from a time-domain sequence corresponding to any reference signal in the second group of reference signals; and

a sending unit, configured to send the at least one reference signal.

In a possible implementation, L=2, the time-domain sequence corresponding to any reference signal in the first group of reference signals is 1, 1 or 1, -1, and the time-domain sequence corresponding to any reference signal in the second group of reference signals is 1, j or 1, j, where j is an imaginary unit.

In a possible implementation, a first frequency-domain sequence corresponding to any reference signal in the first group of reference signals and a first frequency-domain sequence corresponding to any reference signal in the second group of reference signals are not orthogonal to each other, and a second frequency-domain sequence corresponding to any reference signal in the first group of reference signals and a second frequency-domain sequence corresponding to any reference signal in the second group of reference signals are not orthogonal to each other either.

In a possible implementation, K = 4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, j or 1, j, -1, j, where j is an imaginary unit.

In a possible implementation, K = 4, the frequency-domain sequence corresponding to any reference signal in the first group of reference signals is 1, j, -1, j or 1, -j, -1, j, and the frequency-domain sequence corresponding to any reference signal in the second group of reference signals is 1, 1, 1, 1 or 1, -1, 1, -1, where j is an imaginary unit.

In a possible implementation, the time-frequency resource includes a plurality of resource elements $(k, l)$, $k$ represents a subcarrier index, $l$ represents an orthogonal frequency division multiplexing OFDM symbol index, the element value $a$ mapped to the resource element $(k, l)$ is $a_{k,l}$, and $a_{k,l}$ satisfies:

$$a_{k,l} = \beta \cdot w_f(k') \cdot w_t(l') \cdot r(Kn + k'),$$

where

*k* and *k'* satisfy:

$$k = T(Kn + k') + \Delta,$$

where
T is an integer greater than or equal to 1, and $\Delta$ is an integer; and
*l* and *l'* satisfy:

$$l = \bar{l} + l'$$

$\bar{l}$ is an integer.

In a possible implementation, *T* = 2, and the following formula is satisfied:

$$k = 2(Kn + k') + \Delta,$$

where
$\Delta$ is 0 or 1.

In a possible implementation, the time-frequency resource includes a plurality of resource elements (*k*, *l*), *k* represents a subcarrier index, *l* represents an orthogonal frequency division multiplexing OFDM symbol index, the element value *a* mapped to the resource element (k, *l*) is $a_{k,l}$, and $a_{k,l}$ satisfies:

$$a_{k,l} = \beta \cdot w_f(k') \cdot w_t(l') \cdot r(Kn + k'),$$

where

*k* and *k'* satisfy:

$$k = 3Kn + 4 \cdot \left\lfloor \frac{k'}{2} \right\rfloor + k' + \Delta,$$

where

$\Delta$ is 0, 2, or 4, and $\lfloor \cdot \rfloor$ represents rounding down; and

*l* is associated with *l'*, satisfying:

$$l = \bar{l} + l',$$

where

$\bar{l}$ is an integer.

According to a sixth aspect, an embodiment of this application provides a communication apparatus.
For beneficial effects, refer to the descriptions of the second aspect. Details are not described herein again. The communication apparatus has a function of implementing the behavior in the method instance in the second aspect. The function may be implemented by hardware, or may be implemented by hardware executing corresponding software. The hardware or the software includes one or more modules corresponding to the foregoing function.
In a possible implementation, the communication apparatus further includes:

a receiving unit, configured to receive at least one reference signal, where the at least one reference signal belongs to a reference signal set, all reference signals in the reference signal set occupy a same time-frequency resource, and an element value $a$ in a sequence of the at least one reference signal satisfies:

$$a = \beta \cdot w_f(k') \cdot w_t(l') \cdot r(Kn + k'),$$

where

$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K - 1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ..., $w_t(L - 1)$ is L, L is an integer greater than or equal to 2, $r(Kn + k')$ is a complex number, and n is an integer greater than or equal to 0;

the frequency-domain sequence $w_f(0)$, $w_f(1)$, ... , $w_f(K - 1)$ includes a first frequency-domain sequence $w_f(0)$, $w_f(1)$, ... , $w_f(K/2 - 1)$ and a second frequency-domain sequence $w_f(K/2)$, $w_f\left(\frac{K}{2} + 1\right)$ , ... , $w_f(K - 1)$, both lengths of the first frequency-domain sequence and the second frequency-domain sequence are K/2, the value of $k'$ in the first frequency-domain sequence ranges from 0 to $K/2 - 1$, and the value of $k'$ in the second frequency-domain sequence ranges from $K/2$ to $K - 1$;

the reference signal set includes at least two groups of reference signals, and each of the at least two groups of reference signals satisfies: each group includes a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding first frequency-domain sequences are orthogonal to each other, and corresponding second frequency-domain sequences are also orthogonal to each other; and

the at least two groups of reference signals include a first group of reference signals and a second group of reference signals, a frequency-domain sequence corresponding to any reference signal in the first group of reference signals and a frequency-domain sequence corresponding to any reference signal in the second group of reference signals are orthogonal to each other, and a time-domain sequence corresponding to any reference signal in the first group of reference signals is different from a time-domain sequence corresponding to any reference signal in the second group of reference signals; and

a processing unit, configured to process the at least one reference signal.

In a possible implementation, L=2, the time-domain sequence corresponding to any reference signal in the first group of reference signals is 1, 1 or 1, -1, and the time-domain sequence corresponding to any reference signal in the second group of reference signals is 1, j or 1, j, where j is an imaginary unit.

In a possible implementation, a first frequency-domain sequence corresponding to any reference signal in the first group of reference signals and a first frequency-domain sequence corresponding to any reference signal in the second group of reference signals are not orthogonal to each other, and a second frequency-domain sequence corresponding to any reference signal in the first group of reference signals and a second frequency-domain sequence corresponding to any reference signal in the second group of reference signals are not orthogonal to each other either.

In a possible implementation, K = 4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, j or 1, -j, -1, j, where j is an imaginary unit.

In a possible implementation, K = 4, the frequency-domain sequence corresponding to any reference signal in the first group of reference signals is 1, j, -1, j or 1, -j, -1, j, and the frequency-domain sequence corresponding to any reference signal in the second group of reference signals is 1, 1, 1, 1 or 1, -1, 1, -1, where j is an imaginary unit.

In a possible implementation, the time-frequency resource includes a plurality of resource elements $(k, l)$, $k$ represents a subcarrier index, $l$ represents an orthogonal frequency division multiplexing OFDM symbol index, the element value $a$ mapped to the resource element $(k, l)$ is $a_{k,l}$, and $a_{k,l}$ satisfies:

$$a_{k,l} = \beta \cdot w_f(k') \cdot w_t(l') \cdot r(Kn + k'),$$

where

*k* and *k'* satisfy:

$$k = T(Kn + k') + \Delta,$$

where
T is an integer greater than or equal to 1, and $\Delta$ is an integer; and
*l* and *l'* satisfy:

$$l = \bar{l} + l'$$

$\bar{l}$ is an integer.

In a possible implementation, *T* = 2, and the following formula is satisfied:

$$k = 2(Kn + k') + \Delta,$$

where
$\Delta$ is 0 or 1.
In a possible implementation, the time-frequency resource includes a plurality of resource elements (*k*, *l*), *k* represents a subcarrier index, *l* represents an orthogonal frequency division multiplexing OFDM symbol index, the element value *a* mapped to the resource element (k, *l*) is $a_{k,l}$, and $a_{k,l}$ satisfies:

$$a_{k,l} = \beta \cdot w_f(k') \cdot w_t(l') \cdot r(Kn + k'),$$

where

*k* and *k'* satisfy:

$$k = 3Kn + 4 \cdot \left\lfloor \frac{k'}{2} \right\rfloor + k' + \Delta,$$

where

$\Delta$ is 0, 2, or 4, and $\lfloor \cdot \rfloor$ represents rounding down; and
*l* is associated with *l'*, satisfying:

$$l = \bar{l} + l',$$

where
$\bar{l}$ is an integer.

According to a seventh aspect, an embodiment of this application provides a communication apparatus.
For beneficial effects, refer to the descriptions of the third aspect. Details are not described herein again. The communication apparatus has a function of implementing the behavior in the method instance in the third aspect. The function may be implemented by hardware, or may be implemented by hardware executing corresponding software. The hardware or the software includes one or more modules corresponding to the foregoing function.
In a possible implementation, the communication apparatus further includes:

a generation unit, configured to generate at least one reference signal, where the at least one reference signal belongs to a reference signal set, all reference signals in the reference signal set occupy a same time-frequency resource, and an element value *a* in a sequence of the at least one reference signal satisfies:

$$a = \beta \cdot w_f(k') \cdot w_t(l') \cdot r(Kn + k'),$$

where

$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K - 1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ..., $w_t(L - 1)$ is L, L is an integer greater than or equal to 2, $r(Kn + k')$ is a complex number, and n is an integer greater than or equal to 0;

the frequency-domain sequence $w_f(0)$, $w_f(1)$, ... , $w_f(K - 1)$ satisfies:

$[w_f(0)$, $w_f(1)$, ..., $w_f(K - 1)] = [s(0)$, $s(1)$, ..., $s(M - 1)] \otimes [t(0)$, $t(1)$, ..., $t(Q - 1)]$,

where

a length of an outer frequency-domain sequence $s(0)$, $s(1)$, ..., $s(M - 1)$ is M, a length of an inner frequency-domain sequence $t(0)$, $t(1)$, ... , $t(Q - 1)$ is Q, $K = M \cdot Q$, $\otimes$ represents a Kronecker product, M is an integer greater than or equal to 2, and Q is an integer greater than or equal to 2;
the reference signal set includes at least two groups of reference signals, and each of the at least two groups of reference signals satisfies: each group includes a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding inner frequency-domain sequences are orthogonal to each other, and corresponding outer frequency-domain sequences are the same; and
the at least two groups of reference signals include a first group of reference signals and a second group of reference signals, an outer frequency-domain sequence corresponding to any reference signal in the first group of reference signals and an outer frequency-domain sequence corresponding to any reference signal in the second group of reference signals are orthogonal to each other, and an inner frequency-domain sequence corresponding to any reference signal in the first group of reference signals is different from an inner frequency-domain sequence corresponding to any reference signal in the second group of reference signals; and
a sending unit, configured to send the at least one reference signal.

In a possible implementation, K = 4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, j or 1, -j, -1, j, where j is an imaginary unit.

In a possible implementation, the time-frequency resource includes a plurality of resource elements (k, l), k represents a subcarrier index, l represents an orthogonal frequency division multiplexing OFDM symbol index, the element value a mapped to the resource element (k, l) is $a_{k,l}$, and $a_{k,l}$ satisfies:

$$a_{k,l} = \beta \cdot w_f(k') \cdot w_t(l') \cdot r(Kn + k'),$$

where

k and k' satisfy:

$$k = 3Kn + 4 \cdot \left\lfloor \frac{k'}{2} \right\rfloor + k' + \Delta,$$

where

$\Delta$ is 0, 2, or 4, and $\lfloor \cdot \rfloor$ represents rounding down; and

l and l' satisfy:

$$l = \bar{l} + l',$$

where

$\overline{l}$ is an integer.

According to an eighth aspect, an embodiment of this application provides a communication apparatus.
For beneficial effects, refer to the descriptions of the fourth aspect. Details are not described herein again. The communication apparatus has a function of implementing the behavior in the method instance in the fourth aspect. The function may be implemented by hardware, or may be implemented by hardware executing corresponding software. The hardware or the software includes one or more modules corresponding to the foregoing function.
In a possible implementation, the communication apparatus further includes:

a receiving unit, configured to receive at least one reference signal, where the at least one reference signal belongs to a reference signal set, all reference signals in the reference signal set occupy a same time-frequency resource, and an element value $a$ in a sequence of the at least one reference signal satisfies:

$$a = \beta \cdot w_f(k') \cdot w_t(l') \cdot r(Kn + k'),$$

where
$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K - 1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ..., $w_t(L - 1)$ is L, L is an integer greater than or equal to 2, $r(Kn + k')$ is a complex number, and $n$ is an integer greater than or equal to 0;
the frequency-domain sequence $w_f(0)$, $w_f(1)$, ... , $w_f(K - 1)$ satisfies:

$[w_f(0), w_f(1), ..., w_f(K - 1)] = [s(0), s(1), ..., s(M - 1)] \otimes [t(0), t(1), ..., t(Q - 1)]$,

where
a length of an outer frequency-domain sequence $s(0)$, $s(1)$, ..., $s(M - 1)$ is M, a length of an inner frequency-domain sequence $t(0)$, $t(1)$, ..., $t(Q - 1)$ is Q, $K = M \cdot Q$, $\otimes$ represents a Kronecker product, M is an integer greater than or equal to 2, and Q is an integer greater than or equal to 2;
the reference signal set includes at least two groups of reference signals, and each of the at least two groups of reference signals satisfies: each group includes a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding inner frequency-domain sequences are orthogonal to each other, and corresponding outer frequency-domain sequences are the same; and the at least two groups of reference signals include a first group of reference signals and a second group of reference signals, an outer frequency-domain sequence corresponding to any reference signal in the first group of reference signals and an outer frequency-domain sequence corresponding to any reference signal in the second group of reference signals are orthogonal to each other, and an inner frequency-domain sequence corresponding to any reference signal in the first group of reference signals is different from an inner frequency-domain sequence corresponding to any reference signal in the second group of reference signals; and
a processing unit, configured to process the at least one reference signal.

In a possible implementation, K = 4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, j or 1, -j, -1, j, where j is an imaginary unit.
In a possible implementation, the time-frequency resource includes a plurality of resource elements (k, l), k represents a subcarrier index, l represents an orthogonal frequency division multiplexing OFDM symbol index, the element value $a$ mapped to the resource element (k, l) is $a_{k,l}$, and $a_{k,l}$ satisfies:

$$a_{k,l} = \beta \cdot w_f(k') \cdot w_t(l') \cdot r(Kn + k'),$$

where

*k* and *k'* satisfy:

$$k = 3Kn + 4 \cdot \left\lfloor \frac{k'}{2} \right\rfloor + k' + \Delta,$$

where

$\Delta$ is 0, 2, or 4, and $\lfloor \cdot \rfloor$ represents rounding down; and

*l* and *l'* satisfy:

$$l = \bar{l} + l',$$

where

$\bar{l}$ is an integer.

According to a ninth aspect, a communication apparatus is provided. The communication apparatus may be a terminal device, or may be a module (for example, a chip) in the terminal device. The apparatus may include a processor. The processor is configured to execute instructions stored in a memory. When the instructions are executed, the communication method provided in any one of the first aspect or the implementations of the first aspect is performed, or the communication method provided in any one of the third aspect or the implementations of the third aspect is performed.

According to a tenth aspect, a communication apparatus is provided. The communication apparatus may be a network device, or may be a module (for example, a chip) in the network device. The apparatus may include a processor. The processor is configured to execute instructions stored in a memory. When the instructions are executed, the communication method provided in any one of the second aspect or the implementations of the second aspect is performed, or the communication method provided in any one of the fourth aspect or the implementations of the fourth aspect is performed.

According to an eleventh aspect, this application provides a communication system. The communication system includes at least one terminal and at least one network device. When the at least one terminal device and the at least one network device run in the communication system, the communication system is configured to perform the method according to any one of the first aspect or the second aspect, or perform the method according to any one of the third aspect or the fourth aspect.

According to a twelfth aspect, this application provides a computer-readable storage medium. The computer-readable storage medium stores computer instructions. When the computer program or the computer instructions are run, the method according to any one of the first aspect and the possible implementations of the first aspect, any one of the second aspect and the possible implementations of the second aspect, any one of the third aspect and the possible implementations of the third aspect, or any one of the fourth aspect and the possible implementations of the fourth aspect is performed.

According to a thirteenth aspect, this application provides a computer program product, including program instructions. When the computer program product runs on user equipment, the method according to any one of the first aspect and the possible implementations of the first aspect, any one of the second aspect and the possible implementations of the second aspect, any one of the third aspect and the possible implementations of the third aspect, and any one of the fourth aspect and the possible implementations of the fourth aspect is performed.

According to a fourteenth aspect, this application provides a chip system. The chip system includes a processor, may further include a memory, and is configured to implement the method according to any one of the first aspect and the possible implementations of the first aspect, any one of the second aspect and the possible implementations of the second aspect, any one of the third aspect and the possible implementations of the third aspect, and any one of the fourth aspect and the possible implementations of the fourth aspect. The chip system may include a chip, or may include the chip and another discrete component.

## BRIEF DESCRIPTION OF DRAWINGS

To describe technical solutions in embodiments of this application more clearly, the following briefly describes the accompanying drawings for describing embodiments.

FIG. 1 is a diagram of a resource block;

FIG. 2 is a diagram of a pilot pattern of DMRSs using a configuration type 1;

FIG. 3 is a diagram of a pilot pattern of DMRSs using a configuration type 2;

FIG. 4 is a diagram of a network architecture according to an embodiment of this application;

FIG. 5 is a diagram of superposing time-domain orthogonal cover codes and frequency-domain orthogonal cover codes on DMRSs of configuration type 1 according to an embodiment of this application;

FIG. 6-1 and FIG. 6-2 are another diagram of superposing time-domain orthogonal cover codes and frequency-domain orthogonal cover codes on DMRSs of configuration type 1 according to an embodiment of this application;

FIG. 7 is a diagram of a time-frequency resource of DMRSs that are of configuration type 1 and that are obtained by using length-4 orthogonal frequency-domain sequences according to an embodiment of this application;

FIG. 8(a) and FIG. 8(b) are a diagram of superposing time-domain orthogonal cover codes and frequency-domain orthogonal cover codes on DMRSs of configuration type 2 according to an embodiment of this application;

FIG. 9(a)-1 to FIG. 9(b) are another diagram of superposing time-domain orthogonal cover codes and frequency-domain orthogonal cover codes on DMRSs of configuration type 2 according to an embodiment of this application;

FIG. 10(a) and FIG. 10(b) are a diagram of a time-frequency resource of DMRSs that are of configuration type 2 and that are obtained by using length-4 orthogonal frequency-domain sequences according to an embodiment of this application;

FIG. 11 is a cumulative distribution function of cross-correlation between DMRSs that are of configuration type 1 and that are obtained by superimposing length-4 frequency-domain orthogonal cover codes;

FIG. 12 is a cumulative distribution function of cross-correlation between DMRSs that are of configuration type 2 and that are obtained by superimposing length-4 frequency-domain orthogonal cover codes;

FIG. 13 is a schematic flowchart of a communication method according to an embodiment of this application;

FIG. 14(a) to FIG. 14(d) are another diagram of superposing time-domain orthogonal cover codes and frequency-domain orthogonal cover codes on DMRSs of configuration type 1 according to an embodiment of this application;

FIG. 15(a) to FIG. 15(c) are a cumulative distribution comparison diagram of cross-correlation between DMRSs after a channel delay spread is considered according to an embodiment of this application;

FIG. 16(a)-1 to FIG. 16(b)-3 are another diagram of superposing time-domain orthogonal cover codes and frequency-domain orthogonal cover codes on DMRSs of configuration type 2 according to an embodiment of this application;

FIG. 17(a) to FIG. 17(d) are another cumulative distribution comparison diagram of cross-correlation between DMRSs after a channel delay spread is considered according to an embodiment of this application;

FIG. 18(a)-1 to FIG. 18(b) are another diagram of superposing time-domain orthogonal cover codes and frequency-domain orthogonal cover codes on DMRSs of configuration type 2 according to an embodiment of this application;

FIG. 19 is another cumulative distribution comparison diagram of cross-correlation between DMRSs after a channel delay spread is considered according to an embodiment of this application;

FIG. 20 is a diagram of a structure of a communication apparatus according to an embodiment of this application;

FIG. 21 is a diagram of a structure of a communication apparatus according to an embodiment of this application;

FIG. 22 is a diagram of a structure of a communication apparatus according to an embodiment of this application; and

FIG. 23 is a diagram of a structure of a terminal device according to an embodiment of this application.

## DESCRIPTION OF EMBODIMENTS

To make persons skilled in the art understand technical solutions in this application better, the following clearly and completely describes the technical solutions in embodiments of this application with reference to the accompanying drawings in embodiments of this application. It is clear that the described embodiments are merely a part rather than all of embodiments of this application. All other embodiments obtained by persons of ordinary skill in the art based on embodiments of this application without creative efforts shall fall within the protection scope of this application.

The following first provides definitions of technical terms that may occur in embodiments of this application. Terms used in the description of embodiments of this application are only used to explain specific embodiments of this application, but are not intended to limit this application.

(1) Time-frequency resource

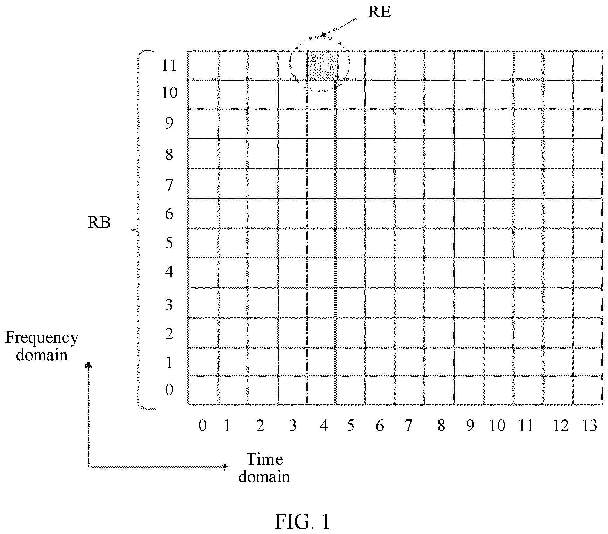

In a radio resource, a minimum resource granularity in time domain may be an orthogonal frequency division multiplexing (Orthogonal Frequency Division Multiplexing, OFDM) symbol (symbol), which may be referred to as a symbol (symbol) for short. One slot includes a plurality of symbols. For example, one slot may include 14 symbols. In frequency domain, a minimum resource granularity may be one subcarrier. One resource element (resource element, RE) includes one OFDM symbol and one subcarrier. Resource mapping is performed at a physical layer by using the RE as a basic unit. A 5th generation mobile communication technology (5th Generation Mobile Communication Technology, 5G) is used as an example. FIG. 1 is a diagram of a time-frequency resource. As shown in FIG. 1, one slot includes 14 symbols, and symbol index identifiers may be 0, 1, 2, ..., 13. One RE occupies one symbol in time domain, and occupies one subcarrier in frequency domain. One grid in FIG. 1 represents one RE. A resource block (Resource Block, RB) is a basic scheduling unit in frequency domain. One RB occupies 12 subcarriers in frequency domain, and subcarrier index identifiers may be 0, 1, 2, ..., 11.

(2) Demodulation reference signal(Demodulation Reference Signal, DMRS)

The DMRS is a reference signal used for uplink or downlink channel estimation to demodulate data. For example, channel estimation may be performed on a physical downlink shared channel (physical downlink shared channel, PDSCH) or a physical uplink shared channel (physical uplink shared channel, PUSCH) by using DMRSs, to perform related demodulation on uplink/downlink data. The PDSCH is used to carry downlink data, and the PUSCH is used to carry uplink data. The DMRSs are transmitted along with the PDSCH or the PUSCH. The DMRSs are usually located in first several symbols of a slot occupied by the PDSCH or the PUSCH.

In an uplink/downlink transmission process, a specific quantity of parallel data streams are allocated to each scheduled user equipment (user equipment, UE) based on factors such as a channel condition of each UE. Each data stream is referred to as one layer of transmission. A 5G new radio (new radio, NR) system is used as an example. Downlink single-user multiple-input multiple-output (single-user multiple-input multiple-output, SU-MIMO) supports a maximum of eight layers of transmission, and uplink SU-MIMO supports a maximum of four layers of transmission. Uplink/Downlink multi-user multiple-input multiple-output (multi-user multiple-input multiple-output, MU-MIMO) supports a maximum of 12 layers of transmission. Each layer of transmission may correspond to one DMRS.

A precoding vector of each DMRS is the same as a precoding vector of a data stream at a corresponding layer. A receiving end needs to perform channel estimation based on each DMRS. Different DMRSs correspond to different indexes, and the index herein may be a DMRS port number.

Specifically, when a same time-frequency resource is multiplexed in a plurality of layers of transmission, different DMRSs are divided into different code division multiplexing (code division multiplexing, CDM) groups (groups) in frequency domain based on configuration types of the DMRSs. For example, two DMRS configuration types: a configuration type 1 and a configuration type 2, may be supported in NR. DMRSs in a same CDM group are spread in time domain and frequency domain by using orthogonal cover codes. In addition, it is ensured that different DMRSs are orthogonal to each other. Frequency division is used to ensure that DMRSs in different CDM groups are orthogonal to each other.

PUSCH DMRSs in a cyclic prefix orthogonal frequency division multiplexing (cyclic prefix orthogonal frequency division multiplexing, CP-OFDM) wave shape are used as an example.

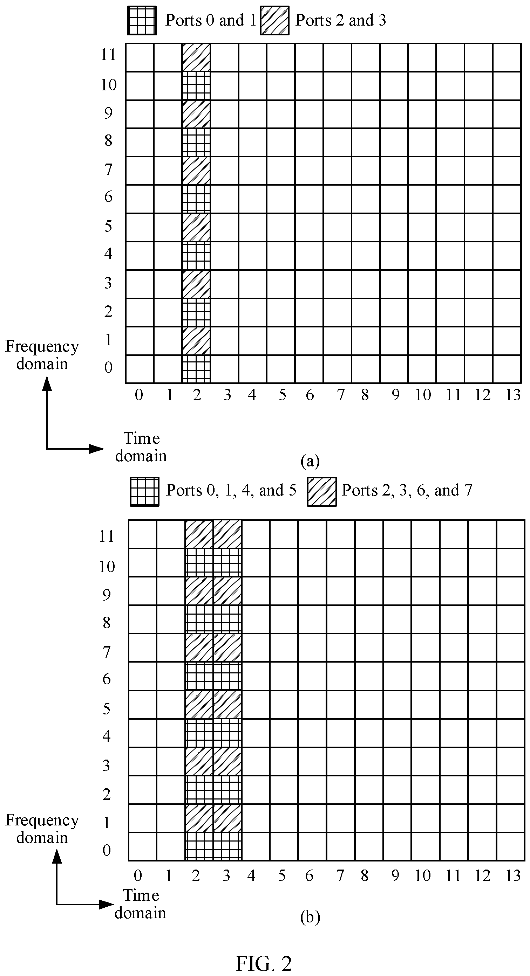

FIG. 2 is a configuration diagram of a time-frequency resource of DMRSs of configuration type 1. When one symbol is configured for the DMRSs, REs of two patterns in (a) in FIG. 2 respectively represent REs occupied by a CDM group 0 and REs occupied by a CDM group 1. The CDM group 0 includes a port 0 and a port 1, and the CDM group 1 includes a port 2 and a port 3. In a same CDM group, DMRSs of different ports occupy same REs. As shown in (a) in FIG. 2, both a DMRS of the port 0 and a DMRS of the port 1 occupy a symbol 2 in time domain, and occupy even-numbered subcarriers in frequency domain, for example, subcarriers 0, 2, 4, 6, 8, and 10. In (a) in FIG. 2, both a DMRS of the port 2 and a DMRS of the port 3 occupy the symbol 2 in time domain, and occupy odd-numbered subcarriers in frequency domain, for example, subcarriers 1, 3, 5, 7, 9, and 11. For two DMRSs in a same CDM group, length-2 orthogonal frequency-domain sequences are used to ensure code-division orthogonality. Frequency division is used between different CDM groups to ensure that DMRSs in the different CDM groups are orthogonal to each other. For example, in (a) in FIG. 2, DMRSs in the CDM group 0 and the CDM group 1 occupy different subcarriers in frequency domain. When the DMRSs are configured to use the type 1 and one symbol is configured for the DMRSs, a system supports a maximum of four orthogonal DMRSs.

When two symbols are configured for the DMRSs, REs of two patterns in (b) in FIG. 2 respectively represent REs occupied by a CDM group 0 and REs occupied by a CDM group 1. The CDM group 0 includes a port 0, a port 1, a port 4, and a port 5. Four DMRSs identified by port numbers {0, 1, 4, 5} occupy even-numbered subcarriers, for example, subcarriers 0, 2, 4, 6, 8, and 10. The first CDM group 1 includes a port 2, a port 3, a port 6, and a port 7. Four DMRSs identified by port numbers {2, 3, 6, 7} occupy odd-numbered subcarriers, for example, subcarriers 1, 3, 5, 7, 9, and 11. In a same CDM group, length-2 orthogonal frequency-domain sequences and length-2 orthogonal time-domain sequences are used to ensure that four DMRSs in the same CDM group are orthogonal. When the DMRSs are configured to use the type 1 and two symbols are configured for the DMRSs, a system supports a maximum of eight orthogonal DMRSs.

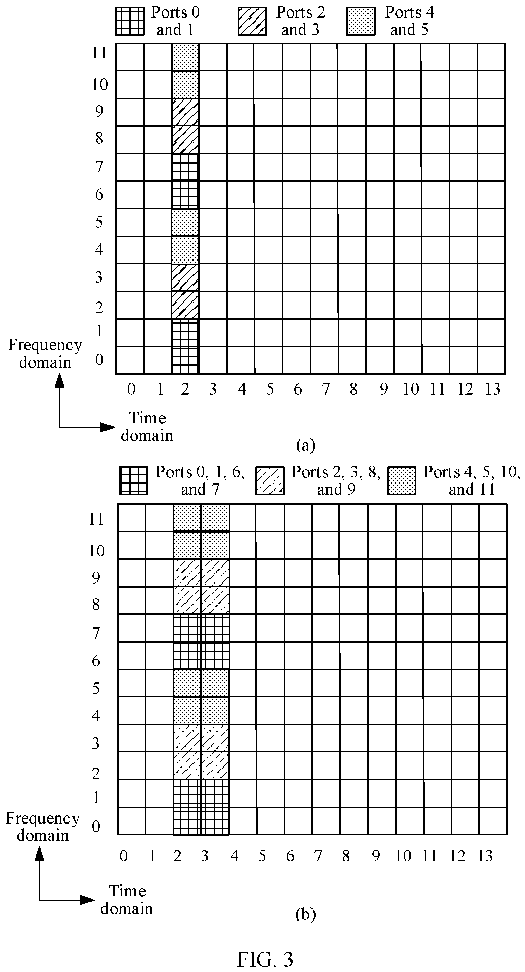

FIG. 3 is a configuration diagram of a time-frequency resource of DMRSs of configuration type 2. FIG. 3(a) is a diagram of the time-frequency resource when one symbol is configured for the DMRSs. REs of three patterns in (a) in FIG. 3 respectively represent REs occupied by a CDM group 0, REs occupied by a CDM group 1, and REs occupied by a CDM group 2. The CDM group 0 includes a port 0 and a port 1, the CDM group 1 includes a port 2 and a port 3, and the CDM group 2 includes a port 4 and a port 5. In a same CDM group, length-2 orthogonal frequency-domain sequences are used to ensure that two DMRSs in the same CDM group are orthogonal. When the configuration type 2 is used and one symbol is configured for the DMRSs, a system supports a maximum of six orthogonal DMRSs.

FIG. 3(b) is a diagram of the time-frequency resource when two symbols are configured for the DMRSs. When the two symbols are configured for the DMRSs, REs of three patterns in (b) in FIG. 3 respectively represent REs occupied by a CDM group 0, REs occupied by a CDM group 1, and REs occupied by a CDM group 2. The CDM group 0 includes a port 0, a port 1, a port 6, and a port 7, the CDM group 1 includes a port 2, a port 3, a port 8, and a port 9, and the CDM group 2 includes a port 4, a port 5, a port 10, and a port 11. Four DMRSs identified by port numbers {0, 1, 6, 7} occupy one group of subcarriers having same numbers, four DMRSs identified by port numbers {2, 3, 8, 9} occupy one group of subcarriers having same numbers, and four DMRSs identified by port numbers {4, 5, 10, 11} occupy one group of subcarriers having same numbers. In a same CDM group, length-2 orthogonal frequency-domain sequences and length-2 orthogonal time-domain sequences are used to ensure that four DMRSs in the same CDM group are orthogonal. When the configuration type 2 is used and two symbols are configured for the DMRSs, a system supports a maximum of 12 orthogonal DMRSs.

(3) Generation of a DMRS scrambling code sequence

When a CP-OFDM waveform is used for uplink/downlink communication, a DMRS may be generated by using a pseudo-random sequence. For example, in a 5G NR system, a scrambling code sequence $r(n)$ of the DMRS may be obtained by performing quadrature phase shift keying (Quadrature Phase Shift Keying, QPSK) modulation on a pseudo-random sequence $c(n)$. For example, $r(n)$ may be expressed as:

$$r(n) = \frac{1}{\sqrt{2}}\big(1 - 2 \cdot c(2n)\big) + j\frac{1}{\sqrt{2}}\big(1 - 2 \cdot c(2n + 1)\big),$$

where

the pseudo-random sequence $c(n)$ may be defined as:

$$c(n) = \big(x_1(n + N_C) + x_2(n + N_C)\big)\mathrm{mod}2;$$

$$x_1(n + 31) = \big(x_1(n + 3) + x_1(n)\big)\mathrm{mod}2;$$

and

$$x_2(n + 31) = \big(x_2(n + 3) + x_2(n + 2) + x_2(n + 1) + x_2(n)\big)\mathrm{mod}2,$$

where
$N_C$ = 1600, an initial value of a 1st m-sequence is $x_1(0) = 1$, $x_1(n) = 0$, $n$ = 1,2, ···,30, an initial value of a 2nd m-sequence satisfies $C_{init} = \sum_{i=0}^{30} x_2(i) \cdot 2^i$ , and a value of $C_{init}$ is configured based on a specific application scenario. A physical uplink shared channel (Physical Uplink Shared Channel, PUSCH) is used as an example. $C_{init}$ may be obtained based on configuration information such as a DMRS scrambling identifier (Identity document, ID) and a subframe location and symbol location of the DMRS, and may satisfy, for example:

$$c_{\mathrm{init}} = \left(2^{17}\big(N_{\mathrm{symb}}^{\mathrm{slot}}n_{\mathrm{s,f}}^{\mu} + l + 1\big)\big(2N_{\mathrm{ID}}^{\bar{n}_{\mathrm{SCID}}^{\bar{\lambda}}} + 1\big) + 2^{17}\left\lfloor\frac{\bar{\lambda}}{2}\right\rfloor + 2N_{\mathrm{ID}}^{\bar{n}_{\mathrm{SCID}}^{\bar{\lambda}}} + \bar{n}_{\mathrm{SCID}}^{\bar{\lambda}}\right)\mathrm{mod}2^{31} ,$$

where
$N_{\mathrm{symb}}^{\mathrm{slot}}$ is a quantity of OFDM symbols in one slot, $n_{\mathrm{s,f}}^{\mu}$ is a slot index in one frame, $l$ is an OFDM symbol index

in one slot, $\bar{n}_{\text{SCID}}^{\bar{\lambda}} \in \{0,1\}$, and $N_{\text{ID}}^0, N_{\text{ID}}^1 \in \{0,1,\dots,65535\}$ are configured IDs.

(4) DMRS code division multiplexing

A same time-frequency resource is multiplexed in each of a plurality of layers of transmission, and orthogonal DMRSs share a same scrambling code. In addition, to ensure orthogonality between the DMRSs, an orthogonal cover code (orthogonal cover code, OCC) corresponding to each layer of transmission needs to be superposed on a scrambling code sequence. The orthogonal cover code may also be referred to as an orthogonal sequence. Specifically, code-division orthogonality between different DMRSs is ensured by superposing frequency-domain sequences and time-domain sequences. Existing NR PUSCH DMRSs are used as an example. An element value $a_{k,l}^{(p,\mu)}$ carried on a resource element $(k, l)_{p,\mu}$ is obtained in the following manner:

$$a_{k,l}^{(p,\mu)} = \beta_{\text{PUSCH}}^{\text{DMRS}} w_f(k') w_t(l') r(2n + k');$$

$$k = \begin{cases} 4n + 2k' + \Delta & \text{Configuration type 1} \\ 6n + k' + \Delta & \text{Configuration type 2} \end{cases};$$

$$k' = 0,1;$$

$$l = \bar{l} + l';$$

$$n = 0,1,\dots,$$

where

the constant $\beta_{\text{PUSCH}}^{\text{DMRS}}$ is used to satisfy a transmit power requirement of a signal, each port number $p$ corresponds to one DMRS, that is, port numbers and the DMRSs are in one-to-one correspondence, $\mu$ is related to a subcarrier spacing, $w_f(k')$ represents a frequency-domain sequence, and $w_t(l')$ represents a time-domain sequence, to ensure code-division orthogonality between different DMRSs. PUSCH DMRSs are used as an example. For values of $w_f(k')$, $w_t(l')$, and $\Delta$ of DMRSs of configuration type 1, refer to Table 1. For values of $w_f(k')$, $w_t(l')$, and $\Delta$ of DMRSs of configuration type 2, refer to Table 2.

**Table 1: Parameters of PUSCH DMRSs of configuration type 1**

| $p$ | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |
| 7 | 1 | 1 | +1 | -1 | +1 | -1 |

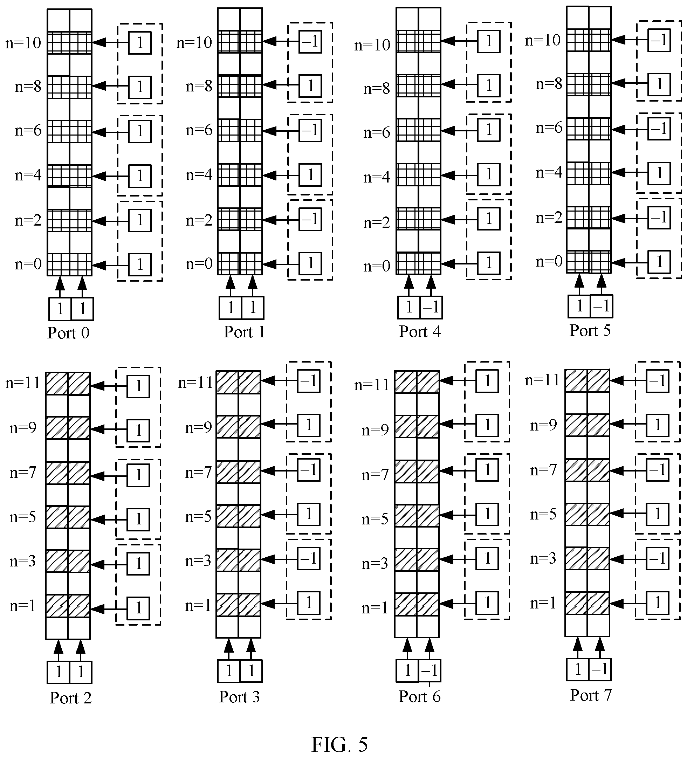

For the parameters of the DMRSs of configuration type 1 that are shown in Table 1, Table 1 shows a frequency-domain sequence $w_f(k')$ and a time-domain sequence $w_t(l')$ of each of eight DMRSs. Based on Table 1, a sequence may be obtained by superposing the frequency-domain sequence $w_f(k')$ and the time-domain sequence $w_t(l')$ on each of the DMRSs corresponding to the eight ports shown in (b) in FIG. 2. FIG. 5 is a diagram of superposing time-domain sequences and frequency-domain sequences on DMRSs of configuration type 1. As shown in FIG. 5, (b) in FIG. 2 is used as an example for description. The DMRSs in the CDM group 0 and the CDM group 1 are included in the figure. For the ports {0, 1, 4, 5} in the CDM group 0, the time-domain sequences of the two DMRSs identified by the ports {0, 1} are the same, that is, are both 1, 1, but the frequency-domain sequences are 1, 1 and 1, -1. Therefore, the port 0 is orthogonal to the port 1 by using the different frequency-domain sequences. The time-domain sequences of the two DMRSs identified by the ports {4, 5} are the same, that is, are both 1, -1, but frequency-domain orthogonal cover codes are 1, 1 and 1, -1. Therefore, the port 4 is orthogonal to the port 5 by using the different frequency-domain sequences, and the ports 0 and 1 are orthogonal to the ports 4 and 5 by using the different time-domain sequences. It may be understood that the ports {2, 3, 6, 7} occupy another group of frequency domain resources, and are frequency-division orthogonal to the ports {0, 1, 4, 5}. A code-division orthogonal manner of the ports {2, 3, 6, 7} is the same as that of the ports {0, 1, 4, 5}.

**Table 2: Parameters of PUSCH DMRSs of configuration type 2**

| $p$ | CDM group $\lambda$ | $\Delta$ | $w_f(k')$ | | $w_t(l')$ | |
| --- | --- | --- | --- | --- | --- | --- |
| | | | $k' = 0$ | $k' = 1$ | $l' = 0$ | $l' = 1$ |
| 0 | 0 | 0 | +1 | +1 | +1 | +1 |
| 1 | 0 | 0 | +1 | -1 | +1 | +1 |
| 2 | 1 | 2 | +1 | +1 | +1 | +1 |
| 3 | 1 | 2 | +1 | -1 | +1 | +1 |
| 4 | 2 | 4 | +1 | +1 | +1 | +1 |
| 5 | 2 | 4 | +1 | -1 | +1 | +1 |
| 6 | 0 | 0 | +1 | +1 | +1 | -1 |
| 7 | 0 | 0 | +1 | -1 | +1 | -1 |
| 8 | 1 | 2 | +1 | +1 | +1 | -1 |
| 9 | 1 | 2 | +1 | -1 | +1 | -1 |
| 10 | 2 | 4 | +1 | +1 | +1 | -1 |
| 11 | 2 | 4 | +1 | -1 | +1 | -1 |

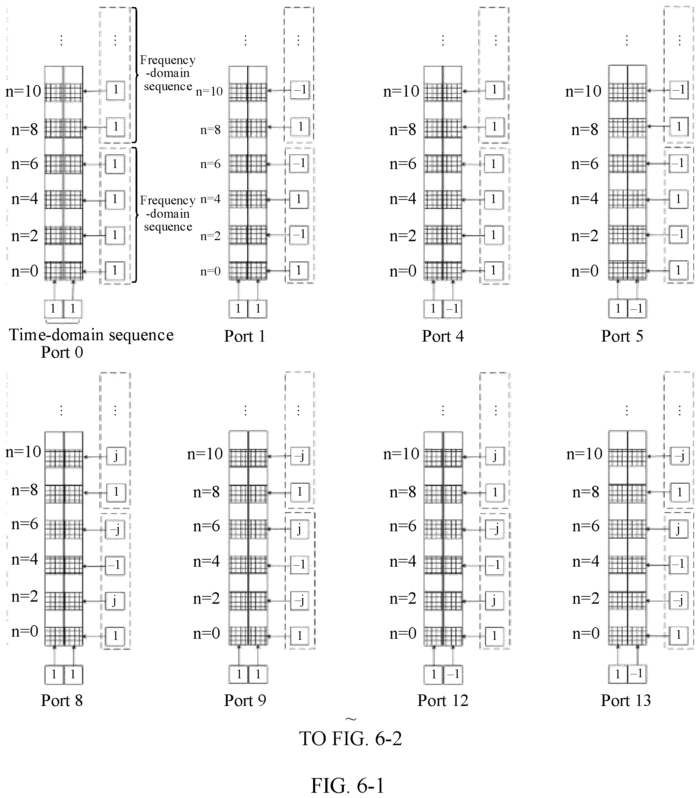

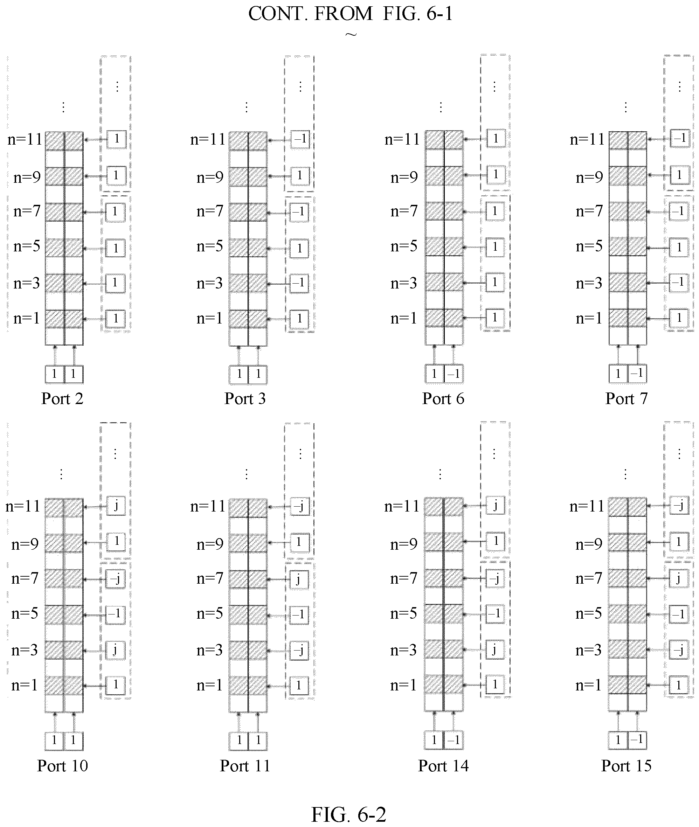

For the parameters of the DMRSs of configuration type 2 that are shown in Table 2, Table 2 shows a frequency-domain sequence $w_f(k')$ and a time-domain sequence $w_t(l')$ of each of 12 DMRSs. Based on Table 2, a sequence may be obtained by superposing the frequency-domain sequence $w_f(k')$ and the time-domain sequence $w_t(l')$ on each of the DMRSs corresponding to the 12 ports shown in (b) in FIG. 3. FIG. 6-1 and FIG. 6-2 are a diagram of superposing time-domain sequences and frequency-domain sequences on DMRSs of configuration type 2. As shown in FIG. 6-1 and FIG. 6-2, (b) in FIG. 3 is used as an example for description. The DMRSs in the CDM group 0, the CDM group 1, and the CDM group 2 are included in the figure. For the ports {0, 1, 6, 7} in the CDM group 0, the time-domain sequences of the two DMRSs identified by the ports {0, 1} are the same, that is, are both 1, 1, but the frequency-domain sequences are 1, 1 and 1, -1. Therefore, the port 0 is orthogonal to the port 1 by using the orthogonal frequency-domain sequences. The time-domain sequences of the two DMRSs identified by the ports {6, 7} are the same, that is, are both 1, -1, but the frequency-domain sequences are 1, 1 and 1, -1. Therefore, the port 6 is orthogonal to the port 7 by using the frequency-domain sequences, and the ports 0 and 1 are orthogonal to the ports 6 and 7 by using the time-domain sequences. It may be understood that the ports {2, 3, 8, 9} and the ports {4, 5, 10, 11} occupy another group of frequency domain resources, and are frequency-division orthogonal to the ports {0, 1, 6, 7}. A code-division orthogonal manner of the ports {2, 3, 8, 9} and the ports {4, 5, 10, 11} is the same as that of the ports {0, 1, 6, 7}. For another example, when one symbol is configured, based on Table 2, a sequence may be obtained by superposing a frequency-domain sequence $w_f(k')$ and a time-domain sequence $w_t(l')$ on each of the DMRSs corresponding to the six ports shown in (a) in FIG. 3. FIG. 6(b) is a diagram of superposing frequency-domain sequences on DMRSs of configuration type 2. As shown in FIG. 6(b), (a) in FIG. 3 is used as an example for description. The DMRSs in the CDM group 0, the CDM group 1, and the CDM group 2 are included in the figure. For the ports {0, 1} in the CDM group 0, the frequency-domain sequences of the two DMRSs identified by the ports {0, 1} are 1, 1, and 1, -1. Therefore, the port 0 is orthogonal to the port 1 by using the orthogonal frequency-domain sequences. It may be understood that the ports {2, 3} and the ports {4, 5} occupy another group of frequency domain resources, and are frequency-division orthogonal to the ports {0, 1}. A code-division orthogonal manner of the ports {2, 3} and the ports {4, 5} is the same as that of the ports {0, 1}.

(5) Reference signal correlation

It is assumed that length-N sequences $a(0)$, $a(1)$, ..., $a(N - 1)$ and $b(0)$, $b(1)$, ... , $b(N - 1)$ are given, and a normalized cross-correlation value between the sequences is defined as $\left| \dfrac{\sum_{i=0}^{N-1} a(i) \cdot b^*(i)}{\sqrt{\sum_{i=0}^{N-1} |a(i)|^2} \cdot \sqrt{\sum_{i=0}^{N-1} |b(i)|^2}} \right|$ , where both

$a(i)$ and $b(i)$ are complex numbers, $b^*(i)$ represents a conjugate of the complex number $b(i)$, $|a(i)|$ represents a modulus of the sequence element $a(i)$, and $|b(i)|$ represents a modulus of the sequence element $b(i)$.

If $\left| \dfrac{\sum_{i=0}^{N-1} a(i) \cdot b^*(i)}{\sqrt{\sum_{i=0}^{N-1} |a(i)|^2} \cdot \sqrt{\sum_{i=0}^{N-1} |b(i)|^2}} \right| = 0$ is satisfied, the sequences $a(0)$, $a(1)$, ..., $a(N - 1)$ and $b(0)$, $b(1)$, ..., $b(N - 1)$ are orthogonal. For example, a sequence 1, 1, 1, 1 and a sequence 1, -1, 1, -1 satisfy that the cross-correlation value is 0, and the sequence 1, 1, 1, 1 is orthogonal to the sequence 1, -1, 1, -1. For another example, a sequence 1, j, -1, j and a sequence 1, -j, -1, j satisfy that the cross-correlation value is 0, and the sequence 1, j, -1, j is also orthogonal to the sequence 1, -j, -1, j.

In an OFDM system, a sequence is carried on subcarriers to obtain a reference signal. Assuming that a channel delay spread is not considered, from a perspective of a receiving end, a cross-correlation value between reference signals is 0, and the reference signals are orthogonal to each other. However, in an actual system, the delay spread of the channel needs to be considered. From the perspective of the receiving end, the cross-correlation value between the reference signals is no longer 0, and correlation deteriorates. In other words, strict orthogonality between the reference signals cannot be ensured due to the delay spread of the channel. With development of mobile communication and emergence of a new service, a rate needs to be increasingly high. Increasing a quantity of transport layers for multi-user pairing helps increase a system throughput. Therefore, when a quantity of transport layers of a cell is large, more DMRSs need to be supported.

Based on the foregoing descriptions, to better understand a communication method proposed in this application, the following first describes a network architecture to which an embodiment of this application is applied.

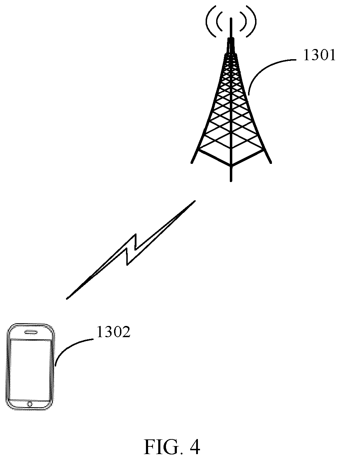

FIG. 4 is a diagram of a network architecture according to an embodiment of this application. As shown in FIG. 4, the network architecture may include a network device 1301 and a terminal device 1302. The terminal device 1302 may be connected to the network device 1301 in a wireless manner, and may access a core network via the network device 1301. The terminal device 1302 may be located at a fixed position, or may be mobile.

The network device 1301 may be an entity configured to transmit or receive a signal, or may be a device configured to communicate with a terminal device. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like. This is not limited in embodiments of this application. The network device may be a device in a wireless network, for example, a radio access network (radio access network, RAN) node that enables a terminal to access the wireless network. Currently, some examples of the RAN node include a base station, a next-generation base station gNB, a transmission reception point (transmission reception point, TRP), an evolved NodeB (evolved NodeB, eNB), a home base station, a baseband unit (baseband unit, BBU), an access point (access point, AP) in a Wi-Fi system, or the like. In a network structure, the network device may include a central unit (central unit, CU) node, a distributed unit (distributed unit, DU) node, or a RAN device including the CU node and the DU node.

The terminal device 1302 is an entity that is on a user side and that is configured to receive or transmit a signal, for example, a user equipment, an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a mobile phone (mobile phone), a cellular phone, a cordless phone, a session initiation protocol (session initiation protocol, SIP) phone, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless local loop (wireless local loop, WLL) station, a personal digital assistant (personal digital assistant, PDA), a handheld device with a wireless communication function, a computing device or another processing device connected to a wireless modem, a vehicle-mounted device, a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a wearable device (for example, a smartwatch, a smart band, or a pedometer), a terminal device in a 5G network, a terminal device in a future evolved public land mobile network (public land mobile network, PLMN), or the like. This is not limited in embodiments of this application. The terminal device may be deployed on land, including an indoor, outdoor, handheld, wearable, or vehicle-mounted device; may be deployed on a water surface (for example, on a ship); or may be deployed in the air (for example, on an airplane, a balloon, or a satellite).

By way of example rather than limitation, in embodiments of this application, the terminal may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, intelligent wearable devices include full-featured and large-size devices that can implement complete or partial functions without depending on smartphones, for example, smart watches or smart glasses, and devices that focus on only one type of application and need to be used together with other devices such as smartphones, for example, various smart bands or smart jewelry used for monitoring physical signs. In addition, in embodiments of this application, the terminal may alternatively be a terminal in an internet of things (internet of things, IoT) system. The IoT is an important component of future information technology development, and a main technical feature of the IoT is connecting an object to a network by using a communication technology, to implement an intelligent network in which humans and computers are interconnected and things are interconnected. In embodiments of this application, an IoT technology may implement massive connections, deep coverage, and terminal power saving by using, for example, a narrow band (narrow band, NB) technology. In addition, in embodiments of this application, the terminal may further include a sensor, for example, an intelligent printer, a train detector, or a gas station. Main functions of the terminal include collecting data (by some terminals), receiving control information and downlink data of the network device, sending an electromagnetic wave, and transmitting uplink data to the network device.

The technical solution in embodiments of this application may be applied to various communication systems, for example, a global system for mobile communications (global system for mobile communications, GSM), a code division multiple access (code division multiple access, CDMA) system, a wideband code multiple access (wideband code division multiple access, WCDMA) system, a general packet radio service (general packet radio service, GPRS), an LTE system, an LTE frequency division duplex (frequency division duplex, FDD) system, an LTE time division duplex (time division duplex, TDD) system, a universal mobile telecommunications system (universal mobile telecommunications system, UMTS), an enhanced data rates for GSM evolution (enhanced data rates for GSM evolution, EDGE) system, and a worldwide interoperability for microwave access (worldwide interoperability for microwave access, WiMAX) system. The technical solutions in embodiments of this application may be further applied to another communication system, for example, a public land mobile network (public land mobile network, PLMN) system, a long term evolution-advanced (LTE advanced, LTE-A) system, a 5th generation (5th generation, 5G) mobile communication system, a new radio (new radio, NR) system, a machine-to-machine (machine-to-machine, M2M) system, another future evolved communication system, or the like. This is not limited in embodiments of this application.

In embodiments of this application, the terminal or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal or the network device, or may be a functional module that is in the terminal or the network device and that can invoke the program and execute the program.

It should be noted that a quantity and types of terminals included in the network architecture shown in FIG. 4 are merely an example, and embodiments of this application are not limited thereto. For example, more or fewer terminals that communicate with the network device may be further included. For brevity, details are not described in the accompanying drawings. In addition, in the network architecture shown in FIG. 4, although the network device and the terminal are shown, the application scenario may include but is not limited to the network device and the terminal, for example, may further include a core network node or a device configured to bear a virtualized network function. These are obvious to persons skilled in the art. Details are not described herein.

The following describes, with reference to the network architecture, a communication method provided in embodiments of this application.

**Embodiment 1**

In this embodiment of this application, a quantity of DMRSs may be increased by using longer frequency-domain sequences. A method for increasing a quantity of DMRSs provided in this embodiment of this application is described below by using examples in which a quantity of DMRSs of configuration type 1 is increased and a quantity of DMRSs of configuration type 2 is increased.

1. Quantity of ports of the DMRSs of configuration type 1 is increased.

For the DMRSs of configuration type 1, the quantity of the DMRSs may be increased by using the longer frequency-domain sequences, and it can be ensured that the DMRSs are orthogonal. For example, FIG. 5 is a diagram of superposing time-domain orthogonal cover codes and frequency-domain orthogonal cover codes on the DMRSs of configuration type 1. The time-domain orthogonal cover codes may be understood as orthogonal time-domain sequences, and the frequency-domain orthogonal cover codes may be understood as orthogonal frequency-domain sequences. FIG. 5 corresponds to FIG. 2. FIG. 2 is a configuration diagram of a time-frequency resource of the DMRSs of configuration type 1 in FIG. 5. When two symbols are configured for the DMRSs, length-2 orthogonal frequency-domain sequences and length-2 orthogonal time-domain sequences are used, and a system may support multiplexing of a maximum of eight orthogonal DMRSs. When a length of the frequency-domain sequence is 2, there are two orthogonal frequency-domain sequences: 1, 1 and 1, -1. When the length of the frequency-domain sequence is increased, the quantity of DMRSs may be increased. For example, length-4 frequency-domain sequences and length-2 time-domain sequences are used, and the system may support multiplexing of a maximum of 16 orthogonal DMRSs. FIG. 6-1 and FIG. 6-2 are another diagram of superposing time-domain orthogonal cover codes and frequency-domain orthogonal cover codes on the DMRSs of configuration type 1 according to an embodiment of this application. Compared with FIG. 5, in FIG. 6-1 and FIG. 6-2, a quantity of DMRSs is increased by increasing a length of a frequency-domain sequence. In FIG. 6-1 and FIG. 6-2, the length of the frequency-domain sequence is 4, and there are four orthogonal frequency-domain sequences. The frequency-domain sequences may be DFT sequences: 1, 1, 1, 1; 1, j, -1, j; 1, -1, 1, -1; and 1, -j, -1, j. 16 orthogonal DMRSs are identified by ports 0 to 15. It may be considered that DMRSs of the ports 0 to 7 in FIG. 5 are DMRSs before the quantity is increased, and DMRSs identified by the ports 8 to 15 are added. The ports 0 to 15 are identified to distinguish between different DMRSs, or another identification method may be used. The port number is only a number, and the number may be changed or exchanged.

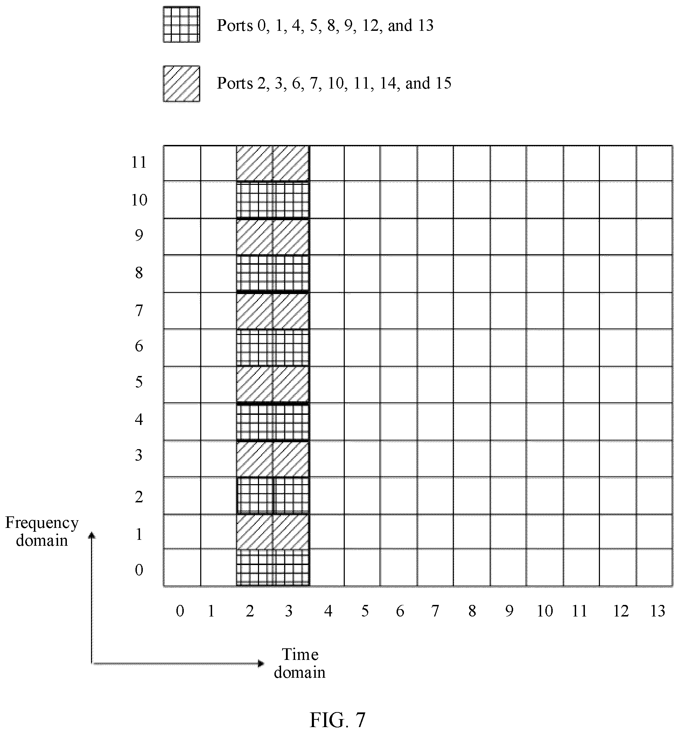

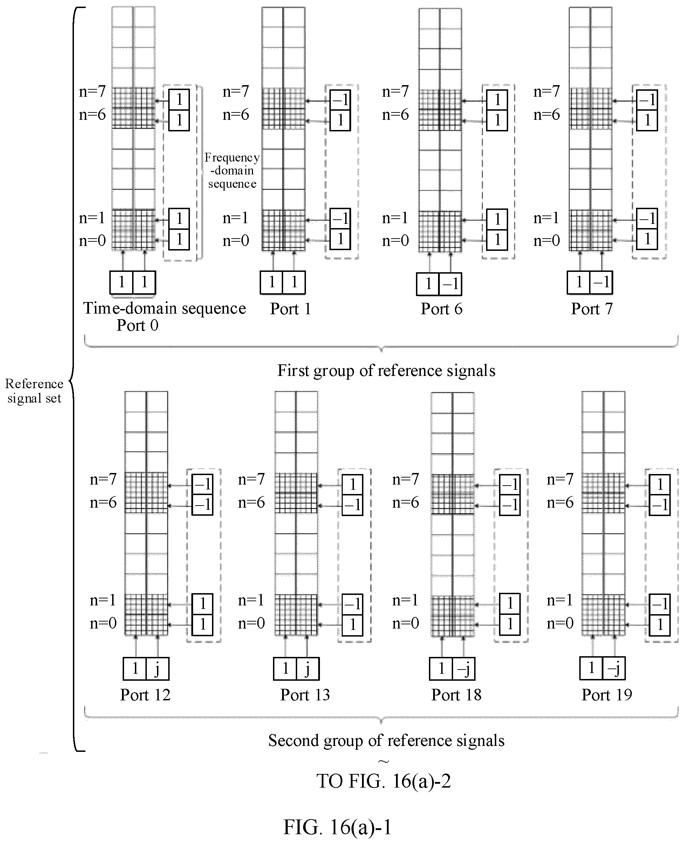

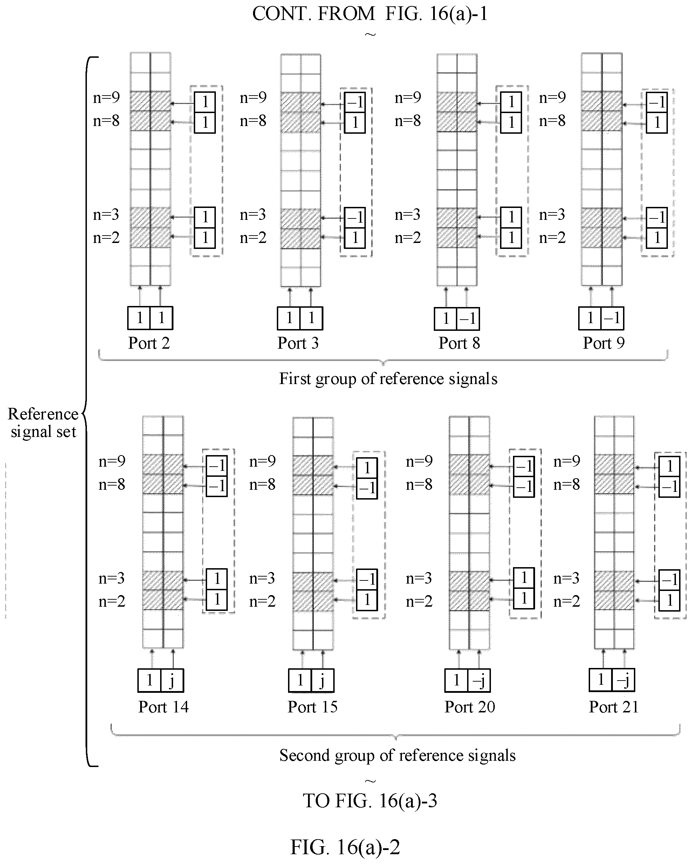

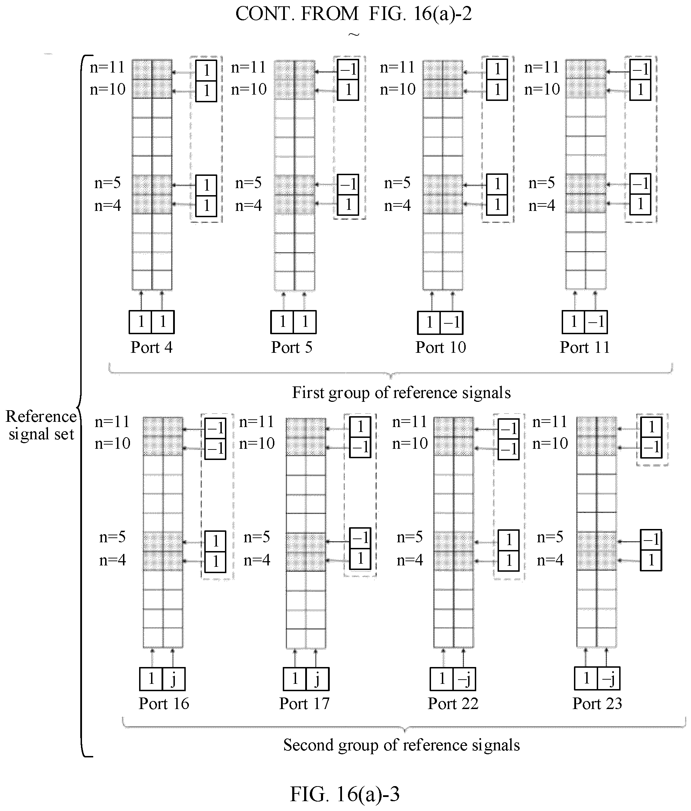

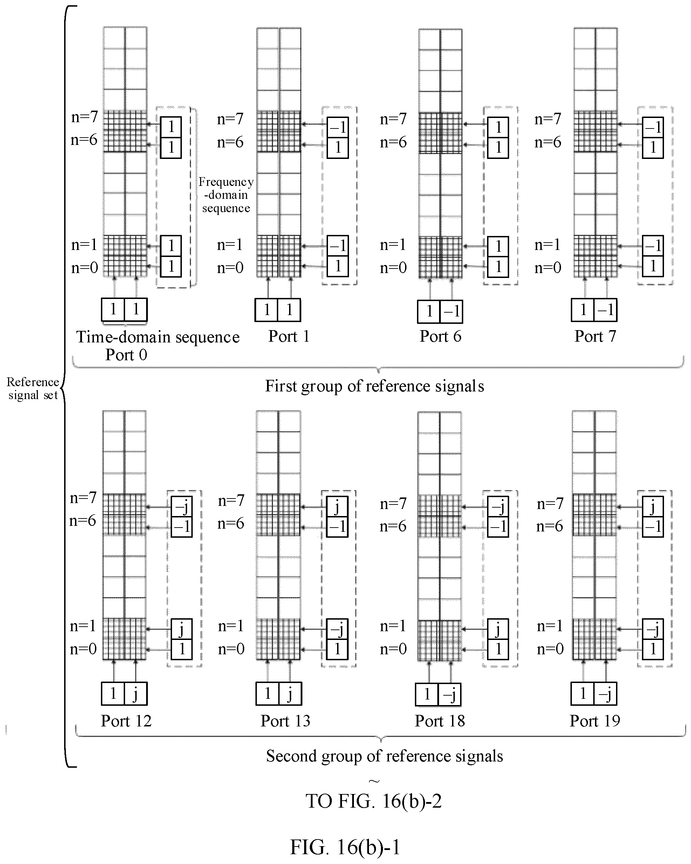

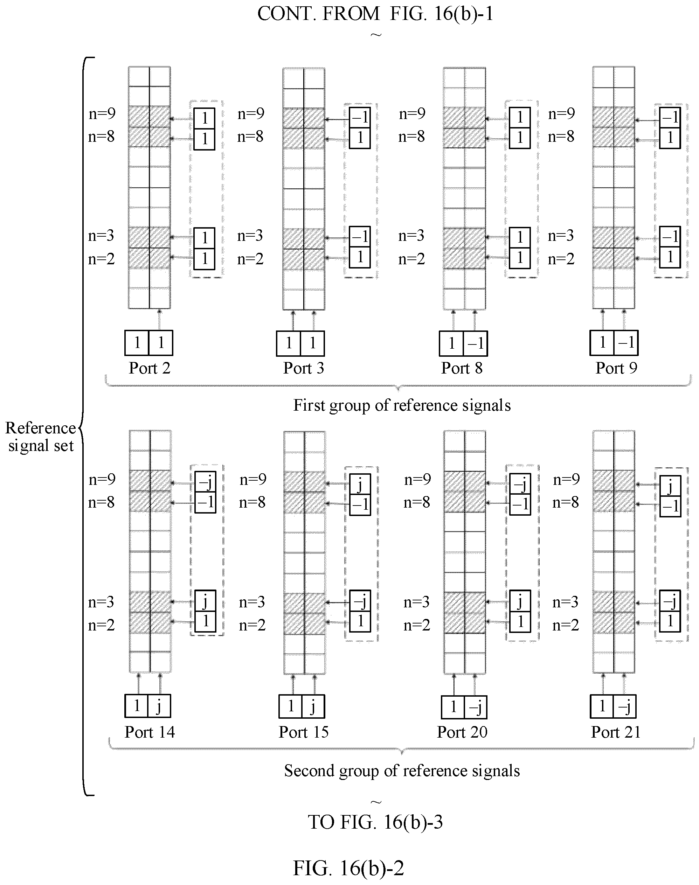

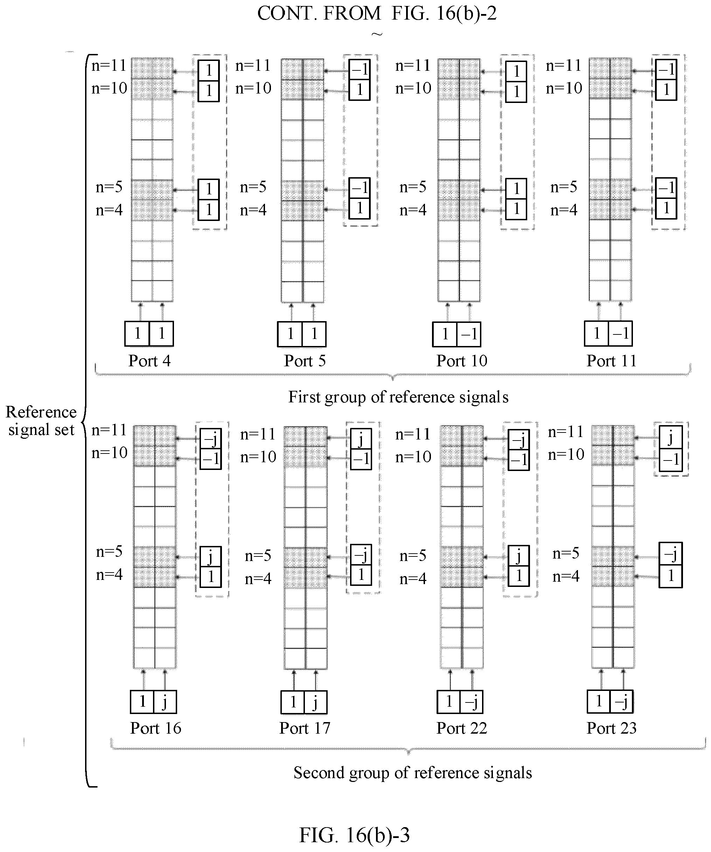

FIG. 7 is a diagram of a time-frequency resource of DMRSs that are of configuration type 1 and that are obtained by using length-4 orthogonal frequency-domain sequences. As shown in FIG. 7, 16 DMRSs obtained by using the length-4 orthogonal frequency-domain sequences are identified by port numbers 0 to 15. Eight DMRSs identified by the port numbers {0, 1, 4, 5, 8, 9, 12, 13} belong to a same CDM group, occupy a same time-frequency resource, and occupy even-numbered subcarriers in frequency domain. Eight DMRSs identified by the port numbers {2, 3, 6, 7, 10, 11, 14, 15} belong to a same CDM group, occupy a same time-frequency resource, and occupy odd-numbered subcarriers in frequency domain.

2. Quantity of ports of the DMRSs of configuration type 2 is increased.

For the DMRSs of configuration type 2, the quantity of DMRSs may also be increased by using longer orthogonal frequency-domain sequences, and it can be ensured that the DMRSs are orthogonal.

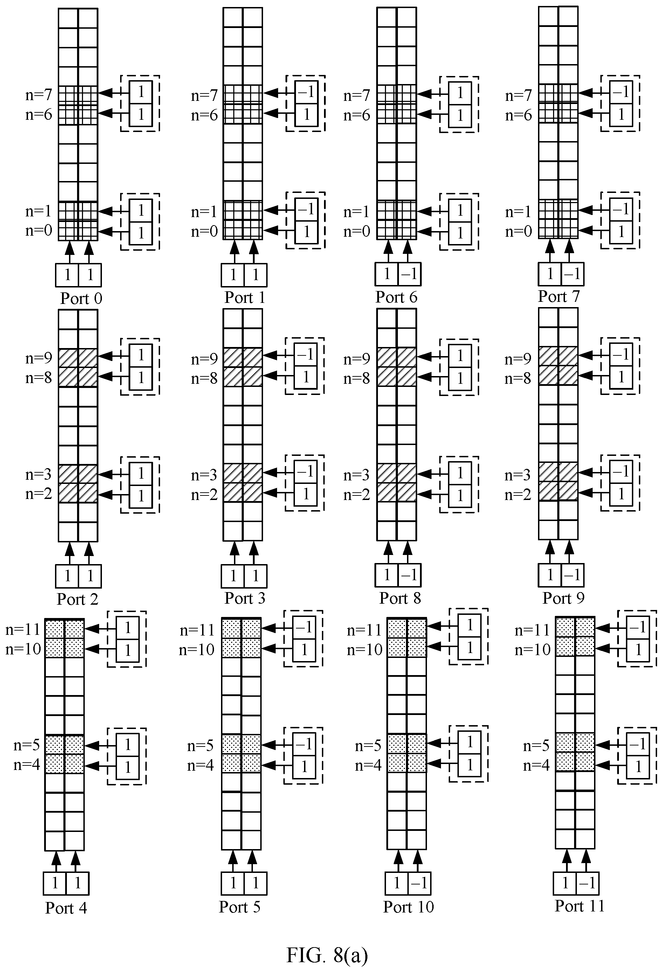

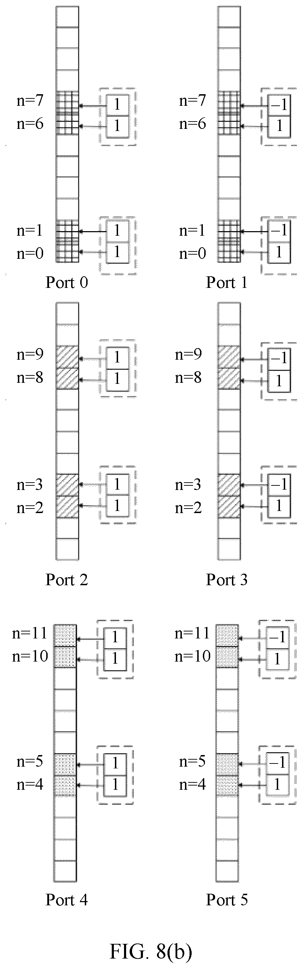

For example, FIG. 8(a) and FIG. 8(b) are a diagram of superposing time-domain orthogonal cover codes and frequency-domain orthogonal cover codes on the DMRSs of configuration type 2. FIG. 8(a) indicates that two symbols are configured for the DMRSs, that is, the DMRSs occupy the two symbols. FIG. 8(b) indicates that one symbol is configured for the DMRSs, that is, the DMRSs occupy the symbol. Refer to FIG. 8(a). When the two symbols are configured for the DMRSs, length-2 orthogonal frequency-domain sequences and length-2 orthogonal time-domain sequences are used, and a system may support multiplexing of a maximum of 12 orthogonal DMRSs. When a length of the frequency-domain sequence is 2, there are two orthogonal frequency-domain sequences: 1, 1 and 1, -1. FIG.

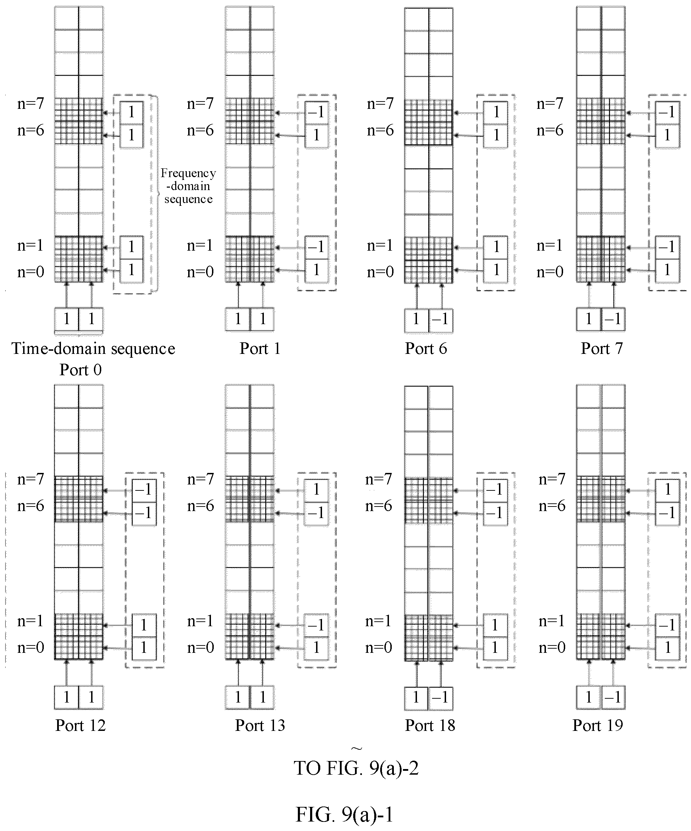

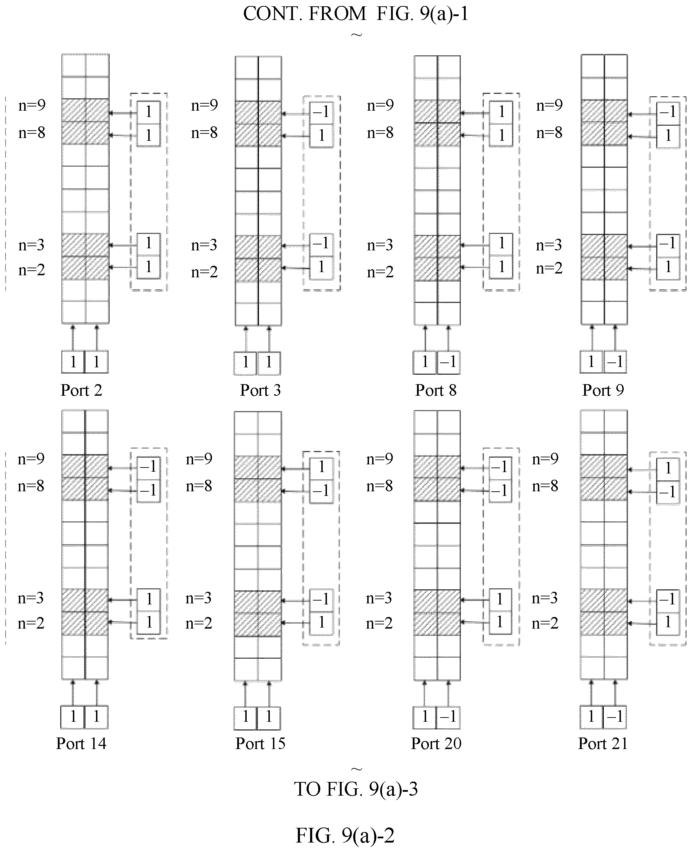

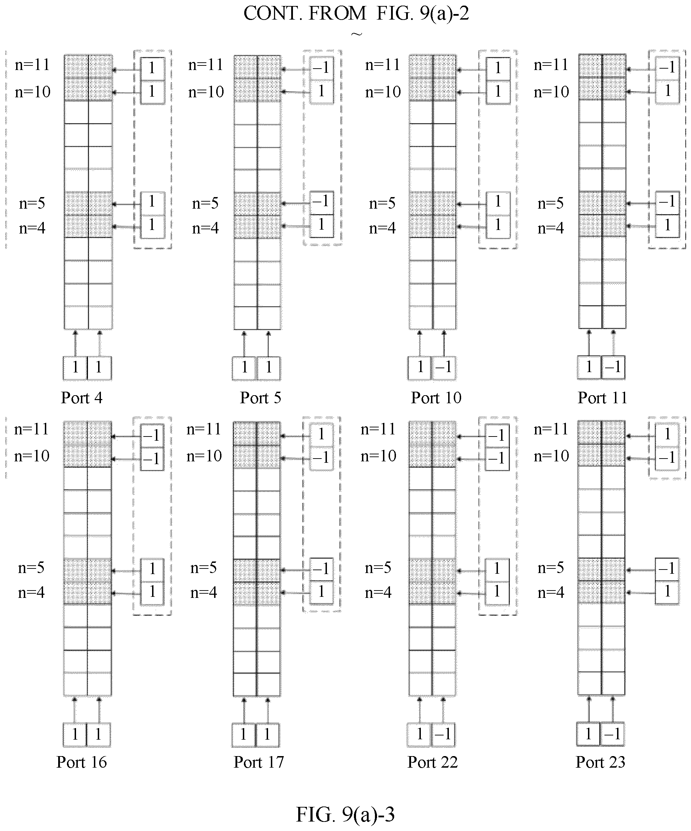

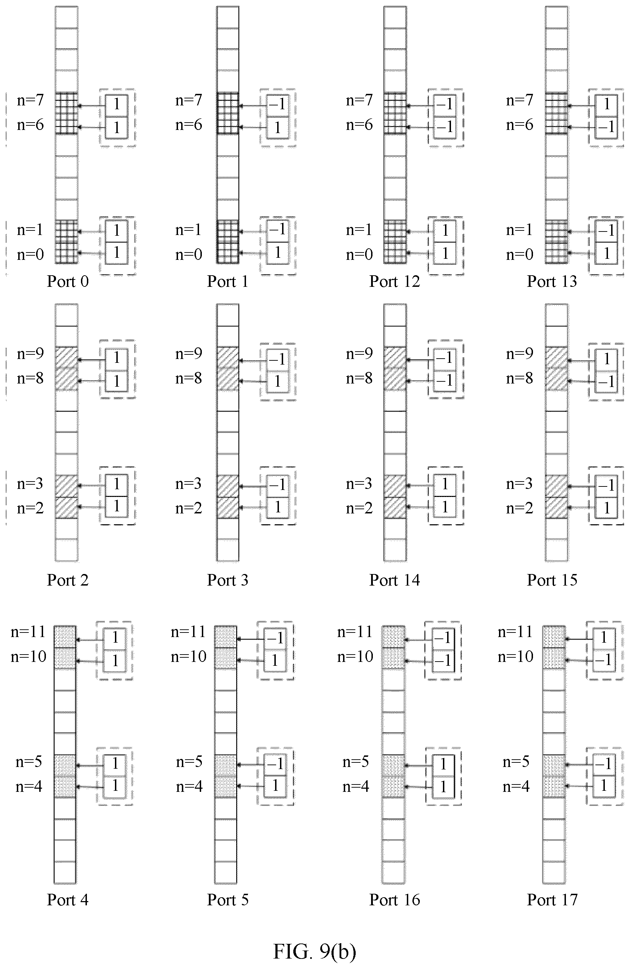

9(a)-1 to FIG. 9(b) are another diagram of superposing time-domain orthogonal cover codes and frequency-domain orthogonal cover codes on the DMRSs of configuration type 2. FIG. 9(a)-1 to FIG. 9(a)-3 indicate that two symbols are configured for the DMRSs, that is, the DMRSs occupy the two symbols. FIG. 9(b) indicates that one symbol is configured for the DMRSs, that is, the DMRSs occupy the symbol. Refer to FIG. 9(a)-1 to FIG. 9(a)-3. Length-4 orthogonal frequency-domain sequences and length-2 orthogonal time-domain sequences are used, and the system may support multiplexing of a maximum of 24 orthogonal DMRSs. When a length of the frequency-domain sequence is 4, there are four orthogonal frequency-domain sequences. The frequency-domain sequence may be Walsh sequences: 1, 1, 1, 1; 1, 1, -1, -1; 1, -1, 1, -1; and 1, -1, -1, 1. In FIG. 8(a), 24 orthogonal DMRSs are identified by ports 0 to 23. It may be understood that when the two symbols are configured for the DMRSs, for the DMRSs of configuration type 2, the length of the frequency-domain sequence in FIG. 9(a)-1 to FIG. 9(a)-3 is doubled that in FIG. 8(a), and an obtained quantity of DMRS ports is doubled. It may be considered that the DMRSs of the port numbers 0 to 11 in FIG. 9(a)-1 to FIG. 9(a)-3 are DMRSs before the quantity is increased, and the DMRSs of the port numbers 12 to 23 are added DMRSs.

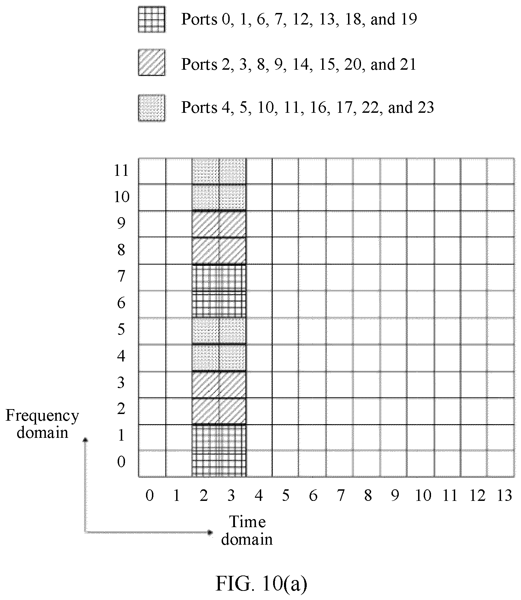

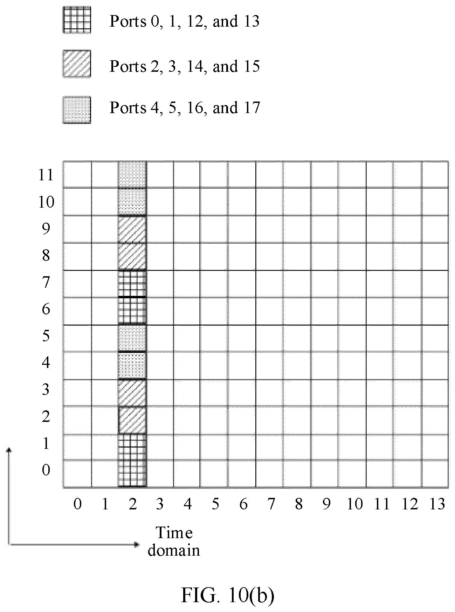

FIG. 10(a) and FIG. 10(b) are a diagram of a time-frequency resource of DMRSs that are of configuration type 2 and that are obtained by using length-4 orthogonal frequency-domain sequences. FIG. 10(a) indicates that two symbols are configured for the DMRSs, and FIG. 10(b) indicates that one symbol is configured for the DMRSs.

As shown in FIG. 10(a), 24 DMRSs obtained by using length-4 orthogonal frequency-domain sequences are identified by port numbers 0 to 23. Eight DMRSs identified by the port numbers {0, 1, 6, 7, 12, 13, 18, 19} belong to a same CDM group, occupy a same time-frequency resource, and occupy subcarriers numbered 0, 1, 6, 7... in frequency domain. Eight DMRSs identified by the port numbers {2, 3, 8, 9, 14, 15, 20, 21} belong to a same CDM group, occupy a same time-frequency resource, and occupy subcarriers numbered 2, 3, 8, 9, ... in frequency domain. Eight DMRSs identified by the port numbers {4, 5, 10, 11, 16, 17, 22, 23} belong to a same CDM group, occupy a same time-frequency resource, and occupy subcarriers numbered 4, 5, 10, 11, ... in frequency domain.

For example, when one symbol is configured for the DMRSs, length-2 orthogonal frequency-domain sequences are used, and the system may support multiplexing of a maximum of six orthogonal DMRSs. When a length of the frequency-domain sequence is 2, there are two orthogonal frequency-domain sequences: 1, 1 and 1, -1. Refer to FIG. 8(b).

Length-4 orthogonal frequency-domain sequences are used, and the system may support multiplexing of a maximum of 12 orthogonal DMRSs. When the length of the frequency-domain sequence is 4, there are four orthogonal frequency-domain sequences. The frequency-domain sequence may be Walsh sequences: 1, 1, 1, 1; 1, 1, -1, -1; 1, -1, 1, -1; and 1, -1, -1, 1. Refer to FIG. 9(b). The 12 orthogonal DMRSs are identified by the ports 0, 1, 2, 3, 4, 5, 12, 13, 14, 15, 16, 17.

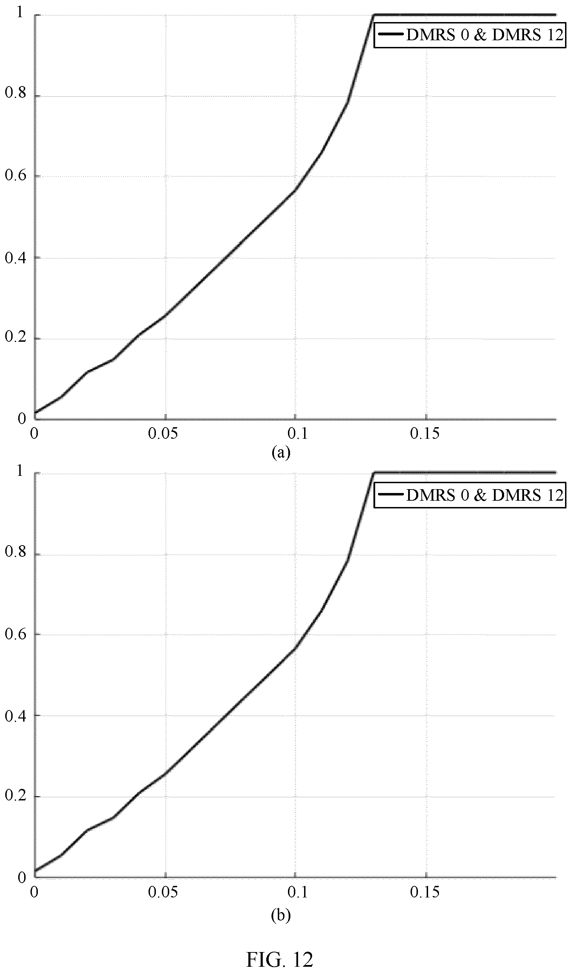

As shown in FIG. 10(b), 12 DMRSs obtained by using length-4 orthogonal frequency-domain sequences are identified by port numbers 0 to 11. Four DMRSs identified by the port numbers {0, 1, 12, 13} belong to a same CDM group, occupy a same time-frequency resource, and occupy subcarriers numbered 0, 1, 6, 7, ... in frequency domain. Four DMRSs identified by the port numbers {2, 3, 14, 15} belong to a same CDM group, occupy a same time-frequency resource, and occupy subcarriers numbered 2, 3, 8, 9, ... in frequency domain. Four DMRSs identified by the port numbers {4, 5, 16, 17} belong to a same CDM group, occupy a same time-frequency resource, and occupy subcarriers numbered 4, 5, 10, 11, ... in frequency domain.

According to the foregoing method provided in this embodiment of this application, the quantity of DMRSs can be increased, so that more layers of data transmission can be performed, thereby satisfying a requirement for high-rate transmission.

**Embodiment 2**

This embodiment of this application further provides a method for improving correlation between DMRSs. The correlation between the DMRSs reflects a level of interference between the DMRSs. When the correlation between the DMRSs is better, the interference between the DMRSs is weaker. The correlation between the DMRSs may be embodied by using a cross-correlation value.

In the foregoing embodiment of this application, DMRSs of configuration type 1 are used, and two symbols are configured for the DMRSs to support 16 DMRSs. Refer to FIG. 6-1 and FIG. 6-2. There are two groups of code-division multiplexed DMRSs. One group of code division multiplexed DMRSs is used as an example. Eight DMRSs identified by port numbers {0, 1, 4, 5, 8, 9, 12, 13} occupy a same time-frequency resource. In addition, code division multiplexing between the eight DMRSs is ensured by superimposing length-2 orthogonal time-domain orthogonal sequences 1, 1 and 1, -1 and length-4 orthogonal frequency-domain sequences 1, 1, 1, 1; 1, j, -1, j; 1, -1, 1, -1; and 1, -j, -1, j.

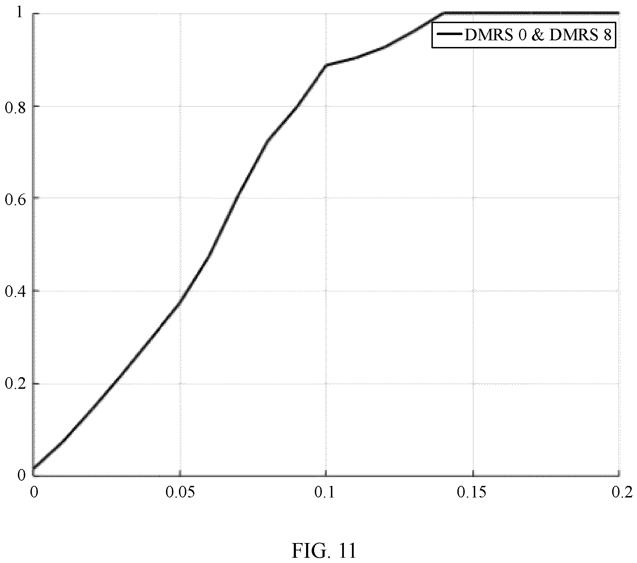

FIG. 11 is a cumulative distribution function (cumulative distribution function, CDF) of cross-correlation (cross-correlation) that is obtained after a channel delay spread is considered and that is between DMRSs that are of configuration type 1 and that are obtained by superposing length-4 frequency-domain orthogonal cover codes. As shown in FIG. 11, a horizontal axis represents a cross-correlation value between the DMRSs, a vertical axis represents a probability value, and a curve is a distribution curve of a probability occupied by a cross-correlation value between a DMRS (denoted as a DMRS 0) identified by a port 0 and a DMRS (denoted as a DMRS 8) identified by a port 8.

It can be learned that, when the cross-correlation value is less than or equal to 0.05, a cumulative probability value on the curve is 0.38. In other words, a cumulative probability that the cross-correlation value between the DMRS 0 and the DMRS 8 is less than or equal to 0.05 is 38%. Alternatively, it can be learned that, when the cross-correlation value is less than or equal to 0.1, the cumulative probability value on the curve is 0.9. In other words, the cumulative probability that the cross-correlation value between the DMRS 0 and the DMRS 8 is less than or equal to 0.1 is 90%.

Because a cumulative probability that the cross-correlation value between the DMRSs is less than or equal to a specific value is smaller, and the cross-correlation value is larger, the correlation is poorer. It can be learned from the figure that the cumulative probability, represented by the curve, that the cross-correlation value between the DMRSs is less than or equal to 0.1 can still be improved.

In the foregoing embodiment of this application, DMRSs of configuration type 2 are used, and two symbols are configured for the DMRSs to support 24 DMRSs. Refer to FIG. 9(a)-1 to FIG. 9(a)-3. There are three groups of code-division multiplexed DMRSs. One group of code-division multiplexed DMRSs is used as an example. Eight DMRSs identified by port numbers {0, 1, 6, 7, 12, 13, 18, 19} occupy a same time-frequency resource. In addition, code division multiplexing between the eight DMRSs is ensured by superposing length-2 orthogonal time-domain orthogonal sequences 1, 1 and 1, -1 and length-4 orthogonal frequency-domain sequences 1, 1, 1, 1; 1, 1, -1, -1; 1, -1, 1, -1; and 1, -1, -1, 1.

DMRSs of configuration type 2 are used, and one symbol is configured for the DMRSs to support 12 DMRSs. Refer to FIG. 9(b). There are three groups of code-division multiplexed DMRSs. One group of code-division multiplexed DMRSs is used as an example. Four DMRSs identified by port numbers {0, 1, 12, 13} occupy a same time-frequency resource. In addition, code division multiplexing between the four DMRSs is ensured by superposing length-4 orthogonal frequency-domain sequences 1, 1, 1, 1; 1, 1, -1, -1; 1, -1, 1, -1; and 1, -1, -1, 1.

FIG. 12 is a cumulative distribution function (cumulative distribution function, CDF) of cross-correlation (cross-correlation) that is obtained after a channel delay spread is considered and that is between DMRSs that are of configuration type 2 and that are obtained by superposing length-4 frequency-domain orthogonal cover codes. FIG. 12(a) indicates that two symbols are configured for the DMRSs, and FIG. 12(b) indicates that one symbol is configured for the DMRSs.

As shown in FIG. 12(a), a horizontal axis represents a cross-correlation value between the DMRSs, a vertical axis represents a probability value, and a curve is a distribution curve of a probability occupied by a cross-correlation value between a DMRS (denoted as a DMRS 0) identified by a port 0 and a DMRS (denoted as a DMRS 12) identified by a port 12.

It can be learned that, when the cross-correlation value is less than or equal to 0.05, a cumulative probability value on the curve is 0.25. In other words, a cumulative probability that the cross-correlation value between the DMRS 0 and the DMRS 12 is less than or equal to 0.05 is 25%. Alternatively, it can be learned that, when the cross-correlation value is less than or equal to 0.1, the cumulative probability value on the curve is 0.58. In other words, the cumulative probability that the cross-correlation value between the DMRS 0 and the DMRS 12 is less than or equal to 0.1 is 58%.

As shown in FIG. 12(b), a horizontal axis represents a cross-correlation value between the DMRSs, a vertical axis represents a probability value, and a curve is a distribution curve of a probability occupied by a cross-correlation value between a DMRS (denoted as a DMRS 0) identified by a port 0 and a DMRS (denoted as a DMRS 12) identified by a port 12 after an increase.

It can be learned that, when the cross-correlation value is less than or equal to 0.05, a cumulative probability value on a dashed-line curve is 0.25. In other words, a cumulative probability that the cross-correlation value between the DMRS 0 and the DMRS 12 is less than or equal to 0.05 is 25%. Alternatively, it can be learned that, when the cross-correlation value is less than or equal to 0.1, the cumulative probability value on the curve is 0.58. In other words, the cumulative probability that the cross-correlation value between the DMRS 0 and the DMRS 12 is less than or equal to 0.1 is 58%.

Because a cumulative probability that the cross-correlation value between the DMRSs is less than or equal to a specific value is smaller, and the cross-correlation value is larger, the correlation is poorer. It can be learned from the figure that the cumulative probability that the cross-correlation value between the DMRSs after the increase is less than or equal to 0.1 can still be improved.

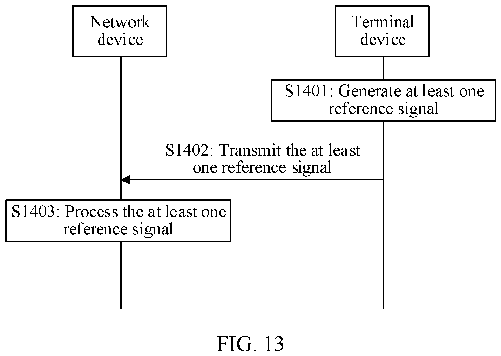

FIG. 13 is a schematic flowchart of a communication method according to an embodiment of this application. In this embodiment, a function performed by a terminal device may alternatively be performed by a module (for example, a chip) in the terminal device, and a function performed by a network device in this application may alternatively be performed by a module (for example, a chip) in the network device. In this embodiment, an example in which a reference signal is a DMRS may be used for description. As shown in FIG. 13, the communication method may include the following steps.

Step S1401: The terminal device generates at least one reference signal.

Optionally, the reference signal may be a DMRS.

For a sequence of each reference signal, an element value *a* in the sequence satisfies:

$$\text{Formula 1: } a = \beta \cdot w_f(k') \cdot w_t(l') \cdot r(Kn + k'),$$

where

$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K-1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ..., $w_t(L-1)$ is L, L is an integer greater than or equal to 2, $r(Kn + k')$ is a complex number, and $n$ is an integer greater than or equal to 0.

Optionally, the element value $a$ mapped to a resource element $(k, l)$ is $a_{k,l}$.

Optionally, the terminal device determines a sequence $r(m)$ of the reference signal. $r(m)$ may also be referred to as a scrambling code sequence, and may be locally stored, or may be obtained according to the following formula: for example,

$$r(m) = \tfrac{1}{\sqrt{2}}(1 - 2 \cdot c(2m)) + j\tfrac{1}{\sqrt{2}}(1 - 2 \cdot c(2m + 1)),$$

where $c(i)$ is a pseudo-random sequence, and the pseudo-random sequence may be defined by a Gold sequence; and m is an integer greater than or equal to 0, and m may be $Kn + k'$.

Optionally, that the terminal device determines a time-frequency resource occupied by the reference signal or a resource configuration type. This may be indicated through higher layer signaling configuration. The resource configuration type of the reference signal may be a configuration type 1 or a configuration type 2.

Optionally, for example, the resource configuration type is the configuration type 1. The element value $a_{k,l}$ is mapped to the resource element $(k, l)$, where $k$ represents a subcarrier index, and $l$ represents an orthogonal frequency division multiplexing OFDM symbol index.

$a_{k,l}$ satisfies:

$$\text{Formula 2: } a_{k,l} = \beta \cdot w_f(k') \cdot w_t(l') \cdot r(Kn + k'),$$

where

values of parameters in Formula 2 are the same as those in Formula 1, and details are not described herein again;

$$\text{Formula 3: } k = T(Kn + k') + \Delta;$$

and

$$\text{Formula 4: } l = \bar{l} + l',$$

where

$\Delta$ is 0 or 1, and $l$ an integer. For example, T = 2, $\Delta$= 0, and a subcarrier index is 0, 2, 4, 6, .... For another example, $l$ = 2, a value of $l'$ ranges from 0 to 1, and a symbol index ranges from 2 to 3.

Optionally, $\beta$ may represent an amplitude, and may be used to satisfy a power requirement for transmitting a signal. $\beta$ is a non-zero value. It may be understood that $\beta$ may be a non-zero integer, for example, $\beta$=1. $\beta$ may also be a non-zero complex number, and is represented as $\beta$=a+bj, where a and b are real numbers, for example, $\beta$=2, $\beta$=2+j, or $\beta$= 1j.

Optionally, L may be a maximum quantity of symbols occupied by the reference signal, and may be indicated by using signaling. For example, L = 2.

Optionally, the length K of the frequency-domain sequence is an integer, for example, K=4.

The reference signal generated by the terminal device may belong to a reference signal set. All reference signals in the reference signal set occupy a same time-frequency resource. To be specific, the reference signals in the reference signal set occupy same subcarriers in frequency domain, and occupy a same symbol in time domain. FIG. 7 may be used as an example to describe a meaning that all the reference signals in the reference signal set occupy the same time-frequency resource.

The time-frequency resource may include a plurality of resource elements ($k$, $l$), and one resource element is one RE, that is, a small grid in FIG. 7 represents one resource element, where $k$ represents a subcarrier index, and $l$ represents an orthogonal frequency division multiplexing OFDM symbol index. For example, one RB is allocated to the DMRSs. Refer to FIG. 7. The DMRSs occupy six subcarriers in frequency domain, and the DMRSs occupy two symbols in time domain. One resource element refers to one subcarrier in frequency domain and one symbol in time domain. The time-frequency resource includes 12 resource elements, and ($k$, $l$) is used to identify the resource element. For example, (0,2) identifies a resource element with the subcarrier index $k = 0$ and the symbol index $l = 2$.

In FIG. 7, reference signals identified by the ports {0, 1, 4, 5, 8, 9, 12, 13} are shown by using grid lines. It can be learned that resource elements occupied by the reference signals identified by the ports {0, 1, 4, 5, 8, 9, 12, 13} are a resource element (0,2), a resource element (0,3), a resource element (2,2), a resource element (2,3), a resource element (4,2), a resource element (4,3), a resource element (6,2), a resource element (6,3), a resource element (8,2), a resource element (8,3), a resource element (10,2), and a resource element (10,3). The eight DMRSs may be used as one reference signal set.

In the foregoing example, $\Delta$ may be 0, the value range of the subcarrier index k is 0, 2, 4, 6, ..., the value of $\bar{l}$ may be 2, the value of $l'$ ranges from 0 to 1, and the value of $l$ ranges from 2 to 3. To be specific, the reference signals occupy two symbols whose symbol indexes are 2 and 3 in time domain. For another example, the reference signal set includes eight different reference signals. $\Delta$ may be 1, the value range of the subcarrier index k is 1, 3, 5, 7, ..., the value of $\bar{l}$ may be 2, the value range of $l'$ is 0 and 1, and the value range of $l$ is 2 and 3. To be specific, the reference signals occupy two symbols whose symbol indexes are 2 and 3 in time domain. For a pattern of the time-frequency resource occupied by the eight different reference signals, refer to the reference signals identified by the ports {2, 3, 6, 7, 10, 11, 14, 15} in FIG. 7.

Optionally, any two reference signals in the reference signal set correspond to a same sequence $r(m)$.

Optionally, for any two reference signals in the reference signal set, corresponding frequency-domain sequences are orthogonal, and/or corresponding time-domain sequences are orthogonal. To be specific, the reference signals are ensured to be orthogonal to each other by superposing different frequency-domain sequences and/or time-domain sequences. For example, frequency-domain sequences superposed on the two reference signals are 1, 1, 1, 1 and 1, -1, 1, - 1. The frequency-domain sequences 1, 1, 1, 1 and 1, -1, 1, -1 are orthogonal to each other, so that the two reference signals can also be ensured to be orthogonal to each other. For another example, time-domain sequences superposed on the two reference signals are 1, 1 and 1, -1. The time-domain sequences 1, 1 and 1, -1 are orthogonal to each other, so that the two reference signals can also be ensured to be orthogonal to each other. For another example, time-domain sequences superposed on the two reference signals are 1, 1 and 1, -1, and the time-domain sequences 1, 11 and 1, -1 are orthogonal to each other; and superposed frequency-domain sequences are 1, 1, 1, 1 and 1, -1, 1, -1, and the frequency-domain sequences 1, 1, 1, 1 and 1, -1, 1, -1 are orthogonal to each other, so that the two reference signals can also be ensued to be orthogonal to each other.

Optionally, the frequency-domain sequence $w_f(0)$, $w_f(1)$, ..., $w_f(K-1)$ includes a first frequency-domain sequence $w_f(0)$, $w_f(1)$, ..., $w_f(K/2 - 1)$ and a second frequency-domain sequence $w_f(K/2)$, $w_f\left(\frac{K}{2} + 1\right)$, ..., $w_f(K - 1)$. In other words, the first half of the frequency-domain sequence is the first frequency-domain sequence, and the second half of the frequency-domain sequence is the second frequency-domain sequence. Alternatively, the frequency-domain sequence includes the first frequency-domain sequence and the second frequency-domain sequence.

For example, K=4, the frequency-domain sequence $w_f(0)$, $w_f(1)$, ..., $w_f(3)$ is 1, -1, -1, 1, the first frequency-domain sequence $w_f(0)$, $w_f(1)$ is 1, -1, and the second frequency-domain sequence $w_f(2)$, $w_f(3)$ is -1, 1.

Each of at least two groups of reference signals satisfies: Each group includes a plurality of reference signals, and the plurality of reference signals are pairwise orthogonal. In the plurality of reference signals, time-domain sequences of at least two reference signals are the same, and frequency-domain sequences of at least two reference signals are the same. For the reference signals with the same frequency-domain sequences, corresponding time-domain sequences are orthogonal to each other. For the reference signals with the same time-domain sequences, corresponding first frequency-domain sequences are orthogonal to each other, and corresponding second frequency-domain sequences are also orthogonal to each other.

The at least two groups of reference signals include a first group of reference signals and a second group of reference signals, a frequency-domain sequence corresponding to any reference signal in the first group of reference signals and a frequency-domain sequence corresponding to any reference signal in the second group of reference signals are orthogonal to each other, and a time-domain sequence corresponding to any reference signal in the first group of reference signals is different from a time-domain sequence corresponding to any reference signal in the second group of reference signals.

DMRSs of configuration type 1 are used as an example.

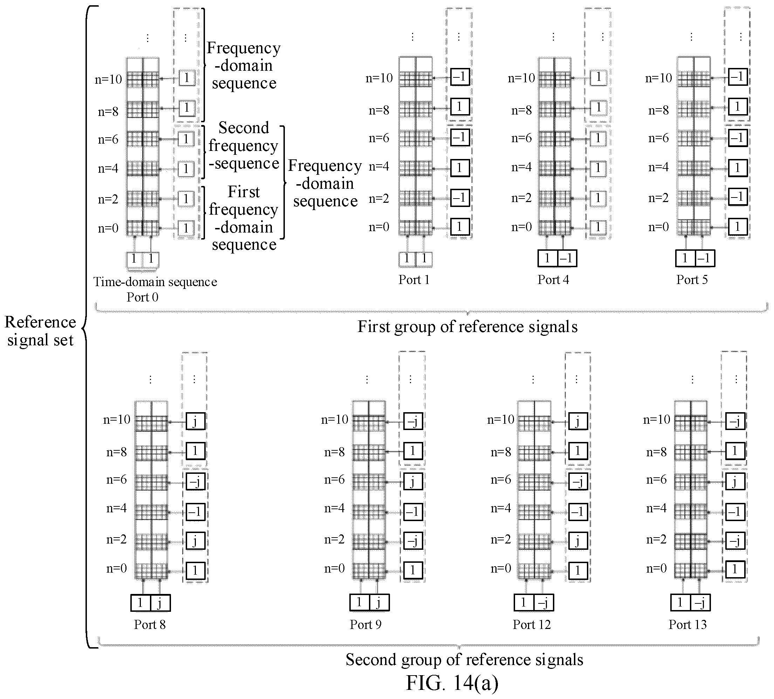

For example, refer to FIG. 14(a). The reference signal set includes eight different reference signals, which are identified by ports {0, 1, 4, 5, 8, 9, 12, 13}. The first group of reference signals includes four reference signals identified by the ports {0, 1, 4, 5}. Frequency-domain sequences $w_f(k')$ and time-domain sequences $w_t(l')$ that are corresponding to the four reference signals are shown in Table 1.

**Table 1**

| Port number | $w_f(k')$ | | | | $w_t(l')$ | |
| --- | --- | --- | --- | --- | --- | --- |
| | $k' = 0$ | $k' = 1$ | $k' = 2$ | $k' = 3$ | $l' = 0$ | $l' = 1$ |
| 0 | +1 | +1 | +1 | +1 | +1 | +1 |
| 1 | +1 | -1 | +1 | -1 | +1 | +1 |
| 4 | +1 | +1 | +1 | +1 | +1 | -1 |
| 5 | +1 | -1 | +1 | -1 | +1 | -1 |

The second group of reference signals includes four reference signals identified by the ports {8, 9, 12, 13}. Frequency-domain sequences $w_f(k')$ and time-domain sequences $w_t(l')$ that are corresponding to the four reference signals are shown in Table 2.

**Table 2**

| Port number | $w_f(k')$ | | | | $w_t(l')$ | |
| --- | --- | --- | --- | --- | --- | --- |
| | $k' = 0$ | $k' = 1$ | $k' = 2$ | $k' = 3$ | $l' = 0$ | $l' = 1$ |
| 8 | +1 | +j | -1 | -j | +1 | +j |
| 9 | +1 | -j | -1 | j | +1 | +j |
| 12 | +1 | +j | -1 | -j | +1 | -j |
| 13 | +1 | -j | -1 | j | +1 | -j |

It can be learned from the foregoing example that, the four reference signals included in the first group of reference signals include at least two reference signals with same time-domain sequences, for example, the DMRSs of the port numbers 0 and 1, and include at least two reference signals with same frequency-domain sequences, for example, the DMRSs of the port numbers 0 and 4. For the reference signals with the same time-domain sequences, the corresponding first frequency-domain sequences are orthogonal to each other, and the corresponding second frequency-domain sequences are also orthogonal to each other. For example, for the DMRSs of the port numbers 0 and 1, the first frequency-domain sequence corresponding to the port number 0 is 1, 1, the first frequency-domain sequence corresponding to the port number 1 is 1, -1, and the two sequences are orthogonal to each other. The second frequency-domain sequence corresponding to the port number 0 is 1, 1, the second frequency-domain sequence corresponding to the port number 1 is 1, -1, and the two sequences are also orthogonal to each other. For the reference signals with the same frequency-domain sequences, corresponding time-domain sequences are orthogonal. For example, for the DMRSs of the port numbers 0 and 4, the time-domain sequences are 1, 1 and 1, -1, and the two time-domain sequences are orthogonal to each other.

The four reference signals included in the second group of reference signals include the at least two reference signals with the same time-domain sequences, for example, the DMRSs of the port numbers 8 and 9, and include the at least two reference signals with the same frequency-domain sequences, for example, the DMRSs of the port numbers 8 and 12. For example, for the DMRSs of the port numbers 8 and 9, the first frequency-domain sequence corresponding to the port number 8 is 1, j, the first frequency-domain sequence corresponding to the port number 9 is 1, j, and the two sequences are orthogonal to each other. The second frequency-domain sequence corresponding to the port number 8 is -1, j, the second frequency-domain sequence corresponding to the port number 9 is -1, j, and the two sequences are also orthogonal to each other. For the reference signals with the same frequency-domain sequences, the corresponding time-domain sequences are orthogonal. For example, for the DMRSs of the port numbers 8 and 12, the time-domain sequences are 1, j and 1, j, and the two time-domain sequences are orthogonal to each other.

In addition, the frequency-domain sequence corresponding to any reference signal in the first group of reference signals and the frequency-domain sequence corresponding to any reference signal in the second group of reference signals are orthogonal to each other, and the time-domain sequence corresponding to any reference signal in the first group of reference signals is different from the time-domain sequence corresponding to any reference signal in the second group of reference signals.

For example, the frequency-domain sequence corresponding to the DMRS of the port number 0 in the first group of reference signals is 1, 1, 1, 1, the frequency-domain sequence corresponding to the port number 8 in the second group of reference signals is 1, -j, -1, j, and the two frequency-domain sequences are orthogonal. The frequency-domain sequence corresponding to the port number 9 in the second group of reference signals is 1, -j, -1, j, and the sequence 1, 1, 1, 1 is also orthogonal to the sequence 1, -j, -1, j. That the frequency-domain sequence corresponding to any reference signal in the first group of reference signals and the frequency-domain sequence corresponding to any reference signal in the second group of reference signals are orthogonal to each other means that the frequency-domain sequence of each reference signal in the first group of reference signals is orthogonal to the frequency-domain sequence of each reference signal in the second group of reference signals. Specifically, no example is given herein.

Further, the time-domain sequence corresponding to any reference signal in the first group of reference signals is different from the time-domain sequence corresponding to any reference signal in the second group of reference signals. Continue to refer to the foregoing example. The time-domain sequences corresponding to the reference signals in the first group of reference signals include 1, 1 and 1, -1, and the time-domain sequences corresponding to the reference signals in the second group of reference signals include 1, j and 1, j. It can be learned that the time-domain sequence of each reference signal in the first group of reference signals is different from the time-domain sequence of each reference signal in the second group of reference signals.

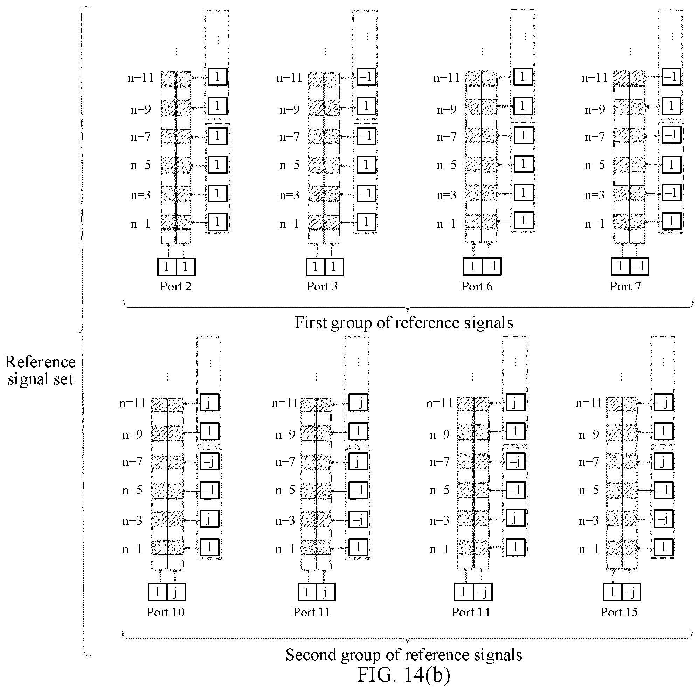

For another example, refer to FIG. 14(b). The reference signal set includes eight different reference signals, which are identified by ports {2, 3, 6, 7, 10, 11, 14, 15}. The first group of reference signals includes four reference signals identified by the ports {2, 3, 6, 7}. Frequency-domain sequences $w_f(k')$ and time-domain sequences $w_t(l')$ corresponding to the four reference signals are shown in Table 3.

**Table 3**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 2 | +1 | +1 | +1 | +1 | +1 | +1 |
| 3 | +1 | -1 | +1 | -1 | +1 | +1 |
| 6 | +1 | +1 | +1 | +1 | +1 | -1 |
| 7 | +1 | -1 | +1 | -1 | +1 | -1 |

The second group of reference signals includes four reference signals identified by the ports {10, 11, 14, 15}. Frequency-domain sequence $w_f(k')$ and time-domain sequences $w_t(l')$ corresponding to the four reference signals are shown in Table 4.

**Table 4**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 10 | +1 | +j | -1 | -j | +1 | +j |
| 11 | +1 | -j | -1 | j | +1 | +j |
| 14 | +1 | +j | -1 | -j | +1 | -j |
| 15 | +1 | -j | -1 | j | +1 | -j |

For the reference signals in FIG. 14(b) and the reference signals in FIG. 14(a), only occupied time-frequency resources are different. The foregoing method is also applicable. To avoid repetition, details are not described herein again. In addition, the port number is only a number, and the number may be changed or exchanged.

For the reference signals obtained based on the frequency-domain sequences $w_f(k')$ and the time-domain sequences $w_t(l')$ in the foregoing tables, when a channel delay spread is considered, correlation between the reference signals can be further improved. A cross-correlation value between the reference signals is small, that is, interference between the reference signals is weak, and good performance can be ensured.

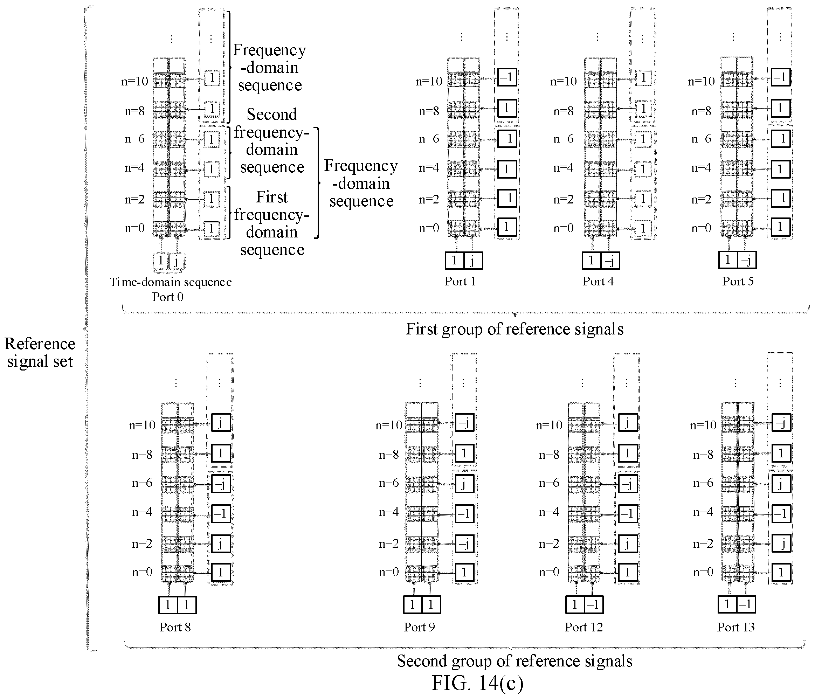

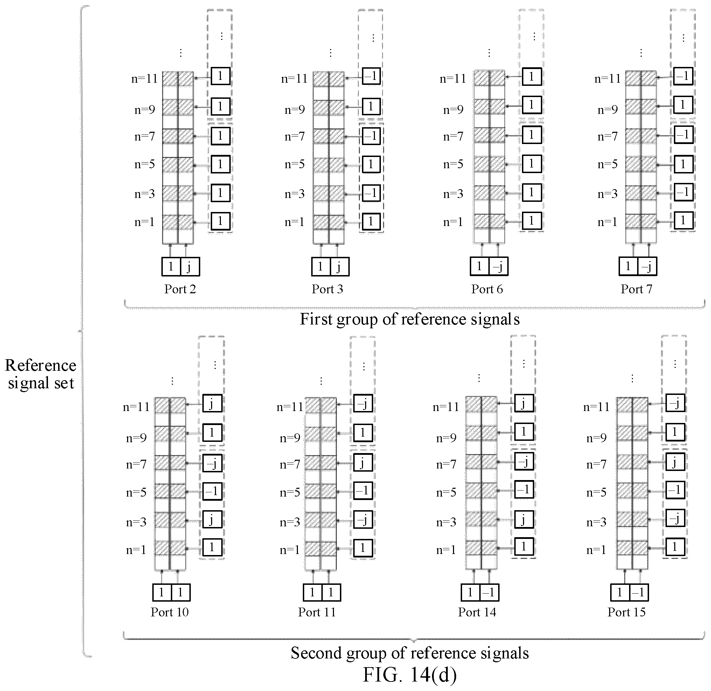

It should be noted that the time-domain sequence corresponding to any reference signal in the first group of reference signals is different from the time-domain sequence corresponding to any reference signal in the second group of reference signals. In this embodiment of this application, the time-domain sequences corresponding to the reference signals in the first group in FIG. 14(a) and FIG. 14(b) include 1, 1 and 1, -1, and the time-domain sequences corresponding to the reference signals in the second group include 1, j and 1, j. This is easily extended to a case in which the time-domain sequences corresponding to the reference signals in the first group are 1, j and 1, j, and the time-domain sequences corresponding to the reference signals in the second group are 1, 1 and 1, -1. Refer to FIG. 14(c) and FIG. 14 (d).

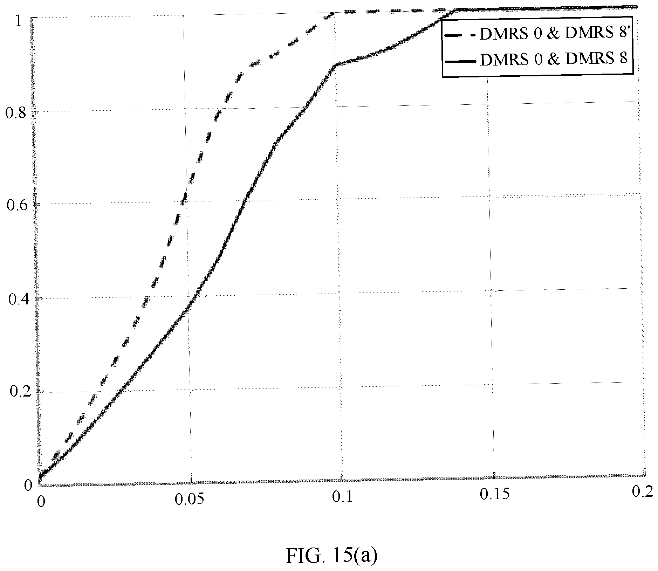

FIG. 15(a) is a cumulative distribution comparison diagram of cross-correlation between DMRSs after a channel delay spread is considered according to an embodiment of this application. As shown in FIG. 15(a), a solid-line curve is the cumulative distribution function of the cross-correlation between the DMRSs that are of configuration type 1 and that are obtained by superposing the length-4 frequency-domain orthogonal cover codes in Embodiment 1 of this application. For specific descriptions of the solid-line curve, refer to FIG. 11. A dashed-line curve represents distribution of a cross-correlation value between DMRSs in this solution. Refer to FIG. 14(a) to FIG. 14(d). The dashed-line curve represents a distribution curve of a probability occupied by the cross-correlation value between the DMRS (denoted as the DMRS 0) identified by the port 0 and the DMRS (denoted as a DMRS 8*) identified by the port 8 in FIG. 14(a).

A larger cross-correlation value between the DMRSs indicates poorer correlation. It can be learned from the figure that cross-correlation value between the DMRSs in Embodiment 1 is approximately distributed between [0, 0.14], and the cross-correlation value between the DMRSs in this solution is approximately distributed between [0, 0.1]. Correlation between the DMRSs in this solution is further improved.

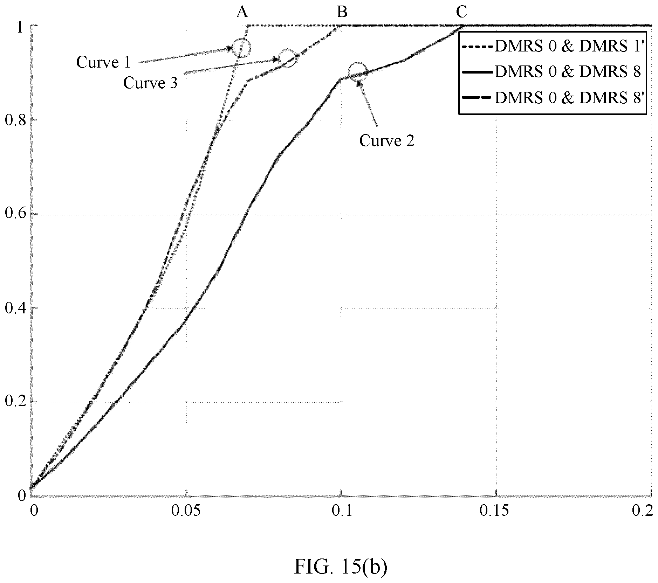

FIG. 15(b) is another cumulative distribution comparison diagram of cross-correlation between DMRSs after a channel delay spread is considered according to an embodiment of this application. Refer to FIG. 5. Before an increase, cross-correlation between a DMRS (denoted as a DMRS 0) identified by the port 0 and a DMRS (denoted as a DMRS 1) identified by the port 1 is the worst. A dashed-line curve represents a distribution curve of a cumulative probability of a cross-correlation value between the DMRS (denoted as the DMRS 0) identified by the port 0 and the DMRS (denoted as the DMRS 1) identified by the port 1 before the increase, as shown by a curve 1. Refer to FIG. 6-1 and FIG. 6-2. After the increase in Embodiment 1, cross-correlation between a DMRS (denoted as a DMRS 0) identified by the port 0 and a DMRS (denoted as a DMRS 8) identified by the port 8 is the worst. A solid-line curve represents a distribution curve of a probability occupied by a cross-correlation value between the DMRS (denoted as the DMRS 0) identified by the port 0 and the DMRS (denoted as the DMRS 8) identified by the port 8 after the increase in Embodiment 1, as shown by a curve 2. Refer to FIG. 14(a). A dotted-line curve represents a distribution curve of a probability occupied by a cross-correlation value between a DMRS (denoted as a DMRS 0) identified by the port 0 and a DMRS (denoted as a DMRS 8*) identified by the port 8 after the increase in Embodiment 2 of this solution, as shown by a curve 3. It can be learned from FIG. 15(b) that, the cross-correlation between the DMRS 0 and the DMRS 8 after the increase is poorer than the cross-correlation between the DMRS 0 and the DMRS 1 before the increase. A cross-correlation value at a point A is 0.07, and a cross-correlation value at a point C is 0.13. A maximum cross-correlation value difference is 0.06. The cross-correlation between the DMRS 0 and the DMRS 8* after the increase in Embodiment 2 of this solution is better than the cross-correlation between the DMRS 0 and the DMRS 8 after the increase in Embodiment 1, and a difference between the cross-correlation value between the DMRS 0 and the DMRS 8* and the cross-correlation value between the DMRS 0 and the DMRS 1 before the increase is smaller. The cross-correlation value at the point A is 0.07, and a cross-correlation value at a point B is 0.1. A maximum cross-correlation difference is 0.03. The cross-correlation is significantly improved.

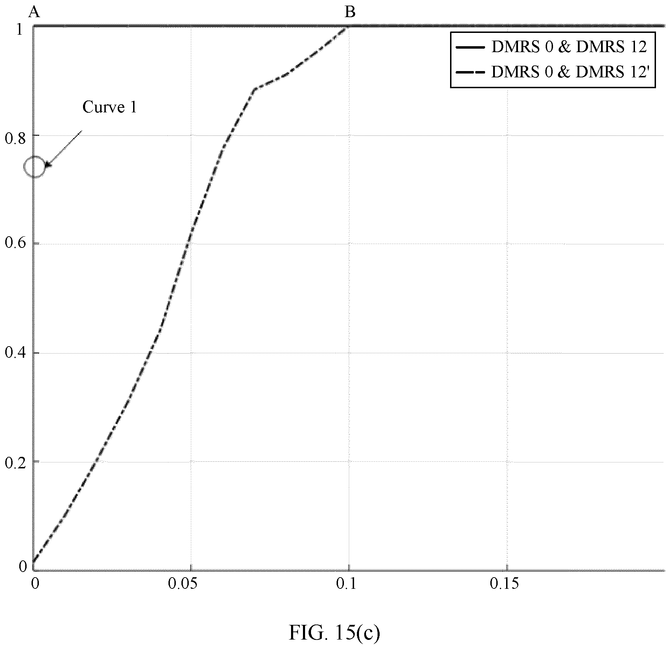

FIG. 15(c) is another cumulative distribution comparison diagram of cross-correlation between DMRSs after a channel delay spread is considered according to an embodiment of this application. Refer to FIG. 6-1 and FIG. 6-2. After the increase in Embodiment 1, cross-correlation between a DMRS (denoted as a DMRS 0) identified by the port 0 and a DMRS (denoted as a DMRS 12) identified by the port 12 is the best. A solid-line curve represents a distribution curve of a cumulative probability of a cross-correlation value between the DMRS (denoted as the DMRS 0) identified by the port 0 and the DMRS (denoted as the DMRS 12) identified by the port 12 after the increase. The cumulative probability that the cross-correlation value is less than or equal to 0 is 1, as shown by a marked curve 1 in the figure. A cross-correlation value at a point A is 0. Refer to FIG. 14(a). A dashed-line curve represents a distribution curve of a probability occupied by a cross-correlation value between a DMRS (denoted as a DMRS 0) identified by the port 0 and a DMRS (denoted as a DMRS 12*) identified by the port 12 after the increase in Embodiment 2 in this solution. It can be learned from the figure that, although the cross-correlation between the DMRS 0 and the DMRS 12* after the increase in this solution is slightly poorer than the cross-correlation between the DMRS 0 and the DMRS 12 before the increase, the cross-correlation value is distributed within [0, 0.1], a maximum cross-correlation value at a point B is 0.1, and the cross-correlation is still good.

It can be learned that different time-domain orthogonal cover codes can improve the correlation between the DMRSs, to reduce interference caused by the channel delay spread and improve system performance.

It should be noted that, in this embodiment of this application, in FIG. 14(a), the time-domain sequence corresponding to any reference signal in the first group of reference signals is different from the time-domain sequence corresponding to any reference signal in the second group of reference signals. Only an example in which the time-domain sequences corresponding to the reference signals in the first group include 1, 1 and 1, -1 and the time-domain sequences corresponding to the reference signals in the second group include 1, j and 1, j is used for description. The time domain orthogonal cover code may alternatively be in another form. For example, alternatively, the time-domain sequences corresponding to the reference signals in the first group may include 1, 1 and 1, -1, and the time-domain sequences corresponding to the reference signals in the second group include 1, $\frac{1}{\sqrt{2}} + \frac{1}{\sqrt{2}}j$ and 1, $-\frac{1}{\sqrt{2}} - \frac{1}{\sqrt{2}}j$. A specific time-domain sequence is not limited in embodiments of this application. A general description is provided herein, and details are not described subsequently. The time-domain sequences corresponding to the reference signals in the first group include 1, 1 and 1, -1, and the time-domain sequences corresponding to the reference signals in the second group include 1, j and 1, j, so that the correlation between the DMRSs can be better.

It should be noted that the frequency-domain sequence in the foregoing descriptions is described by using merely a discrete Fourier transform (discrete fourier transform, DFT) sequence as an example, and a type of the frequency-domain sequence is not limited in embodiments of this application. A general description is provided herein, and details are not described subsequently.

In another implementation, DMRSs of configuration type 2 are used as an example.

For example, refer to FIG. 16(a)-1 to FIG. 16(a)-3. The reference signal set includes eight different reference signals, which are identified by ports {0, 1, 6, 7, 12, 13, 18, 19}. The first group of reference signals includes four reference signals identified by the ports {0, 1, 6, 7}. Frequency-domain sequences $w_f(k')$ and time-domain sequences $w_t(l')$ that are corresponding to the four reference signals are shown in Table 5.

**Table 5**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 0 | +1 | +1 | +1 | +1 | +1 | +1 |
| 1 | +1 | -1 | +1 | -1 | +1 | +1 |
| 6 | +1 | +1 | +1 | +1 | +1 | -1 |
| 7 | +1 | -1 | +1 | -1 | +1 | -1 |

The second group of reference signals includes four reference signals identified by the ports {12, 13, 18, 19}. Frequency-domain sequences $w_f(k')$ and time-domain sequences $w_t(l')$ that are corresponding to the four reference signals are shown in Table 6.

**Table 6**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 12 | +1 | +1 | -1 | -1 | +1 | +j |
| 13 | +1 | -1 | -1 | 1 | +1 | +j |
| 18 | +1 | +1 | -1 | -1 | +1 | -j |
| 19 | +1 | -1 | -1 | 1 | +1 | -j |

For another example, refer to FIG. 16(a)-1 to FIG. 16(a)-3. The reference signal set includes eight different reference signals, which are identified by ports {2, 3, 8, 9, 14, 15, 20, 21}. The first group of reference signals includes four reference signals identified by the ports {2, 3, 8, 9}. Frequency-domain sequences $w_f(k')$ and time-domain sequences $w_t(l')$ that are corresponding to the four reference signals are shown in Table 7.

**Table 7**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 2 | +1 | +1 | +1 | +1 | +1 | +1 |
| 3 | +1 | -1 | +1 | -1 | +1 | +1 |

(continued)

| Port number | $w_f(k')$ | | | | $w_t(l')$ | |
| | $k' = 0$ | $k' = 1$ | $k' = 2$ | $k' = 3$ | $l' = 0$ | $l' = 1$ |
|---|---|---|---|---|---|---|
| 8 | +1 | +1 | +1 | +1 | +1 | -1 |
| 9 | +1 | -1 | +1 | -1 | +1 | -1 |

The second group of reference signals includes four reference signals identified by the ports {14, 15, 20, 21}. Frequency-domain sequences $w_f(k')$ and time-domain sequences $w_t(l')$ that are corresponding to the four reference signals are shown in Table 8.

**Table 8**

| Port number | $w_f(k')$ | | | | $w_t(l')$ | |
| | $k' = 0$ | $k' = 1$ | $k' = 2$ | $k' = 3$ | $l' = 0$ | $l' = 1$ |
|---|---|---|---|---|---|---|
| 14 | +1 | +1 | -1 | -1 | +1 | +j |
| 15 | +1 | -1 | -1 | 1 | +1 | +j |
| 20 | +1 | +1 | -1 | -1 | +1 | -j |
| 21 | +1 | -1 | -1 | 1 | +1 | -j |

For another example, refer to FIG. 16(a)-1 to FIG. 16(a)-3. The reference signal set includes eight different reference signals, which are identified by ports {4, 5, 10, 11, 16, 17, 22, 23}. The first group of reference signals includes four reference signals identified by the ports {4, 5, 10, 11}. Frequency-domain sequences $w_f(k')$ and time-domain sequences $w_t(l')$ that are corresponding to the four reference signals are shown in Table 9.

**Table 9**

| Port number | $w_f(k')$ | | | | $w_t(l')$ | |
| | $k' = 0$ | $k' = 1$ | $k' = 2$ | $k' = 3$ | $l' = 0$ | $l' = 1$ |
|---|---|---|---|---|---|---|
| 4 | +1 | +1 | +1 | +1 | +1 | +1 |
| 5 | +1 | -1 | +1 | -1 | +1 | +1 |
| $k' = 0$ | $k' = 1$ | $k' = 2$ | $k' = 3$ | $l' = 0$ | $l' = 1$ | |
| 10 | +1 | +1 | +1 | +1 | +1 | -1 |
| 11 | +1 | -1 | +1 | -1 | +1 | -1 |

The second group of reference signals includes four reference signals identified by the ports {16, 17, 22, 23}. Frequency-domain sequences $w_f(k')$ and time-domain sequences $w_t(l')$ that are corresponding to the four reference signals are shown in Table 10.

**Table 10**

| Port number | $w_f(k')$ | | | | $w_t(l')$ | |
| | $k' = 0$ | $k' = 1$ | $k' = 2$ | $k' = 3$ | $l' = 0$ | $l' = 1$ |
|---|---|---|---|---|---|---|
| 16 | +1 | +1 | -1 | -1 | +1 | +j |
| 17 | +1 | -1 | -1 | 1 | +1 | +j |
| 22 | +1 | +1 | -1 | -1 | +1 | -j |
| 23 | +1 | -1 | -1 | 1 | +1 | -j |

For the reference signals obtained based on the frequency-domain sequences $w_f(k')$ and the time-domain sequences $w_t(l')$ in the foregoing tables, when a channel delay spread is considered, a cross-correlation value between the reference signals is small, that is, interference between the reference signals is weak, and good performance can be ensured.

In this solution, the time-domain sequence corresponding to any reference signal in the first group of reference signals is different from the time-domain sequence corresponding to any reference signal in the second group of reference signals, so that the correlation between the reference signals can be improved.

That the time-domain sequence corresponding to any reference signal in the first group of reference signals is different from the time-domain sequence corresponding to any reference signal in the second group of reference signals may also be understood as that a cross-correlation value between the time-domain sequence corresponding to any reference signal in the first group of reference signals and the time-domain sequence corresponding to any reference signal in the second group of reference signals is not 1.

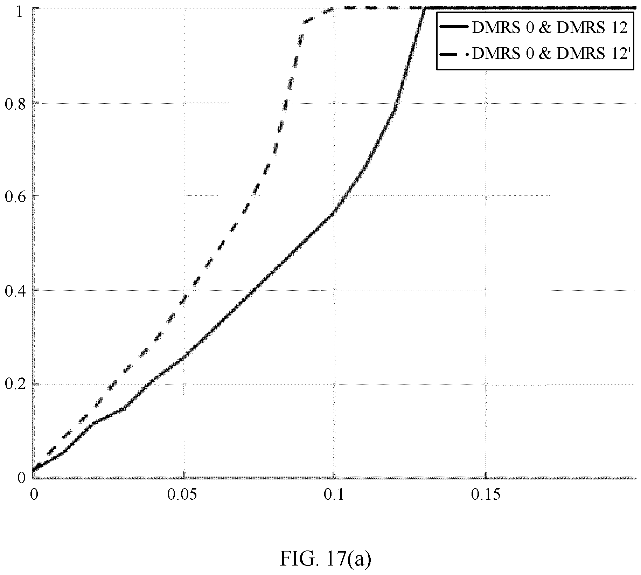

FIG. 17(a) to FIG. 17(d) are another cumulative distribution comparison diagram of cross-correlation between DMRSs after a channel delay spread is considered according to an embodiment of this application. A solid-line curve in FIG. 17(a) is a cumulative distribution function of cross-correlation between DMRSs that are of configuration type 2 and that are obtained by superposing length-4 frequency-domain orthogonal cover codes in Embodiment 1. In addition, two symbols are configured for the DMRSs. For descriptions of the solid-line curve in FIG. 17(a), refer to FIG. 12(a). A dashed-line curve in FIG. 17(a) represents distribution of a cross-correlation value between DMRSs in this solution. Refer to FIG. 16(a)-1 to FIG. 16(a)-3. The dashed-line curve represents a distribution curve of a probability occupied by a cross-correlation value between a DMRS (denoted as a DMRS 0) identified by the port 0 and a DMRS (denoted as a DMRS 12*) identified by the port 12 in FIG. 16(a)-1 to FIG. 16(a)-3.

A larger cross-correlation value between the DMRSs indicates poorer correlation. It can be learned from the figure that the cross-correlation value between the DMRSs in Embodiment 1 is approximately distributed between [0, 0.13], and the cross-correlation value between the DMRSs in this solution is approximately distributed between [0, 0.1]. The correlation between the DMRSs in this solution is better. It can be learned that different time-domain orthogonal cover codes can improve the correlation between the DMRSs, to reduce interference caused by the channel delay spread and improve system performance.

In another possible implementation, for example, refer to FIG. 16(b)-1 to FIG. 16(b)-3. The reference signal set includes eight different reference signals, which are identified by ports {0, 1, 6, 7, 12, 13, 18, 19}. The first group of reference signals includes four reference signals identified by the ports {0, 1, 6, 7}. Frequency-domain sequences $w_f(k')$ and time-domain sequences $w_t(l')$ that are corresponding to the four reference signals are shown in Table 11.

**Table 11**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 0 | +1 | +1 | +1 | +1 | +1 | +1 |
| 1 | +1 | -1 | +1 | -1 | +1 | +1 |
| 6 | +1 | +1 | +1 | +1 | +1 | -1 |
| 7 | +1 | -1 | +1 | -1 | +1 | -1 |

The second group of reference signals includes four reference signals identified by the ports {12, 13, 18, 19}. Frequency-domain sequences $w_f(k')$ and time-domain sequences $w_t(l')$ that are corresponding to the four reference signals are shown in Table 12.

**Table 12**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 12 | +1 | +j | -1 | -j | +1 | +j |
| 13 | +1 | -j | -1 | j | +1 | +j |
| 18 | +1 | +j | -1 | -j | +1 | -j |
| 19 | +1 | -j | -1 | j | +1 | -j |

For another example, refer to FIG. 16(b)-1 to FIG. 16(b)-3. The reference signal set includes eight different reference signals, which are identified by ports {2, 3, 8, 9, 14, 15, 20, 21}. The first group of reference signals includes four reference signals identified by the ports {2, 3, 8, 9}. Frequency-domain sequences $w_f(k')$ and time-domain sequences $w_t(l')$ that are corresponding to the four reference signals are shown in Table 13.

**Table 13**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 2 | +1 | +1 | +1 | +1 | +1 | +1 |
| 3 | +1 | -1 | +1 | -1 | +1 | +1 |
| 8 | +1 | +1 | +1 | +1 | +1 | -1 |
| 9 | +1 | -1 | +1 | -1 | +1 | -1 |

The second group of reference signals includes four reference signals identified by the ports {14, 15, 20, 21}. Frequency-domain sequences $w_f(k')$ and time-domain sequences $w_t(l')$ that are corresponding to the four reference signals are shown in Table 14.

**Table 14**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 14 | +1 | +j | -1 | -j | +1 | +j |
| 15 | +1 | -j | -1 | j | +1 | +j |
| 20 | +1 | +j | -1 | -j | +1 | -j |
| 21 | +1 | -j | -1 | j | +1 | -j |

For example, refer to FIG. 16(b)-1 to FIG. 16(b)-3. The reference signal set includes eight different reference signals, which are identified by ports {4, 5, 10, 11, 16, 17, 22, 23}. The first group of reference signals includes four reference signals identified by the ports {4, 5, 10, 11}. Frequency-domain sequences $w_f(k')$ and time-domain sequences $w_t(l')$ that are corresponding to the four reference signals are shown in Table 15.

**Table 15**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 4 | +1 | +1 | +1 | +1 | +1 | +1 |
| 5 | +1 | -1 | +1 | -1 | +1 | +1 |
| 10 | +1 | +1 | +1 | +1 | +1 | -1 |
| 11 | +1 | -1 | +1 | -1 | +1 | -1 |

The second group of reference signals includes four reference signals identified by the ports {16, 17, 22, 23}. Frequency-domain sequences $w_f(k')$ and time-domain sequences $w_t(l')$ that are corresponding to the four reference signals are shown in Table 16.

**Table 16**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 16 | +1 | +j | -1 | -j | +1 | +j |
| 17 | +1 | -j | -1 | j | +1 | +j |
| 22 | +1 | +j | -1 | -j | +1 | -j |

(continued)

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 23 | +1 | -j | -1 | j | +1 | -j |

For the reference signals obtained based on the frequency-domain sequences $w_f(k')$ and the time-domain sequences $w_t(l')$ in the foregoing tables, when a channel delay spread is considered, a cross-correlation value between the reference signals is small, that is, interference between the reference signals is weak, and good performance can be ensured.

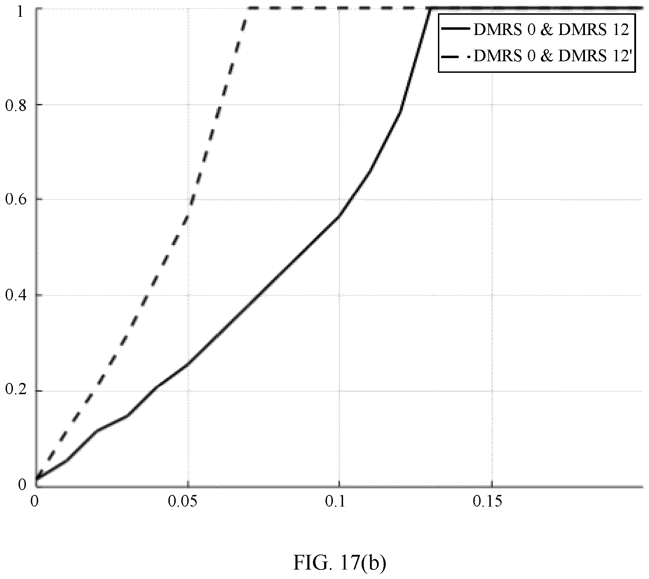

Refer to FIG. 17(b). A solid-line curve in FIG. 17(b) is a cumulative distribution function of cross-correlation between DMRSs that are of configuration type 2 and that are obtained by superposing length-4 frequency-domain orthogonal cover codes in Embodiment 1. In addition, two symbols are configured for the DMRSs. For descriptions of the solid-line curve in FIG. 17(b), refer to FIG. 12(a). A dashed-line curve in FIG. 17(b) represents distribution of a cross-correlation value between DMRSs in this solution. Refer to FIG. 16(b)-1 to FIG. 16(b)-3. The dashed-line curve represents a distribution curve of a probability occupied by a cross-correlation value between a DMRS (denoted as a DMRS 0) identified by the port 0 and a DMRS (denoted as a DMRS 12*) identified by the port 12 in FIG. 16(b)-1 to FIG. 16(b)-3.

A larger cross-correlation value between the DMRSs indicates poorer correlation. It can be learned from the figure that the cross-correlation value between the DMRSs on the solid-line curve is approximately distributed between [0, 0.13], and the cross-correlation value between the DMRSs in this solution is approximately distributed between [0, 0.1]. The correlation between the DMRSs in this solution is better.

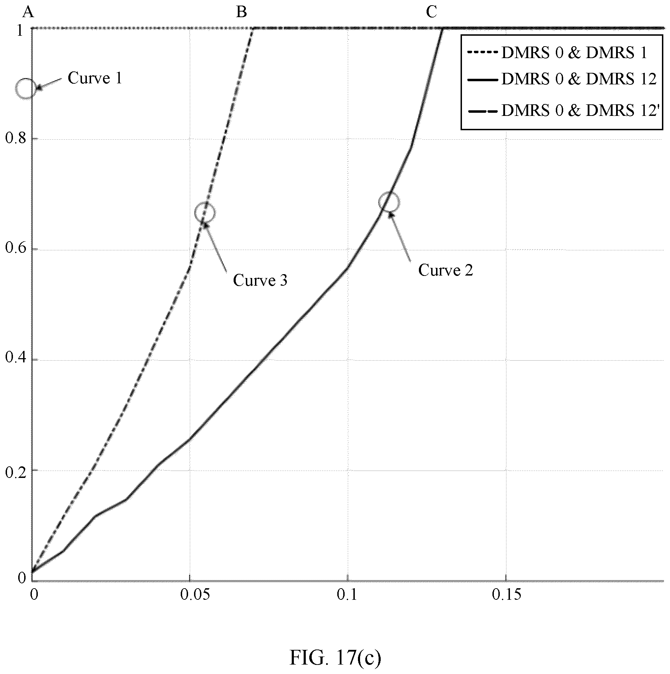

FIG. 17(c) is another cumulative distribution comparison diagram of cross-correlation between DMRSs after a channel delay spread is considered according to an embodiment of this application. A dashed-line curve represents a distribution curve of a cumulative probability of a cross-correlation value between a DMRS (denoted as a DMRS 0) identified by the port 0 and a DMRS (denoted as a DMRS 1) identified by the port 1 before the increase, and the cumulative probability of the cross-correlation value less than or equal to 0 is 1, as shown by a curve 1. A solid-line curve represents a distribution curve of a probability occupied by a cross-correlation value between a DMRS (denoted as a DMRS 0) identified by the port 0 and a DMRS (denoted as a DMRS 12) identified by the port 12 after the increase, as shown by a curve 2. A dotted-line curve represents a distribution curve of a probability occupied by a cross-correlation value between a DMRS (denoted as a DMRS 0) identified by the port 0 and a DMRS (denoted as a DMRS 12*) identified by the port 12 after the increase in this solution, as shown by a curve 3. It can be learned from the figure that, a difference between the cross-correlation between the DMRS 0 and the DMRS 12 after the increase and the cross-correlation between the DMRS 0 and the DMRS 1 before the increase is large. A cross-correlation value at a point A is 0, and a cross-correlation value at a point C is 0.13. A maximum cross-correlation value difference is 0.13. A difference between the cross-correlation between the DMRS 0 and the DMRS 12* after the increase in this solution and the cross-correlation between the DMRS 0 and the DMRS 1 before the increase is reduced. The cross-correlation value at the point A is 0, and a cross-correlation value at a point B is 0.07. A maximum cross-correlation difference is 0.07. The cross-correlation is significantly improved.

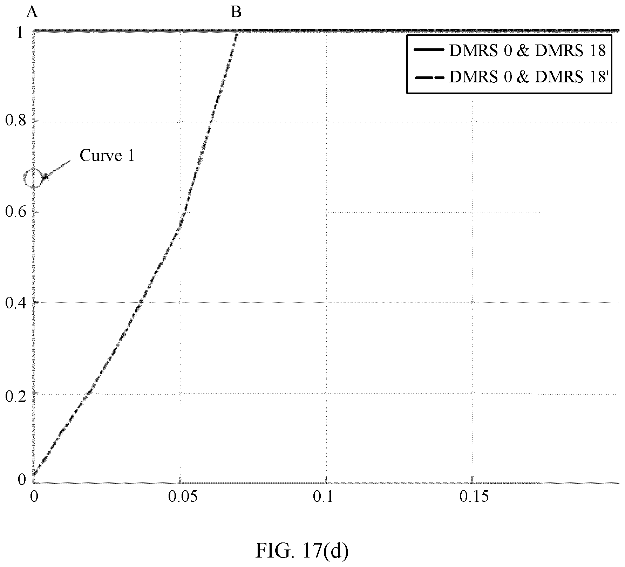

FIG. 17(d) is another cumulative distribution comparison diagram of cross-correlation between DMRSs after a channel delay spread is considered according to an embodiment of this application. A solid-line curve represents a distribution curve of a cumulative probability of a cross-correlation value between a DMRS (denoted as a DMRS 0) identified by the port 0 and a DMRS (denoted as a DMRS 18) identified by the port 18 after the increase. A probability that the cross-correlation value is less than or equal to 0 is 1, as shown by a curve 1. A cross-correlation value at a point A is 0. A dashed-line curve represents a distribution curve of a probability occupied by a cross-correlation value between a DMRS (denoted as a DMRS 0) identified by the port 0 and a DMRS (denoted as a DMRS 18*) identified by the port 18 after the increase in this solution. It can be learned from the figure that, although the cross-correlation between the DMRS 0 and the DMRS 18* after the increase in this solution is slightly poorer than the cross-correlation between the DMRS 0 and the DMRS 18 before the increase, the cross-correlation value is distributed within [0, 0.07], a maximum cross-correlation difference at a point B is 0.07, and the cross-correlation is still good.

It can be learned that different frequency-domain sequences and different time-domain sequences can improve the correlation between the DMRSs, to reduce interference caused by the channel delay spread and improve system performance.

In another possible implementation, the frequency-domain sequence $w_f(0)$, $w_f(1)$, ..., $w_f(K - 1)$ satisfies:

$$w_f(Q-1) = s(0) \cdot t(Q-1) \quad , \quad w_f(Q) = s(1) \cdot t(0) \quad , \quad w_f(Q+1) = s(1) \cdot$$

$$t(1), ..., w_f(2Q-1) = s(1) \cdot t(Q-1), ..., w_f((M-1) \cdot Q) = s(M-1) \cdot t(0), w_f((M-1) \cdot Q + 1) = s(M-1) \cdot t(1), ..., w_f(M \cdot Q - 1) = s(M-1) \cdot t(Q-1).$$

For example, if K=4, the frequency-domain sequence $w_f(0)$, $w_f(1)$, ... , $w_f(3)$ is 1, -1, -1, 1, and satisfies [1, -1, -1, 1]= [1, -1] $\otimes$ [1, -1].

In this case, an outer frequency-domain sequence corresponding to the frequency-domain sequence is 1, -1, and an inner frequency-domain sequence corresponding to the frequency-domain sequence is 1, -1.

The reference signal set includes at least two groups of reference signals.

Each of the at least two groups of reference signals satisfies: each group includes a plurality of reference signals, and the plurality of reference signals are pairwise orthogonal. In the plurality of reference signals, time-domain sequences of at least two reference signals are the same, and frequency-domain sequences of at least two reference signals are the same. For the reference signals with the same frequency-domain sequences, corresponding time-domain sequences are orthogonal to each other. For the reference signals with the same time-domain sequences, corresponding inner frequency-domain sequences are orthogonal to each other, and corresponding outer frequency-domain sequences are the same.

The at least two groups of reference signals include a first group of reference signals and a second group of reference signals, an outer frequency-domain sequence corresponding to any reference signal in the first group of reference signals and an outer frequency-domain sequence corresponding to any reference signal in the second group of reference signals are orthogonal to each other, and an inner frequency-domain sequence corresponding to any reference signal in the first group of reference signals is different from an inner frequency-domain sequence corresponding to any reference signal in the second group of reference signals.

For example, refer to FIG. 18(a)-1 to FIG. 18(a)-3. The reference signal set includes eight different reference signals, which are identified by ports {0, 1, 6, 7, 12, 13, 18, 19}. The first group of reference signals includes four reference signals identified by the ports {0, 1, 6, 7}. Frequency-domain sequences $w_f(k')$ and time-domain sequences $w_t(l')$ that are corresponding to the four reference signals are shown in Table 17.

**Table 17**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 0 | +1 | +1 | +1 | +1 | +1 | +1 |
| 1 | +1 | -1 | +1 | -1 | +1 | +1 |
| 6 | +1 | +1 | +1 | +1 | +1 | -1 |
| 7 | +1 | -1 | +1 | -1 | +1 | -1 |

Outer frequency-domain sequences, inner frequency-domain sequences, and the time-domain sequences $w_t(l')$ that are corresponding to the four reference signals are shown in Table 18.

**Table 18**

| Port number | Outer frequency-domain sequence | | Inner frequency-domain sequence | | $w_t(l')$ | |
|---|---|---|---|---|---|---|
| | s(0) | s(1) | t(0) | t(1) | $l' = 0$ | $l' = 1$ |
| 0 | +1 | +1 | +1 | +1 | +1 | +1 |
| 1 | +1 | +1 | +1 | -1 | +1 | +1 |
| 6 | +1 | +1 | +1 | +1 | +1 | -1 |
| 7 | +1 | +1 | +1 | -1 | +1 | -1 |

The second group of reference signals includes four reference signals identified by the ports {12, 13, 18, 19}. Frequency-domain sequences $w_f(k')$ and time-domain sequences $w_t(l')$ that are corresponding to the four reference signals are shown in Table 19.

**Table 19**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 12 | +1 | +j | -1 | -j | +1 | +1 |
| 13 | +1 | -j | -1 | j | +1 | +1 |
| 18 | +1 | +j | -1 | -j | +1 | -1 |
| 19 | +1 | -j | -1 | j | +1 | -1 |

Outer frequency-domain sequences, inner frequency-domain sequences, and the time-domain sequences $w_t(l')$ that are corresponding to the four reference signals are shown in Table 20.

**Table 20**

| Port number | Outer frequency-domain sequence | | Inner frequency-domain sequence | | $w_t(l')$ | |
|---|---|---|---|---|---|---|
| | s(0) | s(1) | t(0) | t(1) | $l' = 0$ | $l' = 1$ |
| 12 | +1 | -1 | +1 | +j | +1 | +1 |
| 13 | +1 | -1 | +1 | -j | +1 | +1 |
| 18 | +1 | -1 | +1 | +j | +1 | -1 |
| 19 | +1 | -1 | +1 | -j | +1 | -1 |

It can be learned from the foregoing example that the four reference signals included in the first group of reference signals include the at least two reference signals with the same time-domain sequences, for example, the DMRSs of the port numbers 0 and 1, and include the at least two reference signals with the same frequency-domain sequences, for example, the DMRSs of the port numbers 0 and 6. For the reference signals with the same time-domain sequences, the corresponding inner frequency-domain sequences are orthogonal to each other, and the corresponding outer frequency-domain sequences are the same. For example, for the DMRSs of the port numbers 0 and 1, an inner frequency-domain sequence corresponding to the port number 0 is 1, 1, an inner frequency-domain sequence corresponding to the port number 1 is 1, -1, and the two sequences are orthogonal to each other. For the DMRSs of the port numbers 0 and 1, an outer frequency-domain sequence corresponding to the port number 0 is 1, 1, an outer frequency-domain sequence corresponding to the port number 1 is 1, 1, and the two sequences are the same. For the reference signals with the same frequency-domain sequences, the corresponding time-domain sequences are orthogonal. For example, for the DMRSs of the port numbers 0 and 6, time-domain sequences are 1, 1, and 1, -1, and the two time-domain sequences are orthogonal to each other.

The four reference signals included in the second group of reference signals include the at least two reference signals with the same time-domain sequences, for example, the DMRSs of the port numbers 12 and 13, and include the at least two reference signals with the same frequency-domain sequences, for example, the DMRSs of the port numbers 12 and 18. For the reference signals with the same time-domain sequences, the corresponding inner frequency-domain sequences are orthogonal to each other, and the corresponding outer frequency-domain sequences are the same. For example, for the DMRSs of the port numbers 12 and 13, an inner frequency-domain sequence corresponding to the port number 12 is 1, j, an inner frequency-domain sequence corresponding to the port number 13 is 1, j, and the two sequences are orthogonal to each other. For the DMRSs of the port numbers 12 and 13, an outer frequency-domain sequence corresponding to the port number 12 is 1, -1, an outer frequency-domain sequence corresponding to the port number 13 is 1, -1, and the two sequences are the same. For the reference signals with the same frequency-domain sequences, the corresponding time-domain sequences are orthogonal. For example, for the DMRSs of the port numbers 12 and 18, time-domain sequences are 1, 1 and 1, -1, and the two time-domain sequences are orthogonal to each other.

In addition, the outer frequency-domain sequence corresponding to any reference signal in the first group of reference signals and the outer frequency-domain sequence corresponding to any reference signal in the second group of reference signals are orthogonal to each other, and the inner frequency-domain sequence corresponding to any reference signal in the first group of reference signals is different from the inner frequency-domain sequence corresponding to any reference signal in the second group of reference signals.

For example, the outer frequency-domain sequence corresponding to the DMRS of the port number 0 in the first group of reference signals is 1, 1, the outer frequency-domain sequence corresponding to the port number 12 in the second group of reference signals is 1, -1, and the two outer frequency-domain sequences are orthogonal. The outer frequency-domain sequence corresponding to the port number 13 in the second group of reference signals is 1, -1, and the sequence 1, -1 is also orthogonal to the sequence 1, 1. That the outer frequency-domain sequence corresponding to any reference signal in the first group of reference signals and the outer frequency-domain sequence corresponding to any reference signal in the second group of reference signals are orthogonal to each other means that the outer frequency-domain sequence of each reference signal in the first group of reference signals is orthogonal to the outer frequency-domain sequence of each reference signal in the second group of reference signals. Specifically, no example is given herein.

Further, the inner frequency-domain sequence corresponding to any reference signal in the first group of reference signals is different from the inner frequency-domain sequence corresponding to any reference signal in the second group of reference signals. Continue to refer to the foregoing example. The inner frequency-domain sequences corresponding to the reference signals in the first group of reference signals include 1, 1 and 1, -1, and the inner frequency-domain sequences corresponding to the reference signals in the second group of reference signals include 1, j and 1, j . It can be learned that the inner frequency-domain sequence of each reference signal in the first group of reference signals is different from the inner frequency-domain sequence of each reference signal in the second group of reference signals.

For example, refer to FIG. 18(a)-1 to FIG. 18(a)-3. The reference signal set includes eight different reference signals, which are identified by ports {2, 3, 8, 9, 14, 15, 20, 21}. The first group of reference signals includes four reference signals identified by the ports {2, 3, 8, 9}. Frequency-domain sequences $w_f(k')$ and time-domain sequences $w_t(l')$ that are corresponding to the four reference signals are shown in Table 21.

**Table 21**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 2 | +1 | +1 | +1 | +1 | +1 | +1 |
| 3 | +1 | -1 | +1 | -1 | +1 | +1 |
| 8 | +1 | +1 | +1 | +1 | +1 | -1 |
| 9 | +1 | -1 | +1 | -1 | +1 | -1 |

Outer frequency-domain sequences, inner frequency-domain sequences, and the time-domain sequences $w_t(l')$ that are corresponding to the four reference signals are shown in Table 22.

**Table 22**

| Port number | Outer frequency-domain sequence | | Inner frequency-domain sequence | | $w_t(l')$ | |
|---|---|---|---|---|---|---|
| | s(0) | s(1) | t(0) | t(1) | $l' = 0$ | $l' = 1$ |
| 2 | +1 | +1 | +1 | +1 | +1 | +1 |
| 3 | +1 | +1 | +1 | -1 | +1 | +1 |
| 8 | +1 | +1 | +1 | +1 | +1 | -1 |
| 9 | +1 | +1 | +1 | -1 | +1 | -1 |

The second group of reference signals includes four reference signals identified by the ports {14, 15, 20, 21}. Frequency-domain sequences $w_f(k')$ and time-domain sequences $w_t(l')$ that are corresponding to the four reference signals are shown Table 23.

**Table 23**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 14 | +1 | +j | -1 | -j | +1 | +1 |
| 15 | +1 | -j | -1 | j | +1 | +1 |
| 20 | +1 | +j | -1 | -j | +1 | -1 |

(continued)

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 21 | +1 | -j | -1 | j | +1 | -1 |

Outer frequency-domain sequences, inner frequency-domain sequences, and the time-domain sequences $w_t(l')$ that are corresponding to the four reference signals are shown Table 24.

**Table 24**

| Port number | Outer frequency-domain sequence | | Inner frequency-domain sequence | | $w_t(l')$ | |
|---|---|---|---|---|---|---|
| | s(0) | s(1) | t(0) | t(1) | $l' = 0$ | $l' = 1$ |
| 14 | +1 | -1 | +1 | +j | +1 | +1 |
| 15 | +1 | -1 | +1 | -j | +1 | +1 |
| 20 | +1 | -1 | +1 | +j | +1 | -1 |
| 21 | +1 | -1 | +1 | -j | +1 | -1 |

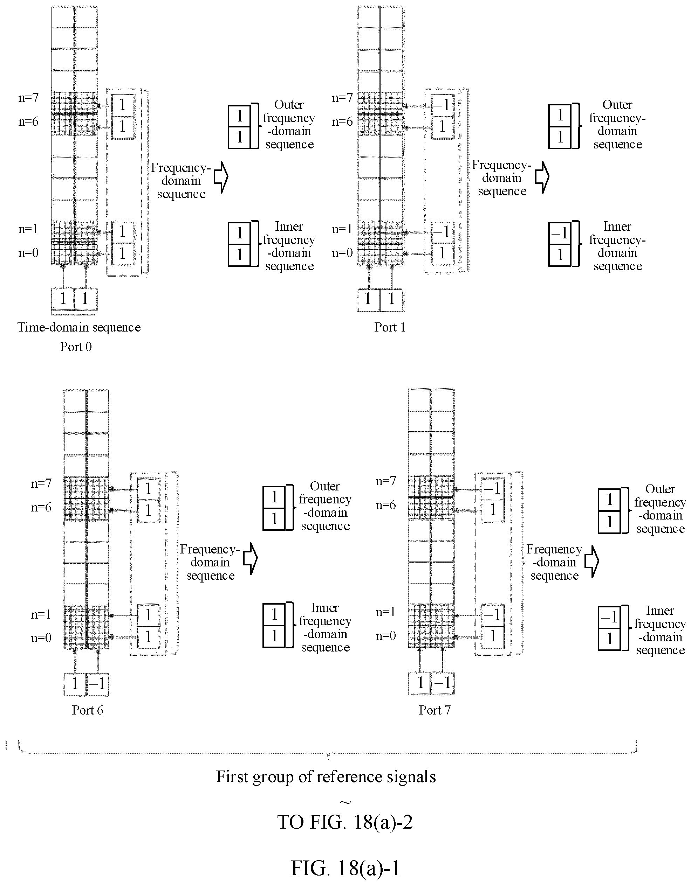

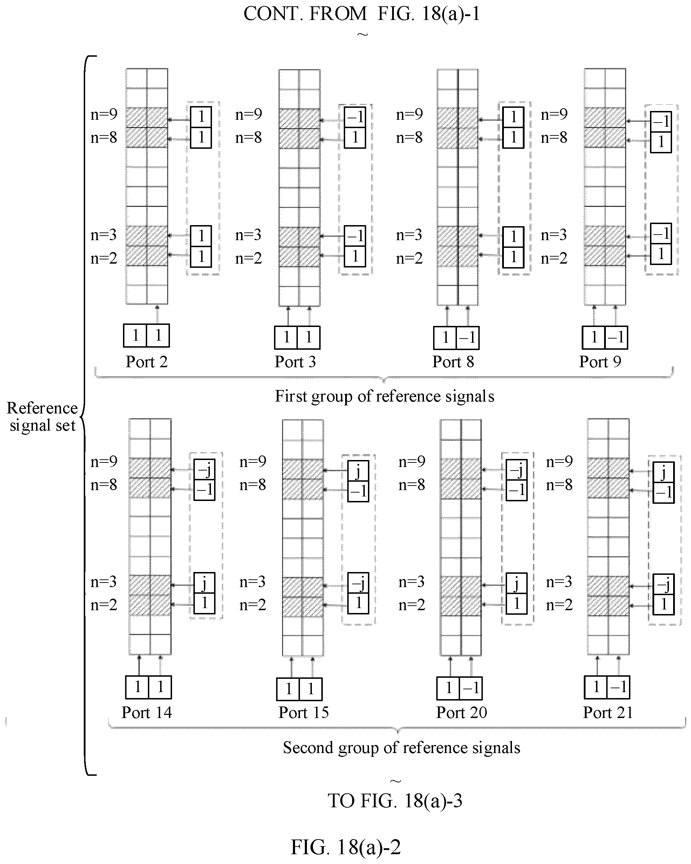

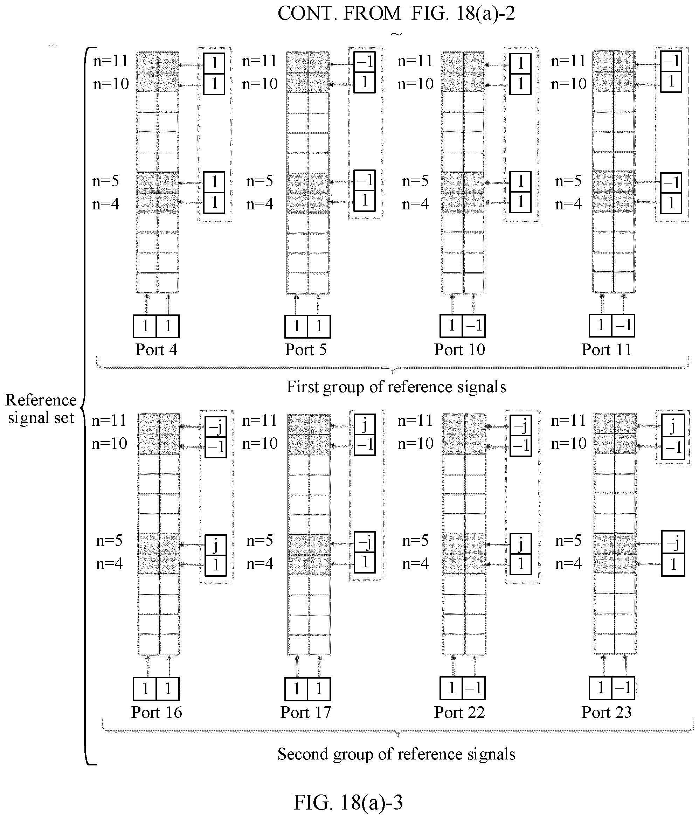

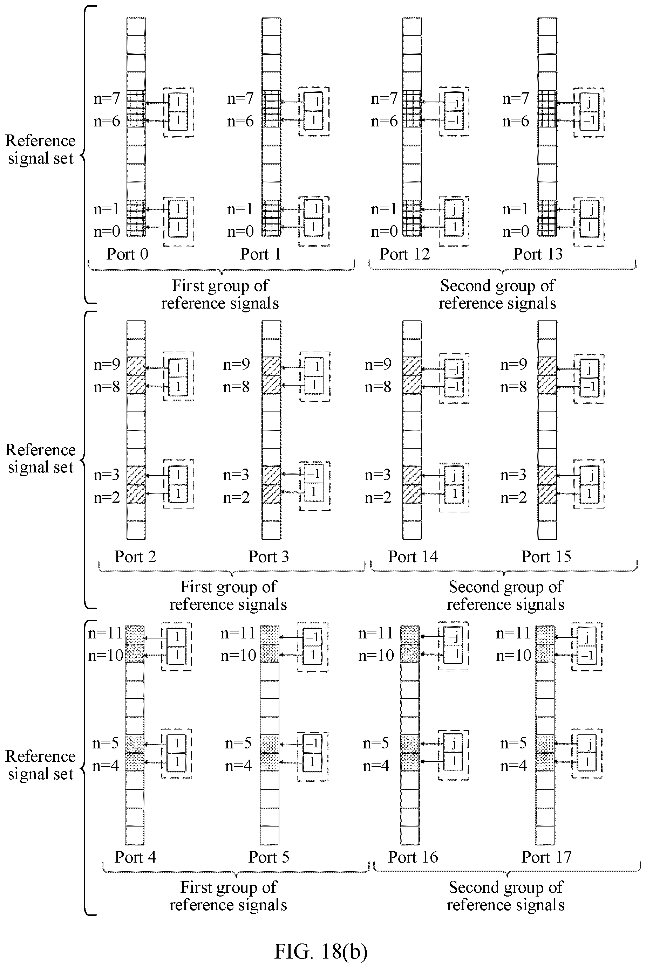

For another example, refer to FIG. 18(b). The reference signal set includes eight different reference signals, which are identified by ports {4, 5, 10, 11, 16, 17, 22, 23}. The first group of reference signals includes four reference signals identified by the ports {4, 5, 10, 11}. Frequency-domain sequences $w_f(k')$ and time-domain sequences $w_t(l')$ that are corresponding to the four reference signals are shown in Table 25.

**Table 25**

| Port number | $w_f(k')$ | | | | $w_t(l')$ | |
|---|---|---|---|---|---|---|
| | $k' = 0$ | $k' = 1$ | $k' = 2$ | $k' = 3$ | $l' = 0$ | $l' = 1$ |
| 4 | +1 | +1 | +1 | +1 | +1 | +1 |
| 5 | +1 | -1 | +1 | -1 | +1 | +1 |
| 10 | +1 | +1 | +1 | +1 | +1 | -1 |
| 11 | +1 | -1 | +1 | -1 | +1 | -1 |

Outer frequency-domain sequences, inner frequency-domain sequences, and the time-domain sequences $w_t(l')$ that are corresponding to the four reference signals are shown Table 26.

**Table 26**

| Port number | Outer frequency-domain sequence | | Inner frequency-domain sequence | | $w_t(l')$ | |
|---|---|---|---|---|---|---|
| | s(0) | s(1) | t(0) | t(1) | $l' = 0$ | $l' = 1$ |
| 4 | +1 | +1 | +1 | +1 | +1 | +1 |
| 5 | +1 | +1 | +1 | -1 | +1 | +1 |
| 10 | +1 | +1 | +1 | +1 | +1 | -1 |
| 11 | +1 | +1 | +1 | -1 | +1 | -1 |

The second group of reference signals includes four reference signals identified by the ports {16, 17, 22, 23}. Frequency-domain sequences $w_f(k')$ and time-domain sequences $w_t(l')$ that are corresponding to the four reference signals are shown in Table 27.

**Table 27**

| Port number | $w_f(k')$ | | | | | $w_t(l')$ | |
|---|---|---|---|---|---|---|---|
| | $k' = 0$ | $k' = 1$ | $k' = 2$ | $k' = 3$ | $l' = 0$ | $l' = 1$ |
| 16 | +1 | +j | -1 | -j | +1 | +1 |
| 17 | +1 | -j | -1 | j | +1 | +1 |
| 22 | +1 | +j | -1 | -j | +1 | -1 |
| $k' = 0$ | $k' = 1$ | $k' = 2$ | $k' = 3$ | $l' = 0$ | $l' = 1$ | |
| 23 | +1 | -j | -1 | j | +1 | -1 |

Outer frequency-domain sequences, inner frequency-domain sequences, and the time-domain sequences $w_t(l')$ that are corresponding to the four reference signals are shown Table 28.

**Table 28**

| Port number | Outer frequency-domain sequence | | Inner frequency-domain sequence | | $w_t(l')$ | |
|---|---|---|---|---|---|---|
| | s(0) | s(1) | t(0) | t(1) | $l' = 0$ | $l' = 1$ |
| 16 | +1 | -1 | +1 | +j | +1 | +1 |
| 17 | +1 | -1 | +1 | -j | +1 | +1 |
| 22 | +1 | -1 | +1 | +j | +1 | -1 |
| 23 | +1 | -1 | +1 | -j | +1 | -1 |

For the reference signals obtained based on the frequency-domain sequences $w_f(k')$ and the time-domain sequences Wt (l') in the foregoing tables, when a channel delay spread is considered, a cross-correlation value between the reference signals is small, that is, interference between the reference signals is weak, and good performance can be ensured.

In this solution, the inner frequency-domain sequence corresponding to any reference signal in the first group of reference signals is different from the inner frequency-domain sequence corresponding to any reference signal in the second group of reference signals. This helps improve the correlation between the reference signals.

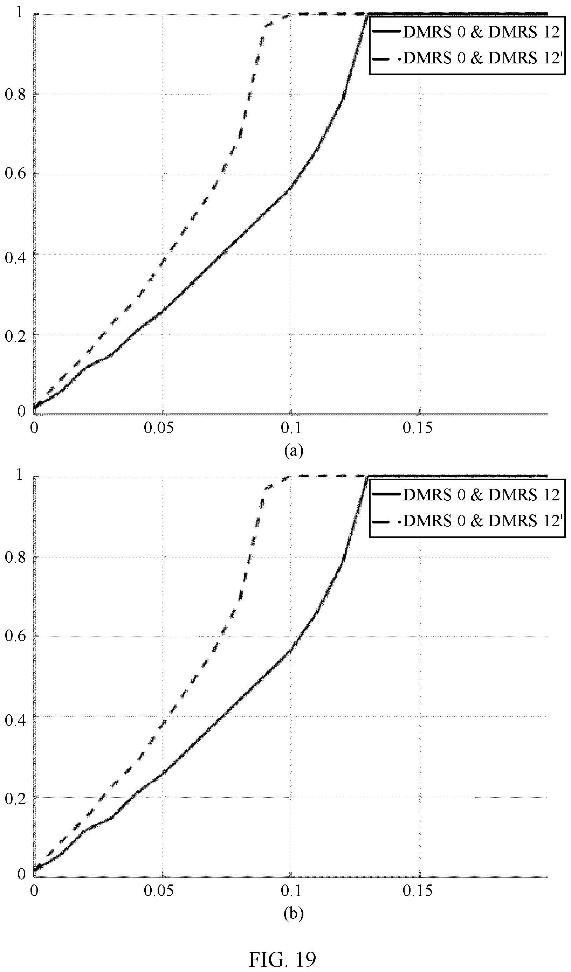

FIG. 19 is another cumulative distribution comparison diagram of cross-correlation between DMRSs after a channel delay spread is considered according to an embodiment of this application. A solid-line curve in FIG. 19(a) is a cumulative distribution function of cross-correlation between DMRSs that are of configuration type 2 and that are obtained by superposing length-4 frequency-domain orthogonal cover codes in Embodiment 1. In addition, two symbols are configured for the DMRSs. For descriptions of the solid-line curve in FIG. 19(a), refer to FIG. 12(a). A dashed line in FIG. 19(a) represents distribution of a cross-correlation value between DMRSs in this solution. Refer to FIG. 18(b). The dashed line represents a distribution curve of a probability occupied by a cross-correlation value between a DMRS (denoted as a DMRS 0) identified by the port 0 and a DMRS (denoted as a DMRS 12*) identified by the port 12 in FIG. 18(b).

A larger cross-correlation value between the DMRSs indicates poorer correlation. It can be learned from the figure that the cross-correlation value on the solid-line curve is approximately distributed between [0, 0.13], and the cross-correlation value between the DMRSs in this solution is approximately distributed between [0, 0.1]. The correlation between the DMRSs in this solution is better. It can be learned that different inner frequency-domain sequences can improve the correlation between the DMRSs, to reduce interference caused by the channel delay spread and improve system performance.

It should be noted that, in this embodiment of this application, inner frequency-domain sequences of the DMRSs corresponding to the ports 0 and 12 in FIG. 18(a)-1 to FIG. 18(a)-3 are different. An example in which 1, 1 and 1, j are used as the inner frequency-domain sequences of the DMRSs corresponding to the ports 0 and 12 is used for description. The inner frequency-domain sequences of the DMRSs corresponding to the ports 0 and 12 may alternatively be in another form. 1, 1 and 1, j are used as the inner frequency-domain sequences of the DMRSs corresponding to the ports 0 and 12, so that correlation between the DMRSs corresponding to the ports 0 and 12 is good.

In addition, this solution may be further extended to a scenario in which DMRSs occupy one symbol. FIG. 18(b) is a diagram of superposing frequency-domain sequences on DMRSs of configuration type 2 according to an embodiment of this application. As shown in FIG. 18(b), the reference signal set includes four DMRSs identified by port numbers {0, 1, 12, 13}, the reference signal set includes four DMRSs identified by port numbers {2, 3, 14, 15}, or the reference signal set includes four DMRSs identified by port numbers {4, 5, 16, 17}.

Refer to FIG. 19(b). A solid-line curve is a cumulative distribution function of cross-correlation between DMRSs that are of configuration type 2 and that are obtained by superposing length-4 frequency-domain orthogonal cover codes in Embodiment 1. In addition, one symbol is configured for the DMRSs. For descriptions of the solid-line curve in FIG. 19(b), refer to FIG. 12(b). A dashed line represents distribution of a cross-correlation value between DMRSs in this solution. Refer to FIG. 18(b). The dashed line represents a distribution curve of a probability occupied by a cross-correlation value between a DMRS (denoted as a DMRS 0) identified by the port 0 and a DMRS (denoted as a DMRS 12*) identified by the port 12 in FIG. 18(b).

A larger cross-correlation value between the DMRSs indicates poorer correlation. It can be learned from the figure that the cross-correlation value between the DMRSs in Embodiment 1 is approximately distributed between [0, 0.13], and the cross-correlation value between the DMRSs in this solution is approximately distributed between [0, 0.1]. The correlation between the DMRSs in this solution is better. It can be learned that different inner frequency-domain sequences can improve the correlation between the DMRSs, to reduce interference caused by the channel delay spread and improve system performance.

It should be noted that, in this embodiment of this application, inner frequency-domain sequences of the DMRSs corresponding to the ports 0 and 12 in FIG. 18(b) are different. Only DFT sequences are used as an example for description. The inner frequency-domain sequences of the DMRSs corresponding to the ports 0 and 1 may alternatively be in another form. The DFT sequences are used as the inner frequency-domain sequences of the DMRSs corresponding to the ports 0 and 12, so that correlation between the DMRSs corresponding to the ports 0 and 12 is good.

It should be noted that the frequency-domain sequence in the foregoing descriptions is described by using merely a DFT sequence as an example, and a type of the frequency-domain sequence is not limited in embodiments of this application. A general description is provided herein, and details are not described subsequently.

Step S1402: The terminal device sends the at least one reference signal to the network device.

Correspondingly, the network device receives the at least one reference signal from the terminal device.

After generating the at least one reference signal, the terminal device may send the at least one reference signal to the network device.

Step S 1403: The network device processes the at least one reference signal.

After receiving the at least one reference signal from the terminal device, the network device may process the at least one reference signal. For example, assuming that the reference signal is a DMRS, the network device may estimate an uplink channel or a downlink channel based on the DMRS, to demodulate data.

In all embodiments of the present invention, optionally, a transmitter may be a network device, for example, a base station, and a receiver may be a terminal device. In other words, the reference signal may be a downlink reference signal. Alternatively, it may be understood that step S1401 may be performed by the network device, step S 1402 is performed by the network device, and step S1403 is performed by the terminal device. A general description is provided herein, and details are not described subsequently.

Method embodiments provided in embodiments of this application are described above, and virtual apparatus embodiments related to embodiments of this application are described below.

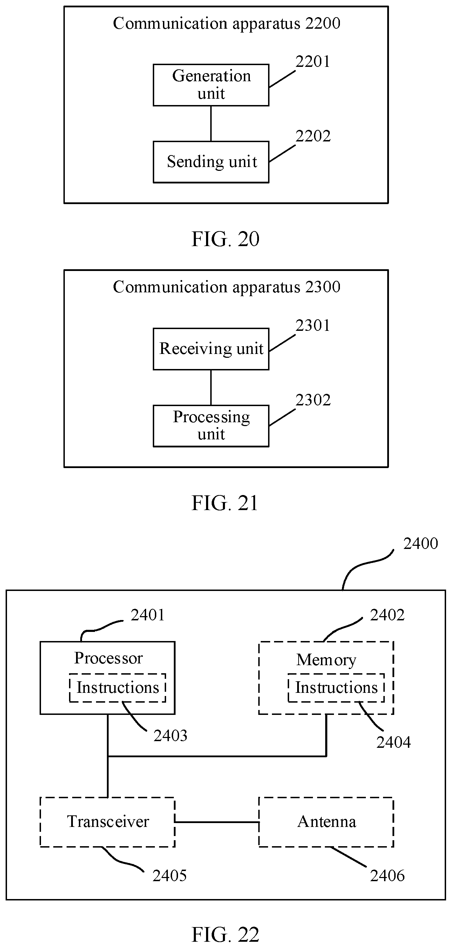

FIG. 20 is a diagram of a structure of a communication apparatus according to an embodiment of this application. The apparatus may be a terminal device, or may be a module (for example, a chip) in the terminal device. The apparatus is shown in FIG. 20.

In a possible implementation, the apparatus 2200 includes at least a generation unit 2201 and a sending unit 2202.

The generation unit 2201 is configured to generate at least one reference signal. The at least one reference signal belongs to a reference signal set, all reference signals in the reference signal set occupy a same time-frequency resource, and an element value a in a sequence of the at least one reference signal satisfies:

$$a = \beta \cdot w_f(k') \cdot w_t(l') \cdot r(Kn + k'),$$

where

$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K-1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ..., $w_t(L-1)$ is L, L is an integer greater than or equal to 2, $r(Kn + k')$ is a complex number, and n is an integer greater than or equal to 0.

The frequency-domain sequence $w_f(0)$, $w_f(1)$, ... , $w_f(K-1)$ includes a first frequency-domain sequence $w_f(0)$, $w_f(1)$, ... , $w_f(K/2-1)$ and a second frequency-domain sequence $w_f(K/2)$, $w_f(K/2+1)$, ..., $w_f(K-1)$. Both lengths of the first frequency-domain sequence and the second frequency-domain sequence are K/2. The value of $k'$ in the first frequency-domain sequence ranges from 0 to $K/2$ - 1, and the value of $k'$ in the second frequency-domain sequence ranges from $K/2$ to $K$ - 1.

The reference signal set includes at least two groups of reference signals, and each of the at least two groups of reference signals satisfies: Each group includes a plurality of reference signals, and the plurality of reference signals are pairwise orthogonal. In the plurality of reference signals, time-domain sequences of at least two reference signals are the same, and frequency-domain sequences of at least two reference signals are the same. For the reference signals with the same frequency-domain sequences, corresponding time-domain sequences are orthogonal to each other. For the reference signals with the same time-domain sequences, corresponding first frequency-domain sequences are orthogonal to each other, and corresponding second frequency-domain sequences are also orthogonal to each other.

The at least two groups of reference signals include a first group of reference signals and a second group of reference signals. A frequency-domain sequence corresponding to any reference signal in the first group of reference signals and a frequency-domain sequence corresponding to any reference signal in the second group of reference signals are orthogonal to each other, and a time-domain sequence corresponding to any reference signal in the first group of reference signals is different from a time-domain sequence corresponding to any reference signal in the second group of reference signals.

The sending unit is configured to send the at least one reference signal.

In another possible implementation, the apparatus 2200 includes at least a generation unit 2201 and a sending unit 2202.

The generation unit 2201 is configured to generate at least one reference signal. The at least one reference signal belongs to a reference signal set, all reference signals in the reference signal set occupy a same time-frequency resource, and an element value a in a sequence of the at least one reference signal satisfies:

$$a = \beta \cdot w_f(k') \cdot w_t(l') \cdot r(Kn + k'),$$

where
$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K$ - 1) is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ... , $w_t(L$ - 1) is L, L is an integer greater than or equal to 2, $r(Kn + k')$ is a complex number, and n is an integer greater than or equal to 0.

The frequency-domain sequence $w_f(0)$, $w_f(1)$, ... , $w_f(K$ - 1) satisfies:

$[w_f(0), w_f(1), ..., w_f(K$ - 1$)] = [s(0), s(1), ..., s(M$ - 1$)] \otimes [t(0), t(1), ..., t(Q$ - 1$)]$,

where
a length of an outer frequency-domain sequence s(0), s(1), ..., s(M - 1) is M, a length of an inner frequency-domain sequence t(0), t(1), ... , t(Q - 1) is Q, $K = M \cdot Q$, $\otimes$ represents a Kronecker product, M is an integer greater than or equal to 2, and $Q$ is an integer greater than or equal to 2.

The reference signal set includes at least two groups of reference signals, and each of the at least two groups of reference signals satisfies: Each group includes a plurality of reference signals, and the plurality of reference signals are pairwise orthogonal. In the plurality of reference signals, time-domain sequences of at least two reference signals are the same, and frequency-domain sequences of at least two reference signals are the same. For the reference signals with the same frequency-domain sequences, corresponding time-domain sequences are orthogonal to each other. For the reference signals with the same time-domain sequences, corresponding inner frequency-domain sequences are orthogonal to each other, and corresponding outer frequency-domain sequences are the same.

The at least two groups of reference signals include a first group of reference signals and a second group of reference signals. An outer frequency-domain sequence corresponding to any reference signal in the first group of reference signals and an outer frequency-domain sequence corresponding to any reference signal in the second group of reference signals are orthogonal to each other, and an inner frequency-domain sequence corresponding to any reference signal in the first group of reference signals is different from an inner frequency-domain sequence corresponding to any reference signal in the second group of reference signals.

The sending unit 2202 is configured to send the at least one reference signal.

FIG. 21 a diagram of a structure of a communication apparatus according to an embodiment of this application. The apparatus may be a terminal device, or may be a module (for example, a chip) in the terminal device. The apparatus may be a network device, or may be a module (for example, a chip) in the network device. The apparatus is shown in FIG. 21.

In a possible implementation, the apparatus 2300 includes at least a receiving unit 2301 and a processing unit 2302.

The receiving unit 2301 is configured to receive at least one reference signal. The at least one reference signal belongs to a reference signal set, all reference signals in the reference signal set occupy a same time-frequency resource, and an element value a in a sequence of the at least one reference signal satisfies:

$$a = \beta \cdot w_f(k') \cdot w_t(l') \cdot r(Kn + k'),$$

where
$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K - 1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ... , $w_t(L - 1)$ is L, L is an integer greater than or equal to 2, $r(Kn + k')$ is a complex number, and n is an integer greater than or equal to 0.

The frequency-domain sequence $w_f(0)$, $w_f(1)$, ... , $w_f(K - 1)$ includes a first frequency-domain sequence $w_f(0)$, $w_f(1)$, ... , $w_f(K/2 - 1)$ and a second frequency-domain sequence $w_f(K/2)$, $w_f(K/2 + 1)$, ... , $w_f(K - 1)$. Both lengths of the first frequency-domain sequence and the second frequency-domain sequence are K/2. The value of $k'$ in the first frequency-domain sequence ranges from 0 to $K/2 - 1$, and the value of $k'$ in the second frequency-domain sequence ranges from $K/2$ to $K - 1$.

The reference signal set includes at least two groups of reference signals, and each of the at least two groups of reference signals satisfies: Each group includes a plurality of reference signals, and the plurality of reference signals are pairwise orthogonal. In the plurality of reference signals, time-domain sequences of at least two reference signals are the same, and frequency-domain sequences of at least two reference signals are the same. For the reference signals with the same frequency-domain sequences, corresponding time-domain sequences are orthogonal to each other. For the reference signals with the same time-domain sequences, corresponding first frequency-domain sequences are orthogonal to each other, and corresponding second frequency-domain sequences are also orthogonal to each other.

The at least two groups of reference signals include a first group of reference signals and a second group of reference signals. A frequency-domain sequence corresponding to any reference signal in the first group of reference signals and a frequency-domain sequence corresponding to any reference signal in the second group of reference signals are orthogonal to each other, and a time-domain sequence corresponding to any reference signal in the first group of reference signals is different from a time-domain sequence corresponding to any reference signal in the second group of reference signals.

The processing unit 2302 is configured to process the at least one reference signal.

In another possible implementation, the apparatus 2300 includes at least a receiving unit 2301 and a processing unit 2302.

The receiving unit 2301 is configured to receive at least one reference signal. The at least one reference signal belongs to a reference signal set, all reference signals in the reference signal set occupy a same time-frequency resource, and an element value a in a sequence of the at least one reference signal satisfies:

$$a = \beta \cdot w_f(k') \cdot w_t(l') \cdot r(Kn + k'),$$

where
$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K - 1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ... , $w_t(L - 1)$ is L, L is an integer greater than or equal to 2, $r(Kn + k')$ is a complex number, and n is an integer greater than or equal to 0.

The frequency-domain sequence $w_f(0)$, $w_f(1)$, ... , $w_f(K - 1)$ satisfies:

$$[w_f(0), w_f(1), ..., w_f(K - 1)] = [s(0), s(1), ..., s(M - 1)] \otimes [t(0), t(1), ..., t(Q - 1)],$$

where
a length of an outer frequency-domain sequence s(0), s(1), ..., s(M - 1) is M, a length of an inner frequency-domain sequence $t(0)$, $t(1)$, ... , $t(Q - 1)$ is Q, $K = M \cdot Q$, $\otimes$ represents a Kronecker product, M is an integer greater than or equal to 2, and Q is an integer greater than or equal to 2.

The reference signal set includes at least two groups of reference signals, and each of the at least two groups of reference signals satisfies: Each group includes a plurality of reference signals, and the plurality of reference signals are pairwise orthogonal. In the plurality of reference signals, time-domain sequences of at least two reference signals are the same, and frequency-domain sequences of at least two reference signals are the same. For the reference signals with the same frequency-domain sequences, corresponding time-domain sequences are orthogonal to each other. For the reference signals with the same time-domain sequences, corresponding inner frequency-domain sequences are orthogonal to each other, and corresponding outer frequency-domain sequences are the same.

The at least two groups of reference signals include a first group of reference signals and a second group of reference signals. An outer frequency-domain sequence corresponding to any reference signal in the first group of reference signals and an outer frequency-domain sequence corresponding to any reference signal in the second group of reference signals are orthogonal to each other, and an inner frequency-domain sequence corresponding to any reference signal in the first group of reference signals is different from an inner frequency-domain sequence corresponding to any reference signal in the second group of reference signals.

The processing unit 2302 is configured to process the at least one reference signal.

Based on the foregoing network architecture, FIG. 22 is a diagram of a structure of a communication apparatus according to an embodiment of this application. As shown in FIG. 22, the apparatus 2400 may include one or more processors 2401. The processor 2401 may also be referred to as a processing unit, and can implement a specific control function. The processor 2401 may be a general-purpose processor, a dedicated processor, or the like. For example, the processor 2401 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 2401 may further store instructions and/or data 2403. The instructions and/or data 2403 may be run by the processor, so that the apparatus 2400 performs the method described in the foregoing method embodiments.

In another optional design, the processor 2401 may include a transceiver unit configured to implement a receiving function and a sending function. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In another possible design, the apparatus 2400 may include a circuit. The circuit may implement the sending, receiving, or communication function in the foregoing method embodiments.

Optionally, the apparatus 2400 may include one or more memories 2402. The memory 2402 may store instructions 2404. The instructions may be run on the processor, so that the apparatus 2400 performs the method described in the foregoing method embodiments. Optionally, the memory may further store data. Optionally, the processor may alternatively store the instructions and/or data. The processor and the memory may be separately disposed, or may be integrated together. For example, the correspondence described in the foregoing method embodiments may be stored in the memory or stored in the processor.

Optionally, the apparatus 2400 may further include a transceiver 2405 and/or an antenna 2406. The processor 2401 may be referred to as a processing unit, and may control the apparatus 2400. The transceiver 2405 may be referred to as a transceiver unit, a transceiver machine, a transceiver circuit, a transceiver apparatus, a transceiver module, or the like, and is configured to implement a sending/receiving function.

In an embodiment, the communication apparatus 2400 may be a terminal device, or may be a module (for example, a chip) in the terminal device. The communication apparatus 2400 may be a network device, or may be a module (for example, a chip) in the network device. When computer program instructions stored in the memory 2402 are executed, the processor 2401 is configured to control the generation unit 2201 to perform the operation performed in the foregoing embodiments, the transceiver 2405 is configured to perform the operation performed by the sending unit 2202 in the foregoing embodiments, and the transceiver 2405 is further configured to send information to another communication apparatus other than the communication apparatus. The terminal device, the module in the terminal device, the network device, or the module in the network device may be further configured to perform various methods performed by the terminal device or the network device in the foregoing method embodiments. Details are not described again.

In an embodiment, the communication apparatus 2400 may be a terminal device, or may be a module (for example, a chip) in the terminal device. The communication apparatus 2400 may be a network device, or may be a module (for example, a chip) in the network device. When computer program instructions stored in the memory 2402 are executed, the processor 2401 is configured to control the processing unit 2302 to perform the operation performed in the foregoing embodiment, the transceiver 2405 is configured to receive information from another communication apparatus other than the communication apparatus, and the transceiver 2405 is further configured to perform the operation performed by the receiving unit 2301 in the foregoing embodiments. The terminal device, the module in the terminal device, the network device, or the module in the network device may be further configured to perform various methods performed by the terminal device or the network device in the foregoing method embodiments. Details are not described again.

The processor and the transceiver described in this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, and the like. The processor and the transceiver may be manufactured by using various IC technologies, such as a complementary metal oxide semiconductor (complementary metal oxide semiconductor, CMOS), an N-type metal oxide semiconductor (nMetal-oxide-semiconductor, NMOS), a p-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be a network device or a terminal device. However, a scope of the apparatus described in this application is not limited thereto, and a structure of the apparatus may not be limited by that in FIG. 21. The apparatus may be an independent device, or may be a part of a large device. For example, the apparatus may be:

(1) an independent integrated circuit IC, a chip, or a chip system or subsystem;
(2) a set including one or more ICs, where optionally, the IC set may further include a storage part configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) another device or the like.

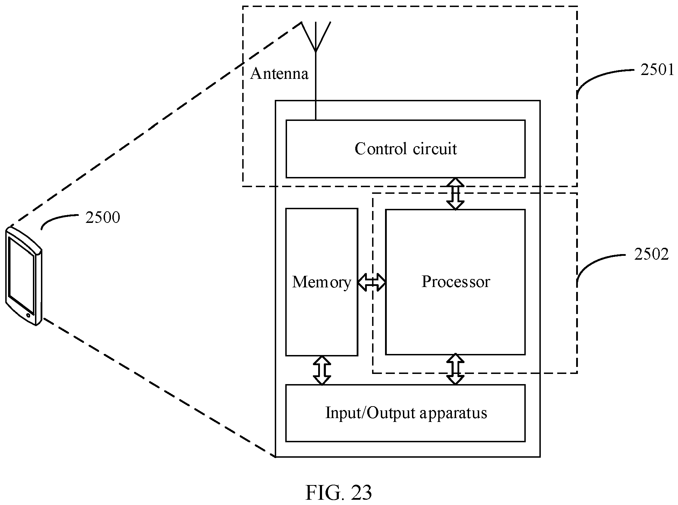

FIG. 23 is a diagram of a structure of a terminal device according to an embodiment of this application. For ease of description, FIG. 22 shows only main parts of the terminal device. As shown in FIG. 23, the terminal device 2500 includes a processor, a memory, a control circuit, an antenna, and an input/output apparatus. The processor is mainly configured to: process a communication protocol and communication data, control the entire terminal, execute a software program, and process data of the software program. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data entered by a user, and output data to the user.

After the terminal device is powered on, the processor may read the software program in a memory cell, parse and execute instructions of the software program, and process the data of the software program. When data needs to be sent wirelessly, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form through the antenna. When data is sent to the terminal, the radio frequency circuit receives the radio frequency signal through the antenna, further converts the radio frequency signal into a baseband signal, and outputs the baseband signal to the processor. The processor converts the baseband signal into data, and processes the data.

For ease of description, FIG. 23 shows only one memory and one processor. In an actual terminal, there may be a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to: control the entire terminal, execute the software program, and process the data of the software program. The processor in FIG. 23 integrates functions of the baseband processor and the central processing unit. Persons skilled in the art may understand that the baseband processor and the central processing unit may be processors that are independent of each other, and are interconnected by using a technology such as a bus. Persons skilled in the art may understand that the terminal may include a plurality of baseband processors to adapt to different network standards, and the terminal may include a plurality of central processing units to enhance a processing capability of the terminal. All the parts of the terminal may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory cell in a form of a software program. The processor executes the software program to implement a baseband processing function.

In an example, the antenna and the control circuit that have a receiving/sending function may be considered as a transceiver unit 2501 of the terminal device 2500, and the processor having a processing function may be considered as a processing unit 2502 of the terminal device 2500. As shown in FIG. 22, the terminal device 2500 includes the transceiver unit 2501 and the processing unit 2502. The transceiver unit may also be referred to as a transceiver, a transceiver machine, a transceiver apparatus, or the like. Optionally, a component that is in the transceiver unit 2501 and that is configured to implement the receiving function may be considered as a receiving unit, and a component that is in the transceiver unit 2501 and that is configured to implement the sending function may be considered as a sending unit. In other words, the transceiver unit 2501 includes the receiving unit and the sending unit. For example, the receiving unit may also be referred to as a receiver, a receive machine, a receiving circuit, or the like, and the sending unit may also be referred to as a transmitter, a transmit machine, a transmitting circuit, or the like. Optionally, the receiving unit and the sending unit may be one integrated unit, or may be a plurality of independent units. The receiving unit and the sending unit may be at one geographical location, or may be distributed at a plurality of geographical locations.

In an embodiment, the processing unit 2502 is configured to perform an operation performed by the generation unit 2201 in the foregoing embodiments, and the transceiver unit 2501 is configured to perform an operation performed by the sending unit 2202 in the foregoing embodiments. The terminal device 2500 may be further configured to perform various methods performed by the terminal device in the method embodiments described in step S1401 to step S1403 and step S1501 to step S1503. Details are not described again.

An embodiment of this application further provides a computer-readable storage medium. The computer-readable storage medium stores a computer program. When the program is executed by a processor, a procedure related to the terminal device in the communication method provided in the foregoing method embodiments may be implemented.

An embodiment of this application further provides a computer-readable storage medium. The computer-readable storage medium stores a computer program. When the program is executed by a processor, a procedure related to the network device in the communication method provided in the foregoing method embodiments may be implemented.

An embodiment of this application further provides a computer program product. When the computer program product runs on a computer or a processor, the computer or the processor is enabled to perform one or more steps in any one of the foregoing communication methods. When the foregoing modules in the device are implemented in a form of a software functional unit and sold or used as an independent product, the modules may be stored in a computer-readable storage medium.

An embodiment of this application further provides a chip system, including at least one processor and a communication interface. The communication interface and the at least one processor are interconnected through a line, and the at least one processor is configured to run a computer program or instructions, to perform a part or all of steps recorded in any one of the foregoing method embodiments. The chip system may include a chip, or may include the chip and another discrete component.

An embodiment of this application further discloses a communication system. The communication system includes a terminal device and a network device. For specific descriptions, refer to the foregoing communication methods.

It should be understood that, the memory mentioned in embodiments of this application may be a volatile memory or a non-volatile memory, or may include both the volatile memory and the non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example rather than limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

It should be understood that, the processor mentioned in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor or the like.

It should be noted that when the processor is the general-purpose processor, the DSP, the ASIC, the FPGA or the another programmable logic device, the discrete gate, the transistor logic device, or the discrete hardware component, the memory (storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

Persons of ordinary skill in the art may be aware that, in combination with the examples described in embodiments disclosed in this specification, units and algorithm steps may be implemented by electronic hardware or a combination of computer software and the electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for detailed working processes of the foregoing systems, apparatuses, and units, refer to the corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or the units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, for example, a USB flash drive, a removable hard disk, a ROM, a RAM, a magnetic disk, or an optical disc.

A sequence of the steps of the method in embodiments of this application may be adjusted, combined, or removed based on an actual requirement.

The modules/units in the apparatus in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A communication method, comprising:

   generating at least one reference signal, wherein the at least one reference signal belongs to a reference signal set, all reference signals in the reference signal set occupy a same time-frequency resource, and an element value a in a sequence of the at least one reference signal satisfies:

$$a = \beta \cdot w_f(k') \cdot w_t(l') \cdot r(Kn + k'),$$

wherein

$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K - 1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ... , $w_t(L - 1)$ is L, L is an integer greater than or equal to 2, $r(Kn + k')$ is a complex number, and n is an integer greater than or equal to 0;

the frequency-domain sequence $w_f(0)$, $w_f(1)$, ... , $w_f(K - 1)$ comprises a first frequency-domain sequence $w_f(0)$, $w_f(1)$, ... , $w_f(K/2 - 1)$ and a second frequency-domain sequence $w_f(K/2)$, $w_f(K/2 + 1)$, ... , $w_f(K - 1)$, both lengths of the first frequency-domain sequence and the second frequency-domain sequence are K/2, the value of $k'$ in the first frequency-domain sequence ranges from 0 to $K/2 - 1$, and the value of $k'$ in the second frequency-domain sequence ranges from $K/2$ to $K - 1$;

the reference signal set comprises at least two groups of reference signals, and each of the at least two groups of reference signals satisfies: each group comprises a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding first frequency-domain sequences are orthogonal to each other, and corresponding second frequency-domain sequences are also orthogonal to each other; and

the at least two groups of reference signals comprise a first group of reference signals and a second group of reference signals, a frequency-domain sequence corresponding to any reference signal in the first group of reference signals and a frequency-domain sequence corresponding to any reference signal in the second group of reference signals are orthogonal to each other, and a time-domain sequence corresponding to any reference signal in the first group of reference signals is different from a time-domain sequence corresponding to any reference signal in the second group of reference signals; and

sending the at least one reference signal.

2. The method according to claim 1, wherein L=2, the time-domain sequence corresponding to any reference signal in the first group of reference signals is 1, 1 or 1, -1, and the time-domain sequence corresponding to any reference signal in the second group of reference signals is 1, j or 1, j, wherein j is an imaginary unit.

3. The method according to claim 1, wherein a first frequency-domain sequence corresponding to any reference signal in the first group of reference signals and a first frequency-domain sequence corresponding to any reference signal in the second group of reference signals are not orthogonal to each other, and a second frequency-domain sequence corresponding to any reference signal in the first group of reference signals and a second frequency-domain sequence corresponding to any reference signal in the second group of reference signals are not orthogonal to each other either.

4. The method according to any one of claims 1 to 3, wherein K=4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, -j or 1, j, -1, j, wherein j is an imaginary unit.

5. The method according to any one of claims 1 to 4, wherein the time-frequency resource comprises a plurality of resource elements $(k, l)$, $k$ represents a subcarrier index, $l$ represents an orthogonal frequency division multiplexing OFDM symbol index, the element value a mapped to the resource element $(k, l)$ is $a_{k,l}$, and $a_{k,l}$ satisfies:

$$a_{k,l} = \beta \cdot w_f(k') \cdot w_t(l') \cdot r(Kn + k'),$$

wherein

$k$ and $k'$ satisfy:

$$k = T(Kn + k') + \Delta,$$

wherein

T is an integer greater than or equal to 1, and $\Delta$ is an integer; and

*l* and *l'* satisfy:

$$l = \bar{l} + l',$$

wherein

$\bar{l}$ is an integer.

6. The method according to claim 5, wherein T = 2, and the following formula is satisfied:

$$k = 2(Kn + k') + \Delta,$$

wherein

$\Delta$ is 0 or 1.

7. The method according to any one of claims 1 to 4, wherein the time-frequency resource comprises a plurality of resource elements (*k*, *l*), *k* represents a subcarrier index, *l* represents an orthogonal frequency division multiplexing OFDM symbol index, the element value a mapped to the resource element (*k*, *l*) is $a_{k,l}$, and $a_{k,l}$ satisfies:

$$a_{k,l} = \beta \cdot w_f(k') \cdot w_t(l') \cdot r(Kn + k'),$$

wherein

*k* and *k'* satisfy:

$$k = 3Kn + 4 \cdot \left\lfloor \frac{k'}{2} \right\rfloor + k' + \Delta,$$

wherein

$\Delta$ is 0, 2, or 4, and $\lfloor \cdot \rfloor$ represents rounding down; and

*l* is associated with *l'*, satisfying:

$$l = \bar{l} + l',$$

wherein

$\bar{l}$ is an integer.

8. A communication method, comprising:

receiving at least one reference signal, wherein the at least one reference signal belongs to a reference signal set, all reference signals in the reference signal set occupy a same time-frequency resource, and an element value a in a sequence of the at least one reference signal satisfies:

$$a = \beta \cdot w_f(k') \cdot w_t(l') \cdot r(Kn + k'),$$

wherein

$\beta$ is a non-zero value, $w_f(k')$ is an element in a frequency-domain sequence, *k'* is an integer, a value of *k'* ranges from 0 to K-1, a length of the frequency-domain sequence $w_f(0)$, $w_f(1)$, ... , $w_f(K - 1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ... , $w_t(L - 1)$ is L, L is an integer greater than or equal to 2, $r(Kn + k')$ is a complex number, and n is an integer greater than or equal to 0;

the frequency-domain sequence $w_f(0)$, $w_f(1)$, ... , $w_f(K - 1)$ comprises a first frequency-domain sequence $w_f(0)$,

$w_f(1)$, ... , $w_f(K/2 - 1)$ and a second frequency-domain sequence $w_f(K/2)$, $w_f\left(\dfrac{K}{2} + 1\right)$, ... , $w_f(K - 1)$, both lengths of the first frequency-domain sequence and the second frequency-domain sequence are K/2, the value of $k'$ in the first frequency-domain sequence ranges from 0 to $K/2$ - 1, and the value of $k'$ in the second frequency-domain sequence ranges from $K/2$ to $K - 1$;

the reference signal set comprises at least two groups of reference signals, and each of the at least two groups of reference signals satisfies: each group comprises a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding first frequency-domain sequences are orthogonal to each other, and corresponding second frequency-domain sequences are also orthogonal to each other; and

the at least two groups of reference signals comprise a first group of reference signals and a second group of reference signals, a frequency-domain sequence corresponding to any reference signal in the first group of reference signals and a frequency-domain sequence corresponding to any reference signal in the second group of reference signals are orthogonal to each other, and a time-domain sequence corresponding to any reference signal in the first group of reference signals is different from a time-domain sequence corresponding to any reference signal in the second group of reference signals; and

processing the at least one reference signal.

9. The method according to claim 8, wherein L=2, the time-domain sequence corresponding to any reference signal in the first group of reference signals is 1, 1 or 1, -1, and the time-domain sequence corresponding to any reference signal in the second group of reference signals is 1, j or 1, j, wherein j is an imaginary unit.

10. The method according to claim 8, wherein a first frequency-domain sequence corresponding to any reference signal in the first group of reference signals and a first frequency-domain sequence corresponding to any reference signal in the second group of reference signals are not orthogonal to each other, and a second frequency-domain sequence corresponding to any reference signal in the first group of reference signals and a second frequency-domain sequence corresponding to any reference signal in the second group of reference signals are not orthogonal to each other either.

11. The method according to any one of claims 8 to 10, wherein K=4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, -j or 1, j, -1, j, wherein j is an imaginary unit.

12. The method according to any one of claims 8 to 11, wherein the time-frequency resource comprises a plurality of resource elements $(k, l)$, $k$ represents a subcarrier index, $l$ represents an orthogonal frequency division multiplexing OFDM symbol index, the element value a mapped to the resource element $(k, l)$ is $a_{k,l}$, and $a_{k,l}$ satisfies:

$$a_{k,l} = \beta \cdot w_f(k') \cdot w_t(l') \cdot r(Kn + k'),$$

wherein

$k$ and $k'$ satisfy:

$$k = T(Kn + k') + \Delta,$$

wherein

T is an integer greater than or equal to 1, and $\Delta$ is an integer; and
$l$ and $l'$ satisfy:

$$l = \bar{l} + l',$$

wherein
$\bar{l}$ is an integer.

**13.** The method according to claim 12, wherein T = 2, and the following formula is satisfied:

$$k = 2(Kn + k') + \Delta,$$

wherein
$\Delta$ is 0 or 1.

**14.** The method according to any one of claims 8 to 11, wherein the time-frequency resource comprises a plurality of resource elements $(k, l)$, $k$ represents a subcarrier index, $l$ represents an orthogonal frequency division multiplexing OFDM symbol index, the element value a mapped to the resource element $(k, l)$ is $a_{k,l}$, and $a_{k,l}$ satisfies:

$$a_{k,l} = \beta \cdot w_f(k') \cdot w_t(l') \cdot r(Kn + k'),$$

wherein

$k$ and $k'$ satisfy:

$$k = 3Kn + 4 \cdot \left\lfloor \frac{k'}{2} \right\rfloor + k' + \Delta,$$

wherein

$\Delta$ is 0, 2, or 4, and $\lfloor \cdot \rfloor$ represents rounding down; and
$l$ is associated with $l'$, satisfying:

$$l = \bar{l} + l',$$

wherein
$\bar{l}$ is an integer.

**15.** A communication method, comprising:

generating at least one reference signal, wherein the at least one reference signal belongs to a reference signal set, all reference signals in the reference signal set occupy a same time-frequency resource, and an element value a in a sequence of the at least one reference signal satisfies:

$$a = \beta \cdot w_f(k') \cdot w_t(l') \cdot r(Kn + k'),$$

wherein
$\beta$ is a non-zero value, $w_f(k')$ is an element in a frequency-domain sequence, $k'$ is an integer, a value of $k'$ ranges from 0 to K-1, a length of the frequency-domain sequence $w_f(0), w_f(1), \ldots, w_f(K - 1)$ is K, K is an integer, $w_t(l')$ is an element in a time-domain sequence, $l'$ is an integer, a value of $l'$ ranges from 0 to L-1, a length of the time-domain sequence $w_t(0), w_t(1), \ldots, w_t(L - 1)$ is L, L is an integer greater than or equal to 2, $r(Kn + k')$ is a complex number, and n is an integer greater than or equal to 0;

the frequency-domain sequence $w_f(0)$, $w_f(1)$, ... , $w_f(K - 1)$ satisfies:

$$[w_f(0), w_f(1), ..., w_f(K - 1)] = [s(0), s(1), ..., s(M - 1)] \otimes [t(0), t(1), ..., t(Q - 1)] \quad ,$$

wherein
a length of an outer frequency-domain sequence s(0), s(1), ..., s(M - 1) is M, a length of an inner frequency-domain sequence $t(0)$, $t(1)$, ... , $t(Q - 1)$ is Q, $K = M \cdot Q$, $\otimes$ represents a Kronecker product, M is an integer greater than or equal to 2, and Q is an integer greater than or equal to 2;
the reference signal set comprises at least two groups of reference signals, and each of the at least two groups of reference signals satisfies: each group comprises a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding inner frequency-domain sequences are orthogonal to each other, and corresponding outer frequency-domain sequences are the same; and
the at least two groups of reference signals comprise a first group of reference signals and a second group of reference signals, an outer frequency-domain sequence corresponding to any reference signal in the first group of reference signals and an outer frequency-domain sequence corresponding to any reference signal in the second group of reference signals are orthogonal to each other, and an inner frequency-domain sequence corresponding to any reference signal in the first group of reference signals is different from an inner frequency-domain sequence corresponding to any reference signal in the second group of reference signals; and
sending the at least one reference signal.

16. The method according to claim 15, wherein K=4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, j or 1, -j, -1, j, wherein j is an imaginary unit.

17. The method according to claim 15 or 16, wherein the time-frequency resource comprises a plurality of resource elements $(k, l)$, k represents a subcarrier index, $l$ represents an orthogonal frequency division multiplexing OFDM symbol index, the element value a mapped to the resource element $(k, l)$ is $a_{k,l}$, and $a_{k,l}$ satisfies:

$$a_{k,l} = \beta \cdot w_f(k') \cdot w_t(l') \cdot r(Kn + k'),$$

wherein

$k$ and $k'$ satisfy:

$$k = 3Kn + 4 \cdot \left\lfloor \frac{k'}{2} \right\rfloor + k' + \Delta,$$

wherein

$\Delta$ is 0, 2, or 4, and $\lfloor \cdot \rfloor$ represents rounding down; and
$l$ and $l'$ satisfy:

$$l = \bar{l} + l',$$

wherein
$\bar{l}$ is an integer.

18. A communication method, comprising:

receiving at least one reference signal, wherein the at least one reference signal belongs to a reference signal set, all reference signals in the reference signal set occupy a same time-frequency resource, and an element value a in a sequence of the at least one reference signal satisfies:

$$a = \beta \cdot w_f(k') \cdot w_t(l') \cdot r(Kn + k'),$$

wherein

$\beta$ is a non-zero value, $w_f(k')$ is an element in a frequency-domain sequence, $k'$ is an integer, a value of $k'$ ranges from 0 to K-1, a length of the frequency-domain sequence $w_f(0), w_f(1), \ldots, w_f(K - 1)$ is K, K is an integer, $w_t(l')$ is an element in a time-domain sequence, $l'$ is an integer, a value of $l'$ ranges from 0 to L-1, a length of the time-domain sequence $w_t(0), w_t(1), \ldots, w_t(L - 1)$ is L, L is an integer greater than or equal to 2, $r(Kn + k')$ is a complex number, and n is an integer greater than or equal to 0;
the frequency-domain sequence $w_f(0), w_f(1), \ldots, w_f(K - 1)$ satisfies:

$$[w_f(0), w_f(1), \ldots, w_f(K - 1)] = [s(0), s(1), \ldots, s(M - 1)] \otimes [t(0), t(1), \ldots, t(Q - 1)] \quad,$$

wherein

a length of an outer frequency-domain sequence s(0), s(1), ..., s(M - 1) is M, a length of an inner frequency-domain sequence t(0), t(1), ..., t(Q - 1) is Q, $K = M \cdot Q$, $\otimes$ represents a Kronecker product, M is an integer greater than or equal to 2, and Q is an integer greater than or equal to 2;
the reference signal set comprises at least two groups of reference signals, and each of the at least two groups of reference signals satisfies: each group comprises a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding inner frequency-domain sequences are orthogonal to each other, and corresponding outer frequency-domain sequences are the same; and
the at least two groups of reference signals comprise a first group of reference signals and a second group of reference signals, an outer frequency-domain sequence corresponding to any reference signal in the first group of reference signals and an outer frequency-domain sequence corresponding to any reference signal in the second group of reference signals are orthogonal to each other, and an inner frequency-domain sequence corresponding to any reference signal in the first group of reference signals is different from an inner frequency-domain sequence corresponding to any reference signal in the second group of reference signals; and
processing the at least one reference signal.

19. The method according to claim 18, wherein K=4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, j or 1, -j, -1, j, wherein j is an imaginary unit.

20. The method according to claim 18 or 19, wherein the time-frequency resource comprises a plurality of resource elements (k, l), k represents a subcarrier index, l represents an orthogonal frequency division multiplexing OFDM symbol index, the element value a mapped to the resource element (k, l) is $a_{k,l}$, and $a_{k,l}$ satisfies:

$$a_{k,l} = \beta \cdot w_f(k') \cdot w_t(l') \cdot r(Kn + k'),$$

wherein

k and k' satisfy:

$$k = 3Kn + 4 \cdot \left\lfloor \frac{k'}{2} \right\rfloor + k' + \Delta,$$

wherein

$\Delta$ is 0, 2, or 4, and $\lfloor \cdot \rfloor$ represents rounding down; and

*l* and *l'* satisfy:

$$l = \bar{l} + l',$$

wherein

$\bar{l}$ is an integer.

21. A communication apparatus, comprising:

a generation unit, configured to generate at least one reference signal, wherein the at least one reference signal belongs to a reference signal set, all reference signals in the reference signal set occupy a same time-frequency resource, and an element value a in a sequence of the at least one reference signal satisfies:

$$a = \beta \cdot w_f(k') \cdot w_t(l') \cdot r(Kn + k'), \text{ wherein}$$

$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K - 1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ... , $w_t(L - 1)$ is L, L is an integer greater than or equal to 2, $r(Kn + k')$ is a complex number, and n is an integer greater than or equal to 0;

the frequency-domain sequence $w_f(0)$, $w_f(1)$, ... , $w_f(K - 1)$ comprises a first frequency-domain sequence $w_f(0)$, $w_f(1)$, ... , $w_f(K/2 - 1)$ and a second frequency-domain sequence $w_f(K/2), w_f\left(\frac{K}{2} + 1\right), ..., w_f(K - 1)$, both lengths of the first frequency-domain sequence and the second frequency-domain sequence are K/2, the value of $k'$ in the first frequency-domain sequence ranges from 0 to $K/2$ - 1, and the value of $k'$ in the second frequency-domain sequence ranges from $K/2$ to $K$ - 1;

the reference signal set comprises at least two groups of reference signals, and each of the at least two groups of reference signals satisfies: each group comprises a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding first frequency-domain sequences are orthogonal to each other, and corresponding second frequency-domain sequences are also orthogonal to each other; and

the at least two groups of reference signals comprise a first group of reference signals and a second group of reference signals, a frequency-domain sequence corresponding to any reference signal in the first group of reference signals and a frequency-domain sequence corresponding to any reference signal in the second group of reference signals are orthogonal to each other, and a time-domain sequence corresponding to any reference signal in the first group of reference signals is different from a time-domain sequence corresponding to any reference signal in the second group of reference signals; and

a sending unit, configured to send the at least one reference signal.

22. The apparatus according to claim 21, wherein L=2, the time-domain sequence corresponding to any reference signal in the first group of reference signals is 1, 1 or 1, -1, and the time-domain sequence corresponding to any reference signal in the second group of reference signals is 1, j or 1, j, wherein j is an imaginary unit.

23. The apparatus according to claim 21, wherein a first frequency-domain sequence corresponding to any reference signal in the first group of reference signals and a first frequency-domain sequence corresponding to any reference signal in the second group of reference signals are not orthogonal to each other, and a second frequency-domain sequence corresponding to any reference signal in the first group of reference signals and a second frequency-domain sequence corresponding to any reference signal in the second group of reference signals are not orthogonal to each other either.

**24.** The apparatus according to any one of claims 21 to 23, wherein K=4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, j or 1, -j, -1, j, wherein j is an imaginary unit.

**25.** The apparatus according to any one of claims 21 to 24, wherein the time-frequency resource comprises a plurality of resource elements $(k, l)$, $k$ represents a subcarrier index, $l$ represents an orthogonal frequency division multiplexing OFDM symbol index, the element value $a$ mapped to the resource element $(k, l)$ is $a_{k,l}$, and $a_{k,l}$ satisfies:

$$a_{k,l} = \beta \cdot w_f(k') \cdot w_t(l') \cdot r(Kn + k'),$$

wherein

    $k$ and $k'$ satisfy:

$$k = T(Kn + k') + \Delta,$$

    wherein
    T is an integer greater than or equal to 1, and $\Delta$ is an integer; and
    $l$ and $l'$ satisfy:

$$l = \bar{l} + l',$$

    wherein
    $\bar{l}$ is an integer.

**26.** The apparatus according to claim 25, wherein T = 2, and the following formula is satisfied:

$$k = 2(Kn + k') + \Delta,$$

    wherein
    $\Delta$ is 0 or 1.

**27.** The apparatus d according to any one of claims 21 to 24, wherein the time-frequency resource comprises a plurality of resource elements $(k, l)$, $k$ represents a subcarrier index, $l$ represents an orthogonal frequency division multiplexing OFDM symbol index, the element value $a$ mapped to the resource element $(k, l)$ is $a_{k,l}$, and $a_{k,l}$ satisfies:

$$a_{k,l} = \beta \cdot w_f(k') \cdot w_t(l') \cdot r(Kn + k'),$$

wherein

    $k$ and $k'$ satisfy:

$$k = 3Kn + 4 \cdot \left\lfloor \frac{k'}{2} \right\rfloor + k' + \Delta,$$

    wherein

    $\Delta$ is 0, 2, or 4, and $\lfloor \cdot \rfloor$ represents rounding down; and
    $l$ is associated with $l'$, satisfying:

$$l = \bar{l} + l',$$

wherein

$\bar{l}$ is an integer.

**28.** A communication apparatus, comprising:

a receiving unit, configured to receive at least one reference signal, wherein the at least one reference signal belongs to a reference signal set, all reference signals in the reference signal set occupy a same time-frequency resource, and an element value a in a sequence of the at least one reference signal satisfies:

$$a = \beta \cdot w_f(k') \cdot w_t(l') \cdot r(Kn + k'),$$

wherein

$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K - 1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ... , $w_t(L - 1)$ is L, L is an integer greater than or equal to 2, $r(Kn + k')$ is a complex number, and n is an integer greater than or equal to 0;

the frequency-domain sequence $w_f(0)$, $w_f(1)$, ... , $w_f(K - 1)$ comprises a first frequency-domain sequence $w_f(0)$, $w_f(1)$, ... , $w_f(K/2 - 1)$ and a second frequency-domain sequence $w_f(K/2)$, $w_f\left(\frac{K}{2} + 1\right)$, ... , $w_f(K - 1)$, both lengths of the first frequency-domain sequence and the second frequency-domain sequence are K/2, the value of $k'$ in the first frequency-domain sequence ranges from 0 to $K/2$ - 1, and the value of $k'$ in the second frequency-domain sequence ranges from $K/2$ to $K$ - 1;

the reference signal set comprises at least two groups of reference signals, and each of the at least two groups of reference signals satisfies: each group comprises a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding first frequency-domain sequences are orthogonal to each other, and corresponding second frequency-domain sequences are also orthogonal to each other; and

the at least two groups of reference signals comprise a first group of reference signals and a second group of reference signals, a frequency-domain sequence corresponding to any reference signal in the first group of reference signals and a frequency-domain sequence corresponding to any reference signal in the second group of reference signals are orthogonal to each other, and a time-domain sequence corresponding to any reference signal in the first group of reference signals is different from a time-domain sequence corresponding to any reference signal in the second group of reference signals; and

a processing unit, configured to process the at least one reference signal.

**29.** The apparatus according to claim 28, wherein L=2, the time-domain sequence corresponding to any reference signal in the first group of reference signals is 1, 1 or 1, -1, and the time-domain sequence corresponding to any reference signal in the second group of reference signals is 1, j or 1, j, wherein j is an imaginary unit.

**30.** The apparatus according to claim 28, wherein a first frequency-domain sequence corresponding to any reference signal in the first group of reference signals and a first frequency-domain sequence corresponding to any reference signal in the second group of reference signals are not orthogonal to each other, and a second frequency-domain sequence corresponding to any reference signal in the first group of reference signals and a second frequency-domain sequence corresponding to any reference signal in the second group of reference signals are not orthogonal to each other either.

**31.** The apparatus according to any one of claims 28 to 30, wherein K=4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, j or 1, -j, -1, j, wherein j is an imaginary unit.

**32.** The apparatus according to any one of claims 28 to 31, wherein the time-frequency resource comprises a plurality of resource elements $(k, l)$, $k$ represents a subcarrier index, $l$ represents an orthogonal frequency division multiplexing OFDM symbol index, the element value $a$ mapped to the resource element $(k, l)$ is $a_{k,l}$, and $a_{k,l}$ satisfies:

$$a_{k,l} = \beta \cdot w_f(k') \cdot w_t(l') \cdot r(Kn + k'),$$

wherein

$k$ and $k'$ satisfy:

$$k = T(Kn + k') + \Delta,$$

wherein
T is an integer greater than or equal to 1, and $\Delta$ is an integer; and
$l$ and $l'$ satisfy:

$$l = \bar{l} + l',$$

wherein
$\bar{l}$ is an integer.

**33.** The apparatus according to claim 32, wherein T = 2, and the following formula is satisfied:

$$k = 2(Kn + k') + \Delta,$$

wherein
$\Delta$ is 0 or 1.

**34.** The apparatus according to any one of claims 28 to 31, wherein the time-frequency resource comprises a plurality of resource elements $(k, l)$, $k$ represents a subcarrier index, $l$ represents an orthogonal frequency division multiplexing OFDM symbol index, the element value $a$ mapped to the resource element $(k, l)$ is $a_{k,l}$, and $a_{k,l}$ satisfies:

$$a_{k,l} = \beta \cdot w_f(k') \cdot w_t(l') \cdot r(Kn + k'),$$

wherein

$k$ and $k'$ satisfy:

$$k = 3Kn + 4 \cdot \left\lfloor \frac{k'}{2} \right\rfloor + k' + \Delta,$$

wherein
$\Delta$ is 0, 2, or 4, and $\lfloor \cdot \rfloor$ represents rounding down; and
$l$ is associated with $l'$, satisfying:

$$l = \bar{l} + l',$$

wherein

$\bar{l}$ is an integer.

**35.** A communication apparatus, comprising:

a generation unit, configured to generate at least one reference signal, wherein the at least one reference signal belongs to a reference signal set, all reference signals in the reference signal set occupy a same time-frequency resource, and an element value a in a sequence of the at least one reference signal satisfies:

$$a = \beta \cdot w_f(k') \cdot w_t(l') \cdot r(Kn + k'),$$

wherein
$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K - 1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ... , $w_t(L - 1)$ is L, L is an integer greater than or equal to 2, $r(Kn + k')$ is a complex number, and n is an integer greater than or equal to 0;
the frequency-domain sequence $w_f(0)$, $w_f(1)$, ... , $w_f(K - 1)$ satisfies:

$$[w_f(0), w_f(1), ..., w_f(K - 1)] = [s(0), s(1), ..., s(M - 1)] \otimes [t(0), t(1), ..., t(Q - 1)] \quad,$$

wherein
a length of an outer frequency-domain sequence s(0), s(1), ..., s(M - 1) is M, a length of an inner frequency-domain sequence $t(0)$, $t(1)$, ... , $t(Q - 1)$ is Q, $K = M \cdot Q$, $\otimes$ represents a Kronecker product, M is an integer greater than or equal to 2, and Q is an integer greater than or equal to 2;
the reference signal set comprises at least two groups of reference signals, and each of the at least two groups of reference signals satisfies: each group comprises a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding inner frequency-domain sequences are orthogonal to each other, and corresponding outer frequency-domain sequences are the same; and
the at least two groups of reference signals comprise a first group of reference signals and a second group of reference signals, an outer frequency-domain sequence corresponding to any reference signal in the first group of reference signals and an outer frequency-domain sequence corresponding to any reference signal in the second group of reference signals are orthogonal to each other, and an inner frequency-domain sequence corresponding to any reference signal in the first group of reference signals is different from an inner frequency-domain sequence corresponding to any reference signal in the second group of reference signals; and
a sending unit, configured to send the at least one reference signal.

**36.** The apparatus according to claim 35, wherein K=4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, j or 1, -j, -1, j, wherein j is an imaginary unit.

**37.** The apparatus according to claim 35 or 36, wherein the time-frequency resource comprises a plurality of resource elements $(k, l)$, k represents a subcarrier index, $l$ represents an orthogonal frequency division multiplexing OFDM symbol index, the element value a mapped to the resource element $(k, l)$ is $a_{k,l}$, and $a_{k,l}$ satisfies:

$$a_{k,l} = \beta \cdot w_f(k') \cdot w_t(l') \cdot r(Kn + k'),$$

wherein

$k$ and $k'$ satisfy:

$$k = 3Kn + 4 \cdot \left\lfloor \frac{k'}{2} \right\rfloor + k' + \Delta,$$

wherein

$\Delta$ is 0, 2, or 4, and $\lfloor \cdot \rfloor$ represents rounding down; and
$l$ and $l'$ satisfy:

$$l = \bar{l} + l',$$

wherein
$\bar{l}$ is an integer.

**38.** A communication apparatus, comprising:

a receiving unit, configured to receive at least one reference signal, wherein the at least one reference signal belongs to a reference signal set, all reference signals in the reference signal set occupy a same time-frequency resource, and an element value a in a sequence of the at least one reference signal satisfies:

$$a = \beta \cdot w_f(k') \cdot w_t(l') \cdot r(Kn + k'),$$

wherein
$\beta$ is a non-zero value, $w_f(k')$ is an element in a frequency-domain sequence, $k'$ is an integer, a value of $k'$ ranges from 0 to K-1, a length of the frequency-domain sequence $w_f(0)$, $w_f(1)$, ... , $w_f(K - 1)$ is K, K is an integer, $w_t(l')$ is an element in a time-domain sequence, $l'$ is an integer, a value of $l'$ ranges from 0 to L-1, a length of the time-domain sequence $w_t(0)$, $w_t(1)$, ... , $w_t(L - 1)$ is L, L is an integer greater than or equal to 2, $r(Kn + k')$ is a complex number, and n is an integer greater than or equal to 0;
the frequency-domain sequence $w_f(0)$, $w_f(1)$, ... , $w_f(K - 1)$ satisfies:

$$[w_f(0), w_f(1), ..., w_f(K - 1)] = [s(0), s(1), ..., s(M - 1)] \otimes [t(0), t(1), ..., t(Q - 1)] \quad ,$$

wherein
a length of an outer frequency-domain sequence s(0), s(1), ..., s(M - 1) is M, a length of an inner frequency-domain sequence $t(0)$, $t(1)$, ... , $t(Q - 1)$ is Q, $K = M \cdot Q$, $\otimes$ represents a Kronecker product, M is an integer greater than or equal to 2, and Q is an integer greater than or equal to 2;
the reference signal set comprises at least two groups of reference signals, and each of the at least two groups of reference signals satisfies: each group comprises a plurality of reference signals, and the plurality of reference signals are pairwise orthogonal; in the plurality of reference signals, time-domain sequences of at least two reference signals are the same, and frequency-domain sequences of at least two reference signals are the same; for the reference signals with the same frequency-domain sequences, corresponding time-domain sequences are orthogonal to each other; and for the reference signals with the same time-domain sequences, corresponding inner frequency-domain sequences are orthogonal to each other, and corresponding outer frequency-domain sequences are the same; and
the at least two groups of reference signals comprise a first group of reference signals and a second group of reference signals, an outer frequency-domain sequence corresponding to any reference signal in the first group of reference signals and an outer frequency-domain sequence corresponding to any reference signal in the second group of reference signals are orthogonal to each other, and an inner frequency-domain sequence corresponding to any reference signal in the first group of reference signals is different from an inner frequency-domain sequence corresponding to any reference signal in the second group of reference signals; and
a processing unit, configured to process the at least one reference signal.

**39.** The apparatus according to claim 38, wherein K=4, the frequency-domain sequence corresponding to any reference signal in the first group of reference signals is 1, 1, 1, 1 or 1, -1, 1, -1, and the frequency-domain sequence corresponding to any reference signal in the second group of reference signals is 1, j, -1, j or 1, -j, -1, j, wherein j is an imaginary unit.

**40.** The apparatus according to claim 38 or 39, wherein the time-frequency resource comprises a plurality of resource elements $(k, l)$, $k$ represents a subcarrier index, $l$ represents an orthogonal frequency division multiplexing OFDM symbol index, the element value a mapped to the resource element $(k, l)$ is $a_{k,l}$, and $a_{k,l}$ satisfies:

$$a_{k,l} = \beta \cdot w_f(k') \cdot w_t(l') \cdot r(Kn + k'),$$

wherein

$k$ and $k'$ satisfy:

$$k = 3Kn + 4 \cdot \left\lfloor \frac{k'}{2} \right\rfloor + k' + \Delta,$$

wherein

$\Delta$ is 0, 2, or 4, and $\lfloor \cdot \rfloor$ represents rounding down; and
$l$ and $l'$ satisfy:

$$l = \bar{l} + l',$$

wherein
$\bar{l}$ is an integer.

**41.** A communication apparatus, comprising a processor, wherein the processor is configured to execute instructions stored in a memory, and when the instructions are executed,

the method according to any one of claims 1 to 7 is implemented; or
the method according to any one of claims 8 to 14 is implemented.

**42.** A communication apparatus, comprising a processor, wherein the processor is configured to execute instructions stored in a memory, and when the instructions are executed,

the method according to any one of claims 15 to 17 is implemented; or
the method according to any one of claims 18 to 20 is implemented.

**43.** A computer-readable storage medium, wherein the computer-readable storage medium stores a computer program or computer instructions, and when the computer program or the computer instructions are executed by a processor,

the method according to any one of claims 1 to 7 is implemented; or
the method according to any one of claims 8 to 14 is implemented.

**44.** A computer-readable storage medium, wherein the computer-readable storage medium stores a computer program or computer instructions, and when the computer program or the computer instructions are executed by a processor,

the method according to any one of claims 15 to 17 is implemented; or
the method according to any one of claims 18 to 20 is implemented.

**45.** A computer program product, comprising program instructions, wherein when the program instructions are run on a computer, the computer is enabled to: perform the method according to any one of claims 1 to 7; or
perform the method according to any one of claims 8 to 14.

**46.** A computer program product, comprising program instructions, wherein when the program instructions are run on a computer, the computer is enabled to: perform the method according to any one of claims 15 to 17; or

perform the method according to any one of claims 18 to 20.

47. A chip system, comprising at least one processor, a memory, and an interface circuit, wherein the memory, the interface circuit, and the at least one processor are interconnected through a line, the at least one memory stores instructions, and when the instructions are executed by the processor,

the method according to any one of claims 1 to 7 is implemented; or
the method according to any one of claims 8 to 14 is implemented.

48. A chip system, comprising at least one processor, a memory, and an interface circuit, wherein the memory, the interface circuit, and the at least one processor are interconnected through a line, the at least one memory stores instructions, and when the instructions are executed by the processor,

the method according to any one of claims 15 to 17 is implemented; or
the method according to any one of claims 18 to 20 is implemented.

FIG. 1

FIG. 2

FIG. 3

1301

1302

FIG. 4

FIG. 5

FIG. 6-1

CONT. FROM FIG. 6-1

~

Port 2          Port 3          Port 6          Port 7

Port 10         Port 11         Port 14         Port 15

FIG. 6-2

FIG. 7

FIG. 8(a)

FIG. 8(b)

Time-domain sequence
Port 0

Port 1

Port 6

Port 7

Port 12

Port 13

Port 18

Port 19

TO FIG. 9(a)-2

FIG. 9(a)-1

CONT. FROM FIG. 9(a)-1

Port 2  Port 3  Port 8  Port 9

Port 14  Port 15  Port 20  Port 21

TO FIG. 9(a)-3

FIG. 9(a)-2

CONT. FROM FIG. 9(a)-2

~

Port 4

Port 5

Port 10

Port 11

Port 16

Port 17

Port 22

Port 23

FIG. 9(a)-3

FIG. 9(b)

FIG. 10(a)

FIG. 10(b)

FIG. 11

(a)

(b)

FIG. 12

```
┌──────────┐                              ┌──────────┐
│ Network  │                              │ Terminal │
│ device   │                              │ device   │
└────┬─────┘                              └────┬─────┘
     │                                         │  ┌──────────────────────────┐
     │                                         │  │ S1401: Generate at least │
     │                                         │  │ one reference signal     │
     │                                         │  └──────────────────────────┘
     │        S1402: Transmit the at least     │
     │          one reference signal           │
     │◄────────────────────────────────────────┤
┌────┴─────────────────────────┐               │
│ S1403: Process the at least  │               │
│ one reference signal         │               │
└────┬─────────────────────────┘               │
     │                                          │
     │                                          │
```

FIG. 13

FIG. 14(a)

First group of reference signals

Second group of reference signals

Reference signal set

FIG. 14(b)

FIG. 14(c)

EP 4 459 920 A1

EP 4 459 920 A1

Reference
signal set

First group of reference signals

Second group of reference signals

FIG. 14(d)

FIG. 15(a)

FIG. 15(b)

FIG. 15(c)

n=7
n=6

Frequency
-domain
sequence

n=1
n=0

Time-domain sequence
Port 0

Port 1

Port 6

Port 7

First group of reference signals

Reference
signal set

n=7
n=6

n=1
n=0

Port 12

Port 13

Port 18

Port 19

Second group of reference signals

TO FIG. 16(a)-2

FIG. 16(a)-1

CONT. FROM FIG. 16(a)-1

First group of reference signals

Reference signal set

Second group of reference signals

TO FIG. 16(a)-3

FIG. 16(a)-2

CONT. FROM FIG. 16(a)-2

~

First group of reference signals

Reference signal set

Second group of reference signals

FIG. 16(a)-3

FIG. 16(b)-1

CONT. FROM FIG. 16(b)-1

First group of reference signals

Reference signal set

Second group of reference signals

TO FIG. 16(b)-3

FIG. 16(b)-2

CONT. FROM FIG. 16(b)-2

FIG. 16(b)-3

FIG. 17(a)

FIG. 17(b)

FIG. 17(c)

FIG. 17(d)

First group of reference signals

TO FIG. 18(a)-2

FIG. 18(a)-1

CONT. FROM FIG. 18(a)-1

~

First group of reference signals

Reference signal set

Second group of reference signals

~

TO FIG. 18(a)-3

FIG. 18(a)-2

CONT. FROM FIG. 18(a)-2

First group of reference signals

Reference signal set

Second group of reference signals

FIG. 18(a)-3

FIG. 18(b)

(a)

(b)

FIG. 19

Communication apparatus 2200

Generation unit 2201

Sending unit 2202

FIG. 20

Communication apparatus 2300

Receiving unit 2301

Processing unit 2302

FIG. 21

2400

2401

Processor
Instructions

2402

Memory
Instructions

2403

2404

Transceiver

Antenna

2405

2406

FIG. 22

FIG. 23

## INTERNATIONAL SEARCH REPORT

| | International application No. |
|---|---|
| | **PCT/CN2023/073894** |

**A. CLASSIFICATION OF SUBJECT MATTER**

H04L5/00(2006.01)i

According to International Patent Classification (IPC) or to both national classification and IPC

**B. FIELDS SEARCHED**

Minimum documentation searched (classification system followed by classification symbols)

IPC:H04L; H04W

Documentation searched other than minimum documentation to the extent that such documents are included in the fields searched

Electronic data base consulted during the international search (name of data base and, where practicable, search terms used)

CNABS, CNTXT, VEN, EPTXT, USTXT, WOTXT.CNKI, 3GPP: 参考信号, 相关, 互相关性, 干扰, 满足, 不同, 满足, 频域, 时域, 序列, 映射, 元素, 正交, DMRS, RS, frequency, time, NR, map, interrelate, interfere, set, sequence

**C. DOCUMENTS CONSIDERED TO BE RELEVANT**

| Category* | Citation of document, with indication, where appropriate, of the relevant passages | Relevant to claim No. |
|---|---|---|
| A | CN 111555848 A (RESEARCH INSTITUTE OF CHINA MOBILE COMMUNICATIONS CORPORATION et al.) 18 August 2020 (2020-08-18) description, paragraphs [0006]-[0294]) | 1-48 |
| A | CN 111713045 A (HUAWEI TECHNOLOGIES CO., LTD.) 25 September 2020 (2020-09-25) entire document | 1-48 |
| A | WO 2021195975 A1 (HUAWEI TECHNOLOGIES CO., LTD.) 07 October 2021 (2021-10-07) entire document | 1-48 |
| A | US 2018278395 A1 (INNOVATIVE TECH LAB CO., LTD.) 27 September 2018 (2018-09-27) entire document | 1-48 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 April 2023** | **23 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/073894**

| Patent document cited in search report | | | Publication date (day/month/year) | Patent family member(s) | | | Publication date (day/month/year) |
|---|---|---|---|---|---|---|---|
| CN | 111555848 | A | 18 August 2020 | None | | | |
| CN | 111713045 | A | 25 September 2020 | WO | 2019157737 | A1 | 22 August 2019 |
| | | | | EP | 3742636 | A1 | 25 November 2020 |
| | | | | EP | 3742636 | A4 | 17 March 2021 |
| | | | | WO | 2019157786 | A1 | 22 August 2019 |
| | | | | BR | 112020016484 | A2 | 15 December 2020 |
| | | | | US | 2020374075 | A1 | 26 November 2020 |
| | | | | US | 11539485 | B2 | 27 December 2022 |
| WO | 2021195975 | A1 | 07 October 2021 | US | 2023029215 | A1 | 26 January 2023 |
| | | | | EP | 4120778 | A1 | 18 January 2023 |
| US | 2018278395 | A1 | 27 September 2018 | US | 2021258119 | A1 | 19 August 2021 |
| | | | | WO | 2018174665 | A1 | 27 September 2018 |
| | | | | US | 10644849 | B2 | 05 May 2020 |
| | | | | EP | 3602945 | A1 | 05 February 2020 |
| | | | | EP | 3602945 | A4 | 30 December 2020 |
| | | | | US | 2020228273 | A1 | 16 July 2020 |
| | | | | US | 11018823 | B2 | 25 May 2021 |

Form PCT/ISA/210 (patent family annex) (July 2022)

**EP 4 459 920 A1**

## REFERENCES CITED IN THE DESCRIPTION

### Patent documents cited in the description

- CN 202210114621